(19) Europäisches Patentamt / European Patent Office / Office européen des brevets

(11) **EP 4 421 045 A1**

(12) **EUROPEAN PATENT APPLICATION**

(43) Date of publication:
**28.08.2024 Bulletin 2024/35**

(21) Application number: **24158982.9**

(22) Date of filing: **21.02.2024**

(51) International Patent Classification (IPC):
*C03C 3/068* $^{(2006.01)}$

(52) Cooperative Patent Classification (CPC):
**C03C 3/068; C03C 3/155**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **21.02.2023 US 202363447193 P**
**18.04.2023 NL 2034604**

(71) Applicant: **Corning Incorporated**
**Corning, New York 14831 (US)**

(72) Inventors:
• **Lehuede, Philippe**
  **CORNING, 14831 (US)**
• **Lepicard, Antoine Marie Joseph**
  **CORNING, 14831 (US)**
• **Priven, Alexander I**
  **CORNING, 14831 (US)**

(74) Representative: **Arnold & Siedsma**
**Bezuidenhoutseweg 57**
**2594 AC The Hague (NL)**

(54) **GLASSES WITH HIGH REFRACTIVE INDEXES CONTAINING BORON OXIDE**

(57) Glass compositions include one or more of tungsten oxide ($WO_3$), boron oxide ($B_2O_3$), lanthanum oxide ($La_2O_3$), niobia ($Nb_2O_5$), titania ($TiO_2$) and zirconia ($ZrO_2$) as essential components and may optionally include yttria ($Y_2O_3$), barium oxide (BaO), calcium oxide (CaO), antimony oxide ($Sb_2O_3$), $P_2O_5$ (phosphorus oxide), PbO (lead oxide), $GeO_2$ (germania) and other components. The glass compositions feature high refractive index and high transmittance in the blue portion of the electromagnetic spectrum.

FIG. 1

EP 4 421 045 A1

**Description**

**FIELD**

The present disclosure generally relates to borate and silicoborate glasses having a high refractive index and low density.

**BACKGROUND**

Glass is used in a variety of optical devices, examples of which include augmented reality devices, virtual reality devices, mixed reality devices, eye wear, etc. Desirable properties for this type of glass often include a high refractive index and a low density. Additional desirable properties may include high transmission in the visible and near-ultraviolet (near-UV) range of the electromagnetic spectrum and/or low optical dispersion. It can be challenging to find glasses having the desired combination of these properties and which can be formed from compositions having good glass-forming ability. For example, generally speaking, as the refractive index of a glass increases, the density also tends to increase. Species such as $TiO_2$ and $Nb_2O_5$ are often added to increase the refractive index of a glass without increasing the density of the glass. However, these materials often absorb blue and UV light, which can undesirably decrease the transmittance of light in this region of the spectrum by the glass. Often, attempts to increase the refractive index of a glass while maintaining a low density, and without decreasing transmittance in the blue and UV region of the spectrum, can result in a decrease in the glass-forming ability of the material. For example, crystallization and/or liquid-liquid phase separation can occur during cooling of the glass melt at cooling rates that are generally acceptable in the industry. Typically, the decrease in glass-forming ability appears as the amount of certain species, such as $ZrOz$, $Y_2O_3$, $Sc_2O_3$, $BeO$, etc. increases.

Low density, high refractive index glasses often belong to one of two types of chemical systems, based on the glass formers used: (a) silicoborate or borosilicate glasses in which $SiO_2$ and/or $B_2O_3$ are used as the main glass formers and (b) phosphate glasses in which $P_2O_5$ is used as a main glass former. Glasses which rely on other oxides as main glass formers, such as $GeO_2$, $TeO_2$, $Bi_2O_3$, and $V_2O_5$, can be challenging to use due to cost, glass-forming ability, optical properties, and/or production requirements.

Phosphate glasses can be characterized by a high refractive index and low density, however, phosphate glasses can be challenging to produce due to volatilization of $P_2O_3$ from the melts and/or risks of platinum incompatibility. In addition, phosphate glasses are often highly colored and may require an extra bleaching step to provide a glass having the desired transmittance characteristic. Furthermore, phosphate glasses exhibiting a high refractive index also tend to have an increase in optical dispersion.

Silicoborate and borate glasses are typically easier to produce and in some cases can exhibit a high transmittance without a bleaching step. However, silicoborate and borosilicate glasses typically exhibit an increase in density at increasing refractive indices, compared to phosphate glasses.

In view of these considerations, there is a need for borate and silicoborate glasses having a high refractive index, a low density, and a high transmittance to blue light.

**SUMMARY**

According to an embodiment of the present disclosure, a glass comprises a plurality of components, the glass having a composition of the components comprising greater than or equal to 0.3 mol.% and less than or equal to 30.0 mol.% $Nb_2O_5$, greater than or equal to 0.3 mol.% and less than or equal to 15.0 mol.% $ZrO_2$, greater than or equal to 0.0 mol.% and less than or equal to 28.0 mol.% $TiO_2$, greater than or equal to 0.0 mol.% and less than or equal to 28.0 mol.% $La_2O_3$, greater than or equal to 0.0 mol.% and less than or equal to 10.0 mol.% $P_2O_5$, greater than or equal to 0.0 mol.% and less than or equal to 10.0 mol.% $PbO$, greater than or equal to 0.0 mol.% and less than or equal to 10.0 mol.% $GeOz$, greater than or equal to 0 mol.% and less than or equal to 0.12 mol.% $Bi_2O_3$, greater than or equal to 0.0 mol.% and less than or equal to 30.0 mol.% $RE_mO_n$, a sum of $B_2O_3 + SiOz$ is greater than or equal to 5.0 mol.% and less than or equal to 35.0 mol.% and may optionally contain one or more components selected from $CaO$, $BaO$, $ZnO$, $Na_2O$, $WO_3$, $Al_2O_3$, $Li_2O$, $TeO_2$, $K_2O$, $SrO$ and $MgO$, wherein the composition of the components satisfies the condition: $0 \leq min(RO, RE_mO_n, TiO_2) \ [mol.\%] \leq 10$, and the glass satisfies the conditions: $2.092 \leq P_n \leq 2.25$ and $P_v < 28$, where $P_v$ is a dispersion parameter, calculated from the glass composition in terms of mol.% of the components according to the Formula (XXI):

$$P_v = 33.17 + 0.081348 * La_2O_3 - 0.41202 * TiO_2 + 0.20789 * B_2O_3 + 0.17549 * SiO_2 +$$

$$0.078439 * ZrO_2 - 0.58620 * Nb_2O_5 + 0.092226 * CaO + 0.076225 * BaO + 0.064344 *$$

$$Y_2O_3 - 0.14136 * ZnO + 0.16651 * Gd_2O_3 + 0.081754 * Na_2O - 0.12348 * WO_3 + 0.21238$$

$$* Al_2O_3 + 0.051232 * Li_2O - 0.38171 * PbO - 0.67510 * Bi_2O_3 + 0.027632 * GeO_2 -$$

$$0.17926 * TeO_2 + 0.17466 * Er_2O_3 + 0.25172 * Yb_2O_3 + 0.15621 * K_2O + 0.066001 * SrO$$

$$+ 0.15965 * MgO,$$

(XXI)

$P_n$ is a refractive index parameter, calculated from the glass composition in terms of mol.% of the components according to the Formula (XXIII):

$$P_n = 1.863 + 0.0054878 * La_2O_3 + 0.002915 * TiO_2 - 0.0041892 * B_2O_3 - 0.0036169 *$$

$$SiO_2 + 0.0023451 * ZrO_2 + 0.0062709 * Nb_2O_5 + 0.0034815 * Y_2O_3 + 0.00018842 * ZnO$$

$$+ 0.0062484 * Gd_2O_3 - 0.0028025 * Na_2O + 0.002711 * WO_3 - 0.0041 * Al_2O_3 -$$

$$0.0014274 * Li_2O + 0.0053973 * PbO + 0.011116 * Bi_2O_3 - 0.0019963 * GeO_2 +$$

$$0.00060157 * TeO_2 + 0.0056358 * Er_2O_3 + 0.0045709 * Yb_2O_3 - 0.0044944 * K_2O -$$

$$0.0013229 * MgO,$$

(XXIII)

where $RE_mO_n$ is a total sum of rare earth metal oxides, $min(RO, RE_mO_n, TiO_2)$ refers to the smallest of the concentrations (in mol%) of RO, $RE_mO_n$, and TiOz, and an asterisk (*) means multiplication.

According to another embodiment of the present disclosure, a glass comprises a plurality of components, the glass having a composition of the components comprising greater than or equal to 10.0 mol.% and less than or equal to 30.0 mol.% $B_2O_3$, greater than or equal to 0.3 mol.% and less than or equal to 28.5 mol.% $TiO_2$, greater than or equal to 0.0 mol.% and less than or equal to 30.0 mol.% $SiO_2$, greater than or equal to 0.0 mol.% and less than or equal to 30.0 mol.% $P_2O_5$, greater than or equal to 0.0 mol.% and less than or equal to 10.0 mol.% PbO, greater than or equal to 0.0E+00 at.% and less than or equal to 5.0E-03 at.% Cu + Co, greater than or equal to 0.0 mol.% and less than or equal to 28.5 mol.% $RE_mO_n$, a sum of $Nb_2O_5 + La_2O_3 + Gd_2O_3 + Y_2O_3$ greater than or equal to 0.0 mol.% and less than or equal to 44.5 mol.%, a sum of $R_2O + RO$ greater than or equal to 0.0 mol.% and less than or equal to 25.0 mol.%, a sum of V + Fe + Cr + Ni greater than or equal to 0.0 at.% and less than or equal to 1.0 at.% and may optionally contain one or more components selected from $ZrO_2$, $WO_3$, $Al_2O_3$, $Bi_2O_3$, $GeO_2$ and $TeO_2$, wherein the glass satisfies the conditions: $P_n > 1.8$ and $P_{Q420} - (31.1 - 14.1 * P_n) > 0.000$, where $P_n$ is a refractive index parameter, calculated from the glass composition in terms of mol.% of the components according to the Formula (XXIII):

$$P_n = 1.863 + 0.0054878 * La_2O_3 + 0.002915 * TiO_2 - 0.0041892 * B_2O_3 - 0.0036169 *$$

$$SiO_2 + 0.0023451 * ZrO_2 + 0.0062709 * Nb_2O_5 + 0.0034815 * Y_2O_3 + 0.00018842 * ZnO$$

$$+ 0.0062484 * Gd_2O_3 - 0.0028025 * Na_2O + 0.002711 * WO_3 - 0.0041 * Al_2O_3 -$$

$$0.0014274 * Li_2O + 0.0053973 * PbO + 0.011116 * Bi_2O_3 - 0.0019963 * GeO_2 +$$

$$0.00060157 * TeO_2 + 0.0056358 * Er_2O_3 + 0.0045709 * Yb_2O_3 - 0.0044944 * K_2O -$$

$$0.0013229 * MgO,$$

(XXIII)

$P_{Q420}$ is a transmittance evaluation parameter, calculated from the glass composition in terms of mol.% of the components according to the Formula (XXII):

$$P_{Q420} = -\ln(\exp(-(2.153 + 0.022544 * La_2O_3 - 0.051067 * TiO_2 + 0.020256 * B_2O_3 +$$

$$0.015419 * SiO_2 + 0.023223 * CaO + 0.030580 * BaO - 0.027830 * Y_2O_3 - 0.018973 *$$

$$ZnO - 0.050965 * Gd_2O_3 + 0.010653 * Na_2O - 0.036583 * WO_3 - 0.019948 * Al_2O_3 +$$

$$0.014393 * Li_2O + 0.071064 * PbO - 0.33385 * Bi_2O_3 - 0.099409 * TeO_2 + 0.10072 *$$

$$Er_2O_3 + 0.047677 * Yb_2O_3 + 0.0098813 * K_2O + 0.0084835 * SrO + 0.029429 * MgO)) +$$

$$7 * \max(0, Sb_2O_3 - 0.015 * Alk_2O) + 0.4 * Bi_2O_3),$$

(XXII)

where $RE_mO_n$ is a total sum of rare earth metal oxides, $R_2O$ is a total sum of monovalent metal oxides, $Alk_2O$ is a sum of alkali metal oxides, $RO$ is a total sum of divalent metal oxides, $\max(0, Sb_2O_3 - 0.015 * Alk_2O)$ refers to the greatest of zero and the difference $(Sb_2O_3 - 0.015 * Alk_2O)$, "exp" refers to the exponential function, "ln" refers to natural logarithm, and an asterisk (*) means multiplication.

These and other aspects, objects, and features of the present disclosure will be understood and appreciated by those skilled in the art upon studying the following specification, claims, and appended drawings.

**BRIEF DESCRIPTION OF THE DRAWINGS**

FIG. 1 is a plot demonstrating a correlation between a parameter $n_{365,est}$ for estimating refractive index at 365 nm and measured values of refractive index at 365 nm.

FIG. 2a is a plot showing total transmittance (expressed as a percent) in the visible and UV range of some Exemplary Glasses prepared under different processing conditions .

FIG. 2b is a plot that shows the dependence of $-\ln(k_\lambda)$ on reciprocal wavelength.

FIG. 2c is an enlargement of the plot shown in FIG. 2b in the UV range.

FIG. 3 is a plot showing a correlation between internal transmittance at a wavelength of 460 nm and the blue transmittance attribute $Q_{420}$.

FIG. 4 is a plot illustrating the relationship between the Abbe number $v_d$ and the dispersion parameter $P_v$ calculated by formula (XXI) for some Comparative Glasses and some Exemplary Glasses according to an embodiment of the present disclosure.

FIG. 5 is a plot illustrating the relationship between the blue transmittance attribute $Q_{420}$ and the transmittance evaluation parameter $P_{Q420}$ calculated by formula (XXII) for some Comparative Glasses and some Exemplary Glasses according to an embodiment of the present disclosure.

FIG. 6 is a plot illustrating the relationship between the refractive index $n_d$ and the refractive index parameter $P_n$ calculated by formula (XXIII) for some Comparative Glasses and some Exemplary Glasses according to an embodiment of the present disclosure.

FIG. 7 is a plot illustrating the relationship between the refractive index parameter $P_n$ and the transmittance evaluation parameter $P_{Q420}$ for some Comparative Glasses and some Exemplary Glasses according to an embodiment of the present disclosure.

FIG. 8 is a plot illustrating the relationship between the refractive index at 587.56 nm $n_d$ and the blue transmittance attribute $Q_{420}$ for some Comparative Glasses and some Exemplary Glasses according to an embodiment of the present disclosure.

**DETAILED DESCRIPTION**

In the following detailed description, for purposes of explanation and not limitation, example embodiments disclosing specific details are set forth to provide a thorough understanding of various principles of the present disclosure. However, it will be apparent to one having ordinary skill in the art, having had the benefit of the present disclosure, that the present disclosure may be practiced in other embodiments that depart from the specific details disclosed herein. Moreover, descriptions of well-known devices, methods and materials may be omitted so as not to obscure the description of various principles of the present disclosure. Finally, wherever applicable, like reference numerals refer to like elements.

Unless otherwise expressly stated, it is in no way intended that any method set forth herein be construed as requiring that its steps be performed in a specific order. Accordingly, where a method claim does not actually recite an order to be followed by its steps, or it is not otherwise specifically stated in the claims or descriptions that the steps are to be limited to a specific order, it is in no way intended that an order be inferred, in any respect. This holds for any possible non-express basis for interpretation, including, without limitation, matters of logic with respect to arrangement of steps or operational flow; plain meaning derived from grammatical organization or punctuation; the number or type of embodiments described in the specification.

As used herein, the term "and/or," when used in a list of two or more items, means that any one of the listed items can be employed by itself, or any combination of two or more of the listed items can be employed. For example, if a composition is described as containing components A, B, and/or C, the composition can contain A alone; B alone; C alone; A and B in combination; A and C in combination; B and C in combination; or A, B, and C in combination.

Modifications of the disclosure will occur to those skilled in the art and to those who make or use the disclosure. Therefore, it is understood that the embodiments shown in the drawings and described above are merely for illustrative purposes and not intended to limit the scope of the disclosure, which is defined by the following claims, as interpreted according to the principles of patent law, including the doctrine of equivalents.

As used herein, the term "about" means that amounts, sizes, formulations, parameters, and other quantities and characteristics are not and need not be exact, but may be approximate and/or larger or smaller, as desired, reflecting tolerances, conversion factors, rounding off, measurement error and the like, and other factors known to those skilled in the art. When the term "about" is used in describing a value or an end-point of a range, the disclosure should be understood to include the specific value or end-point referred to. Whether or not a numerical value or end-point of a range in the specification recites "about," the numerical value or end-point of a range is intended to include two embodiments: one modified by "about," and one not modified by "about." It will be further understood that the end-points of each of the ranges are significant both in relation to the other end-point, and independently of the other end-point.

The term "component" refers to a material or compound included in a batch composition from which a glass is formed. Components include oxides, including but not limited to those expressed in Formulas (XXI), (XXII), and (XXIII), and the claims. Representative components include $B_2O_3$, $P_2O_5$, $Al_2O_3$, CuO, $Cu_2O$, RO, $R_2O$, $SnO_2$, $MnO_2$, $RE_mO_n$, $SiO_2$, $Ta_2O_5$, ZnO, $WO_3$, $Nb_2O_5$, $TiO_2$, $ZrO_2$, $Bi_2O_3$, $TeO_2$, etc. Other representative components include halogens (e.g. F, Br, Cl). Whenever a component is included as a term in a mathematical expression or formula, it is understood that the component refers to the amount of the component in units of mol.% in the batch composition of the glass. For example, the expression "$B_2O_3 + P_2O_5$" refers to the sum of the amount of $B_2O_3$ in units of mol.% and the amount of $P_2O_5$ in units of mol.% in the batch composition of the glass. A mathematical expression or formula is any expression or formula that includes a mathematical operator such as "+", "-", "*", "/", "min", or "max".

Unless otherwise specified, the amount or content of a component in the batch composition of a glass is expressed herein in units of mol.% (mole percent).

The term "formed from" can mean one or more of comprises, consists essentially of, or consists of. For example, a component that is formed from a particular material can comprise the particular material, consist essentially of the particular material, or consist of the particular material.

The terms "free" and "substantially free" are used interchangeably herein to refer to an amount and/or an absence of a particular component in a glass composition that is not intentionally added to the glass composition. It is understood that the glass composition may contain traces of a particular constituent component as a contaminant or a tramp in an amount of less than 0.10 mol.%.

As used herein, the term "tramp", when used to describe a particular constituent component in a glass composition, refers to a constituent component that is not intentionally added to the glass composition and is present in an amount of less than 0.10 mol.%. Tramp components may be unintentionally present in the glass composition as an impurity originating from another constituent component and/or through migration of the tramp component into the composition during processing of the glass composition.

Unless otherwise specified, the term "glass" is used to refer to a glass made from a glass composition disclosed herein.

The symbol " * " means multiplication when used in any formula herein.

The term "ln", when used in a mathematical expression, means natural logarithm.

Temperature is expressed herein in units of °C (degrees Celsius).

Density is expressed herein in units of $g/cm^3$.

The term "glass former" is used herein to refer to a component that, being solely present in the glass composition (i.e., without other components, except for tramps), is able to form a glass when cooling the melt at a rate of not greater than 300 °C/min.

The term "modifier", as used herein, refers to the oxides of monovalent or divalent metals, i.e., $R_2O$ or RO, where "R" stands for a cation. Modifiers can be added to a glass composition to change the atomic structure of the melt and the resulting glass. In some embodiments, the modifier may change the coordination numbers of cations present in the glass formers (e.g., boron in $B_2O_3$), which may result in forming a more polymerized atomic network and, as a result, may provide better glass formation.

As used herein, the term "RO" refers to a total content of divalent metal oxides, the term "$R_2O$" refers to a total content of monovalent metal oxides, and the term "$Alk_2O$" refers to a total content of alkali metal oxides. The term $R_2O$

encompasses alkali metal oxides (Alk$_2$O), in addition to other monovalent metal oxides, such as Ag$_2$O, Tl$_2$O, and Hg$_2$O, for example. As discussed below, in the present disclosure, a rare earth metal oxide is referred to herein by its normalized formula (RE$_2$O$_3$) in which the rare earth metal RE has the redox state "+3," and thus rare earth metal oxides are not encompassed by the term RO.

As used herein, the term "rare earth metals" refers to the metals listed in the Lanthanide Series of the IUPAC Periodic Table, plus yttrium and scandium. As used herein, the term "rare earth metal oxides," is used to refer to the oxides of rare earth metals in different redox states, such as "+3" for lanthanum in La$_2$O$_3$, "+4" for cerium in CeO$_2$, "+2" for europium in EuO, etc. In general, the redox states of rare earth metals in oxide glasses may vary and, in particular, the redox state may change during melting, based on the batch composition and/or the redox conditions in the furnace where the glass is melted and/or heat-treated (e.g., annealed). Unless otherwise specified, a rare earth metal oxide is referred to herein by its normalized formula in which the rare earth metal has the redox state "+3." Accordingly, in the case in which a rare earth metal having a redox state other than "+3" is added to the glass composition batch, the glass compositions are recalculated by adding or removing some oxygen to maintain the stoichiometry. For example, when CeO$_2$ (with cerium in redox state "+4") is used as a batch component, the resulting as-batched composition is recalculated assuming that two moles of CeO$_2$ is equivalent to one mole of Ce$_2$O$_3$, and the resulting as-batched composition is expressed in terms of Ce$_2$O$_3$. As used herein, the term "RE$_m$O$_n$" is used to refer to the total content of rare earth metal oxides in all redox states present, and the term "RE$_2$O$_3$" is used to refer to the total content of rare earth metal oxides in the "+3" redox state, also specified as "trivalent equivalent".

Unless otherwise specified, all compositions are expressed in terms of as-batched mole percent (mol%). As will be understood by those having ordinary skill in the art, various melt constituents (e.g., fluorine, alkali metals, boron, etc.) may be subject to different levels of volatilization (e.g., as a function of vapor pressure, melt time and/or melt temperature) during melting of the constituents. As such, the term "about," in relation to such constituents, is intended to encompass values within about 0.2 mol% when measuring final articles as compared to the as-batched compositions provided herein. With the forgoing in mind, substantial compositional equivalence between final articles and as-batched compositions is expected.

In the case when fluorine or other halogen (chlorine, bromine, and/or iodine) is added to or is present in an oxide glass, the molecular representation of the resulting glass composition may be expressed in different ways. In the present disclosure, the content of fluorine as a single term, when present, is expressed in terms of atomic percent (at.%), which is determined based on the fraction of fluorine in a total sum of all atoms in a glass composition multiplied by a factor of 100.

In the present disclosure, the following method of representation of fluorine-containing compositions and concentration ranges is used. The concentration limits for all oxides (e.g. SiO$_z$, B$_2$O$_3$, NaZO, etc.) are presented under the assumption that the respective cations (such as, for example, silicon [Si$_4$$^+$], boron [B$_3$$^+$], sodium [Na$^+$], etc.) are initially presented in the form of the corresponding oxides. When fluorine is present, for the purposes of calculating the concentration of components of the composition, some part of the oxygen in the oxide is equivalently replaced with fluorine (i.e. one atom of oxygen is replaced with two atoms of fluorine). The said fluorine is assumed to be present in the form of silicon fluoride (SiF$_4$); accordingly, the total sum of all oxides plus SiF$_4$ is assumed to be 100 mole percent in all compositions.

The glass transition temperature (T$_g$) is measured by differential scanning calorimeter (DSC) at the heating rate of 10 K/min after cooling from the melt to room temperature in air.

The measured density values for the glasses reported herein were measured at room temperature in units of g/cm$^3$ by the Archimedes method in water with an error of 0.001 g/cm$^3$. As used herein, density measurements at room temperature (specified as d$_{RT}$) are indicated as being measured at 20 °C or 25 °C, and encompass measurements obtained at temperatures that may range from 20 °C to 25 °C. It is understood that room temperature may vary between about 20 °C to about 25 °C, however, for the purposes of the present disclosure, the variation in density within the temperature range of 20 °C to 25 °C is expected to be less than the error of 0.001 g/cm$^3$, and thus is not expected to impact the room temperature density measurements reported herein.

As used herein, good glass forming ability refers to a resistance of the melt to devitrification as the material cools. Glass forming ability can be measured by determining the critical cooling rate of the melt. The terms "critical cooling rate" or "v$_{cr}$" are used herein to refer to the minimum cooling rate at which a melt of a given composition forms a glass free of crystals visible under an optical microscope under magnification of 500x. The critical cooling rate can be used to measure the glass-forming ability of a composition, i.e., the ability of the melt of a given batch composition to form glass when cooling. Generally speaking, the lower the critical cooling rate, the better the glass-forming ability of the batch composition.

The term "liquidus temperature" (T$_{liq}$) is used herein to refer to a temperature above which the glass composition is completely liquid with no crystallization of constituent components of the glass. The liquidus temperature values reported herein were obtained by measuring samples using either DSC or by isothermal hold of samples wrapped in platinum foil. For samples measured using DSC, powdered samples were heated at 10 K/min to 1250°C. The end of the endothermal event corresponding to the melting of crystals was taken as the liquidus temperature. For the second technique (isothermal hold), a glass block (about 1 cm$^3$) was wrapped in platinum foil, to avoid volatilization, and placed in a furnace at a given temperature for 17 hours. The glass block was then observed under an optical microscope to check for crystals.

The refractive index values reported herein were measured at room temperature, unless otherwise specified. The refractive index values for a glass sample were measured using a Metricon Model 2010 prism coupler refractometer with an error of about ± 0.0002. Using the Metricon, the refractive index of a glass sample was measured at multiple wavelengths, including about 406 nm, 473 nm, 532 nm, 633 nm, 828 nm, and 1064 nm. The measured dependence characterizes the dispersion and was then fitted with a Cauchy's law equation or Sellmeier equation to allow for calculation of the refractive index of the sample at a given wavelength of interest between the measured wavelengths. The term "refractive index $n_d$" or "$n_d$" is used herein to refer to a refractive index calculated as described above at a wavelength of 587.56 nm, which corresponds to the helium d-line wavelength. The term "refractive index $n_C$" is used herein to refer to a refractive index calculated as described above at a wavelength of 656.3 nm. The term "refractive index $n_F$" is used herein to refer to a refractive index calculated as described above at a wavelength of 486.1 nm. The term "refractive index $n_g$" is used herein to refer to a refractive index calculated as described above at a wavelength of 435.8 nm.. The term "refractive index $n_{632.8}$" or "$n_{632.8}$" is used herein to refer to a refractive index calculated as described above at a wavelength of 632.80 nm. The term "refractive index $n_{365}$" or "$n_{365}$" is used herein to refer to a refractive index calculated as described above at a wavelength of 365.00 nm.

As used herein, the terms "high refractive index" or "high index" refer to a refractive index value $n_d$ of a glass that is greater than or equal to at least 1.90, unless otherwise indicated. Where indicated, embodiments of the terms "high refractive index" or "high index" refer to a refractive index value of a glass that is greater than or equal to at least 1.95, greater than or equal to 2.00, or greater than or equal to 2.05. The terms "low refractive index" or "low index" refer to a refractive index value $n_d$ of a glass that is less than 1.90.

The terms "dispersion" and "optical dispersion" are used interchangeably to refer to a difference or ratio of the refractive indices of a glass sample at predetermined wavelengths. One numerical measure of optical dispersion reported herein is the Abbe number, which can be calculated by the formula: $v_x = (n_x - 1)/(n_F - n_C)$, where "x" in the present disclosure stands for one of the commonly used wavelengths (for example, 587.56 nm [d-line] for $v_d$ or 589.3 nm [D-line] for v), $n_x$ is the refractive index at this wavelength (for example, $n_d$ for $v_d$ and $n_D$ for $v_D$), and $n_F$ and $n_C$ are refractive indices at the wavelengths 486.1 nm (F-line) and 656.3 nm (C-line), respectively. The numerical values of $v_d$ and $v_D$ differ very slightly, mostly within ±0.1% to ±0.2%. As reported herein, the dispersion of a glass sample is represented by the Abbe number ($v_d$), which characterizes the relationship between the refractive indices of the sample at three different wavelengths according to the following formula: $v_d = (n_d-1)/(n_F-n_C)$, where $n_d$ is the calculated refractive index at 587.56 nm (d-line), $n_F$ is the calculated refractive index at 486.1 nm, and nc is the calculated refractive index at 656.3 nm. A higher Abbe number corresponds to a lower optical dispersion.

As used herein, unless otherwise specified, the term "internal transmittance" or $\tau_{int}$ is used to refer to the transmittance through a glass sample that is corrected for Fresnel losses. The term "total transmittance" or $\tau_{total}$ is used to refer to transmittance values for which Fresnel losses are not corrected. The terms "$\tau_{int,d}$" and "$\tau_{total,d}$" are used to refer to the internal transmittance and total transmittance, respectively, of samples having a thickness d, where d is expressed in units of mm and corresponds to the path length of the optical signal through the sample. The terms "$\tau_{int,d,\lambda}$" and "$\tau_{total,d,\lambda}$" are used to refer to the internal transmittance $\tau_{int,d}$ and total transmittance $\tau_{total,d}$, respectively, at wavelength $\lambda$, where the wavelength $\lambda$ is expressed in units of nm. Unless otherwise specified, $\tau_{int}$, $\tau_{total}$, $\tau_{int,d}$, $\tau_{total,d}$, $\tau_{int,d,\lambda}$, and $\tau_{total,d,\lambda}$ are expressed on an absolute basis and not a percentage basis. Total transmittance of the glass samples were measured on 1 to 10 mm thick samples with a Cary 5000 Spectrometer at wavelengths of from 250 nm to 800 nm, at a resolution of 1 nm, and using an integrating sphere. The internal transmittance was calculated between 310 nm and 800 nm using the measured refractive index and the measured total transmittance as discussed more fully below. For convenience, internal transmittance and total transmittance may be reported herein on a percentage basis with a range of values extending from 0% to 100%. Absolute transmittance, also referred to herein as transmittance on an absolute basis, is obtained from percent transmittance by dividing by 100.

The light absorption coefficient $k_\lambda$ at a particular wavelength $\lambda$ is used herein to characterize a decrease in the intensity of light of wavelength $\lambda$ due to absorption when it passes through a sample of glass having a thickness of 10 mm. For a sample of arbitrary thickness d, the light absorption coefficient $k_\lambda$ can be determined from the following form of the Beer-Lambert law:

$$I = I_0 * \exp(-k_\lambda * (d/10)), \quad (I)$$

where I is the intensity of light transmitted through the glass sample, $I_0$ the intensity of incident light, d the thickness of the sample expressed in mm, "10" is a conversion factor from mm to cm and has dimensions mm/cm, and "exp" means the exponential function. The light absorption coefficient k has dimensions of $cm^{-1}$.

The ratio $I/I_0$ in the formula (I) refers to the internal transmittance $\tau_{int,d,\lambda}$ at the wavelength $\lambda$ on an absolute basis for a sample having thickness d. Accordingly, the light absorption coefficient $k_\lambda$ can be expressed in terms of the internal transmittance $\tau_{int,d,\lambda}$ at the wavelength $\lambda$ as follows:

$$k_\lambda = -\ln(\tau_{int,d,\lambda} / (d/10)), \quad (II)$$

where "ln" means natural logarithm. For a sample with a thickness of 10 mm, the value of $k_\lambda$ can be calculated from its internal transmittance $\tau_{int,10,\lambda}$ as follows:

$$k_\lambda = -\ln(\tau_{int,10,\lambda}). \quad (III)$$

For a given material, such as optical glass, the light absorption coefficient $k_\lambda$ is a function of wavelength $\lambda$. In principle, this dependence may have a complicated mathematical form. For purposes of the present disclosure, however, it has been empirically determined that the wavelength dependence of $-\ln(k_\lambda)$ closely approximates a linear mathematical form as a function of reciprocal wavelength over a selected range of UV wavelengths. In particular, over a selected range of UV wavelengths, the wavelength dependence of $-\ln(k_\lambda)$ was found to be closely approximated with the quantity Q calculated as a function of the wavelength $\lambda$ by formula (IV):

$$-\ln(k_\lambda) \cong Q_\lambda = A_{UV} + B_{UV} * (1000 / [\lambda, nm]), \quad (IV)$$

where $A_{UV}$ and $B_{UV}$ are empirical coefficients that can be evaluated from a linear best fit of the measured or calculated wavelength dependence of $-\ln(k_\lambda)$ over a wavelength range of linearity in the UV, and $Q_\lambda$ refers to the exact result of calculation by the formula (IV). Specific examples of determining the values of the coefficients Auv and Buv for selected Exemplary Glasses of the present disclosure are described below.

The value of $\ln(k_\lambda)$ decreases as the internal transmittance increases. For the sake of convenience of discussion in the present disclosure, reference is made to $-\ln(k_\lambda)$, a quantity that varies in the same direction as the light transmittance of material, i. e.- $\ln(k_\lambda)$ increases when the internal transmittance increases. In the range of wavelengths and thickness of interest for Exemplary Glasses of the present disclosure, including UV and visible ranges, the value of $\ln(k_\lambda)$ typically varies from about -5 to about +5.

Glass composition may include boron oxide ($B_2O_3$). According to some embodiments of the present disclosure, boron oxide may play a role of a glass former. As a glass former, $B_2O_3$ may increase the liquidus viscosity and, therefore, inhibit crystallization. However, adding $B_2O_3$ to a glass composition may cause liquid-liquid phase separation, which may cause devitrification and/or a reduction in the visible transmittance of the glass. Also, adding $B_2O_3$ to the high-index glasses reduces the refractive index. Accordingly, the amount of boron oxide is limited. In embodiments, the glass composition may contain boron oxide ($B_2O_3$) in an amount from greater than or equal to 0.0 mol.% to less than or equal to 35.0 mol.% and all ranges and sub-ranges between the foregoing values. In some embodiments, the glass composition may contain $B_2O_3$ in an amount greater than or equal to 0.0 mol.%, greater than or equal to 5.0 mol.%, greater than or equal to 10.0 mol.%, greater than or equal to 15.0 mol.%, greater than or equal to 15.5 mol.%, greater than or equal to 16.75 mol.%, greater than or equal to 18.0 mol.%, greater than or equal to 20.0 mol.%, greater than or equal to 25.0 mol.%, or greater than or equal to 30.0 mol.%. In some other embodiments, the glass composition may contain $B_2O_3$ in an amount less than or equal to 35.0 mol.%, less than or equal to 30.0 mol.%, less than or equal to 25.0 mol.%, less than or equal to 24.0 mol.%, less than or equal to 23.0 mol.%, less than or equal to 21.0 mol.%, less than or equal to 20.0 mol.%, or less than or equal to 5.0 mol.%. In some more embodiments, the glass composition may contain $B_2O_3$ in an amount greater than or equal to 10.0 mol.% and less than or equal to 30.0 mol.%, greater than or equal to 15.0 mol.% and less than or equal to 25.0 mol.%, greater than or equal to 15.5 mol.% and less than or equal to 24.0 mol.%, greater than or equal to 16.75 mol.% and less than or equal to 23.0 mol.%, greater than or equal to 18.18 mol.% and less than or equal to 21.0 mol.%, greater than or equal to 0.0 mol.% and less than or equal to 35.0 mol.%, greater than or equal to 5.0 mol.% and less than or equal to 20.0 mol.%, greater than or equal to 10.0 mol.% and less than or equal to 20.0 mol.%, greater than or equal to 15.5 mol.% and less than or equal to 20.0 mol.%, greater than or equal to 18.0 mol.% and less than or equal to 35.0 mol.%, greater than or equal to 18.0 mol.% and less than or equal to 20.0 mol.%.

Glass composition may include silica ($SiO_2$). Silica may play a role of a glass former. Silica, as well as $B_2O_3$, may help to increase the liquidus viscosity (viscosity at the liquidus temperature) and, therefore, inhibit crystallization. However, adding $SiO_2$ to a glass composition may cause liquid-liquid phase separation, which may cause devitrification and/or reducing the transmittance of the glass. Also, $SiO_2$ is a low refractive index component and makes it difficult to achieve a glass with high index. Accordingly, the content of $SiO_2$ is limited, or glasses may be substantially free of $SiO_2$. In embodiments, the glass composition may contain silica ($SiO_2$) in an amount from greater than or equal to 0.0 mol.% to less than or equal to 35.0 mol.% and all ranges and sub-ranges between the foregoing values. In some embodiments, the glass composition may contain $SiO_2$ in an amount greater than or equal to 0.0 mol.%, greater than or equal to 5.0 mol.%, greater than or equal to 20.0 mol.%, greater than or equal to 25.0 mol.%, or greater than or equal to 30.0 mol.%. In some other embodiments, the glass composition may contain $SiO_2$ in an amount less than or equal to 35.0 mol.%, less than or equal to 30.0 mol.%, less than or equal to 25.0 mol.%, less than or equal to 20.0 mol.%, or less than or equal to 5.0 mol.%. In some more embodiments, the glass composition may contain $SiO_z$ in an amount greater than or equal to 0.0 mol.% and less than or equal to 30.0 mol.%, greater than or equal to 0.0 mol.% and less than or equal to 20.0 mol.%, greater than or equal to 0.0 mol.% and less than or equal to 35.0 mol.%, greater than or equal to 0.0 mol.% and less than or equal to 5.0 mol.%, greater than or equal to 5.0 mol.% and less than or equal to 35.0 mol.%, greater than or equal to 5.0 mol.% and less than or equal to 20.0 mol.%, greater than or equal to 20.0 mol.% and less than or equal to 35.0 mol.%, greater than or equal to 20.0 mol.% and less than or equal to 25.0 mol.%, greater than or equal to 25.0 mol.% and less than or equal to 35.0 mol.%, greater than or equal to 25.0 mol.% and less than or equal to 30.0 mol.%.

Glass composition may include phosphorus oxide ($P_2O_5$) as an additional glass former. Greater amounts of $P_2O_5$ may increase the melt viscosity at temperatures, which may inhibit crystallization from the melt when cooling and, therefore, may improve the glass-forming ability of the melt (i.e. lowers the critical cooling rate of the melt). However, $P_2O_5$ significantly decreases the refractive index. Also, in some cases $P_2O_5$ may stimulate liquid-liquid phase separation, which may cause crystallization of glass forming melts when cooling and/or loss of transmittance. Accordingly, the content of $P_zO_s$ is limited, or glasses may be free of $P_zO_s$. In embodiments, the glass composition may contain phosphorus oxide ($P_zO_s$) in an amount from greater than or equal to 0.0 mol.% to less than or equal to 30.0 mol.% and all ranges and sub-ranges between the foregoing values. In some embodiments, the glass composition may contain $P_zO_s$ in an amount greater than or equal to 0.0 mol.%, greater than or equal to 5.0 mol.%, greater than or equal to 10.0 mol.%, greater than or equal to 20.0 mol.%, greater than or equal to 24.0 mol.%, greater than or equal to 26.0 mol.%, or greater than or equal to 28.0 mol.%. In some other embodiments, the glass composition may contain $P_2O_5$ in an amount less than or equal to 30.0 mol.%, less than or equal to 28.0 mol.%, less than or equal to 26.0 mol.%, less than or equal to 24.0 mol.%, less than or equal to 20.0 mol.%, less than or equal to 10.0 mol.%, or less than or equal to 5.0 mol.%. In some more embodiments, the glass composition may contain $P_2O_5$ in an amount greater than or equal to 0.0 mol.% and less than or equal to 30.0 mol.%, greater than or equal to 0.0 mol.% and less than or equal to 10.0 mol.%, greater than or equal to 0.0 mol.% and less than or equal to 5.0 mol.%, greater than or equal to 5.0 mol.% and less than or equal to 30.0 mol.%, greater than or equal to 5.0 mol.% and less than or equal to 10.0 mol.%, greater than or equal to 10.0 mol.% and less than or equal to 30.0 mol.%, greater than or equal to 10.0 mol.% and less than or equal to 20.0 mol.%, greater than or equal to 20.0 mol.% and less than or equal to 30.0 mol.%, greater than or equal to 20.0 mol.% and less than or equal to 24.0 mol.%, greater than or equal to 24.0 mol.% and less than or equal to 30.0 mol.%, greater than or equal to 24.0 mol.% and less than or equal to 26.0 mol.%.

Glass composition may include germania ($GeO_z$). Germania ($GeO_z$) provides excellent ratio between the refractive index and density and does not reduce transmittance. However, germania is expensive. Accordingly, the content of germania is limited, or glasses may be substantially free of $GeO_2$. In embodiments, the glass composition may contain germania ($GeO_2$) in an amount from greater than or equal to 0.0 mol.% to less than or equal to 10.0 mol.% and all ranges and sub-ranges between the foregoing values. In some embodiments, the glass composition may contain $GeO_2$ in an amount greater than or equal to 0.0 mol.%, greater than or equal to 5.0 mol.%, greater than or equal to 7.0 mol.%, greater than or equal to 8.0 mol.%, or greater than or equal to 9.0 mol.%. In some other embodiments, the glass composition may contain $GeO_2$ in an amount less than or equal to 10.0 mol.%, less than or equal to 9.0 mol.%, less than or equal to 8.0 mol.%, less than or equal to 7.0 mol.%, or less than or equal to 5.0 mol.%. In some more embodiments, the glass composition may contain $GeO_2$ in an amount greater than or equal to 0.0 mol.% and less than or equal to 10.0 mol.%, greater than or equal to 0.0 mol.% and less than or equal to 5.0 mol.%, greater than or equal to 5.0 mol.% and less than or equal to 10.0 mol.%, greater than or equal to 5.0 mol.% and less than or equal to 7.0 mol.%, greater than or equal to 7.0 mol.% and less than or equal to 10.0 mol.%, greater than or equal to 7.0 mol.% and less than or equal to 8.0 mol.%, greater than or equal to 8.0 mol.% and less than or equal to 10.0 mol.%, greater than or equal to 8.0 mol.% and less than or equal to 9.0 mol.%.

Glass composition may have limitations for the amount of rare earth metal oxides. Rare earth metal oxides, being added to a glass composition of the present disclosure, provide high refractive indexes. However, when the total concentration of rare earth metal oxides is too high, crystallization of refractory minerals from the glass-forming melt may occur, leading to devitrification of the melt. Accordingly, the content of rare earth metal oxides is limited, or a glass may be substantially free of $RE_mO_n$.

In some embodiments, the glass composition may contain rare earth metal oxides $RE_mO_n$ in an amount greater than or equal to 0.0 mol.%, greater than or equal to 10.0 mol.%, or greater than or equal to 20.0 mol.%. In some other embodiments, the glass composition may contain rare earth metal oxides $RE_mO_n$ in an amount less than or equal to 30.0 mol.%, less than or equal to 28.5 mol.%, less than or equal to 20.0 mol.%, or less than or equal to 10.0 mol.%. In some more embodiments, the glass composition may contain $RE_mO_n$ in an amount greater than or equal to 0.0 mol.% and less than or equal to 30.0 mol.%, greater than or equal to 0.0 mol.% and less than or equal to 28.5 mol.%, greater than or equal to 10.0 mol.% and less than or equal to 30.0 mol.%, greater than or equal to 0.0 mol.% and less than or equal to 20.0 mol.%, or greater than or equal to 0.0 mol.% and less than or equal to 10.0 mol.%, greater than or equal to 10.0 mol.% and less than or equal to 28.5 mol.%, or greater than or equal to 10.0 mol.% and less than or equal to 20.0 mol.%, greater than or equal to 20.0 mol.% and less than or equal to 30.0 mol.%, or greater than or equal to 20.0 mol.% and less than or equal to 28.5 mol.%.

Glass composition may include lanthanum oxide ($La_2O_3$). Lanthanum oxide is an inexpensive component for increasing the refractive index and does so without significant loss of transmittance in visible range. $La_2O_3$ may also reduce the risk of phase separation. However, $La_2O_3$ tends to increase the density of the glass to a greater degree than other high-index components, such as, for example, $TiO_2$, $Nb_2O_5$ or $WO_3$. Also, when added in high amount, it may cause crystallization of refractory species, like lanthanum disilicate ($La_2Si_2O_7$), lanthanum zirconate ($La_2ZrO_5$) and others and, accordingly, reduce glass forming ability. For this reason, the content of $La_2O_3$ is limited, or a glass may be substantially free of $La_2O_3$. In embodiments, the glass composition may contain lanthanum oxide ($La_2O_3$) in an amount from greater than or equal to 0.0 mol.% to less than or equal to 44.5 mol.% and all ranges and sub-ranges between the foregoing values. In some embodiments, the glass composition may contain $La_2O_3$ in an amount greater than or equal to 0.0 mol.%, greater than or equal to 10.0 mol.%, greater than or equal to 15.0 mol.%, greater than or equal to 17.0 mol.%, greater than or equal to 17.4 mol.%, greater than or equal to 25.0 mol.%, greater than or equal to 29.5 mol.%, greater than or equal to 34.5 mol.%, or greater than or equal to 39.5 mol.%. In some other embodiments, the glass composition may contain $La_2O_3$ in an amount less than or equal to 44.5 mol.%, less than or equal to 39.5 mol.%, less than or equal to 34.5 mol.%, less than or equal to 30.0 mol.%, less than or equal to 29.5 mol.%, less than or equal to 28.0 mol.%, less than or equal to 25.0 mol.%, less than or equal to 23.25 mol.%, less than or equal to 23.0 mol.%, less than or equal to 19.1 mol.%, or less than or equal to 10.0 mol.%. In some more embodiments, the glass composition may contain $La_2O_3$ in an amount greater than or equal to 0.0 mol.% and less than or equal to 28.0 mol.%, greater than or equal to 10.0 mol.% and less than or equal to 30.0 mol.%, greater than or equal to 15.0 mol.% and less than or equal to 25.0 mol.%, greater than or equal to 17.0 mol.% and less than or equal to 23.25 mol.%, greater than or equal to 17.44 mol.% and less than or equal to 19.14 mol.%, greater than or equal to 17.5 mol.% and less than or equal to 23.0 mol.%, greater than or equal to 0.0 mol.% and less than or equal to 44.5 mol.%, greater than or equal to 0.0 mol.% and less than or equal to 10.0 mol.%, greater than or equal to 10.0 mol.% and less than or equal to 44.5 mol.%, greater than or equal to 10.0 mol.% and less than or equal to 19.1 mol.%, greater than or equal to 15.0 mol.% and less than or equal to 19.1 mol.%, greater than or equal to 17.0 mol.% and less than or equal to 19.1 mol.%, greater than or equal to 17.4 mol.% and less than or equal to 44.5 mol.%, greater than or equal to 25.0 mol.% and less than or equal to 44.5 mol.%, greater than or equal to 25.0 mol.% and less than or equal to 28.0 mol.%.

Glass composition may include yttria ($Y_2O_3$). Yttria provides high refractive index at a lower density than other rare earth metal oxides, such as $La_2O_3$, $Gd_2O_3$ and others, without causing the loss of transmittance in the visible. However, addition of $Y_2O_3$ may cause crystallization the refractory minerals, such as yttrium zirconate $Y_2ZrO_5$, yttrium niobate $YNbO_4$ and others, and, accordingly, reduce glass forming ability. For this reason, the content of $Y_2O_3$ is limited, or a glass may be substantially free of $Y_2O_3$. In embodiments, the glass composition may contain yttria ($Y_2O_3$) in an amount from greater than or equal to 0.0 mol.% to less than or equal to 44.5 mol.% and all ranges and sub-ranges between the foregoing values. In some embodiments, the glass composition may contain $Y_2O_3$ in an amount greater than or equal to 0.0 mol.%, greater than or equal to 0.4 mol.%, greater than or equal to 0.8 mol.%, greater than or equal to 10.0 mol.%, greater than or equal to 25.0 mol.%, greater than or equal to 29.5 mol.%, greater than or equal to 34.5 mol.%, or greater than or equal to 39.5 mol.%. In some other embodiments, the glass composition may contain $Y_2O_3$ in an amount less than or equal to 44.5 mol.%, less than or equal to 39.5 mol.%, less than or equal to 34.5 mol.%, less than or equal to 29.5 mol.%, less than or equal to 25.0 mol.%, less than or equal to 10.0 mol.%, less than or equal to 1.6 mol.%, or less than or equal to 1.1 mol.%. In some more embodiments, the glass composition may contain $Y_2O_3$ in an amount greater than or equal to 0.0 mol.% and less than or equal to 2.0 mol.%, greater than or equal to 0.0 mol.% and less than or equal to 1.8 mol.%, greater than or equal to 0.4 mol.% and less than or equal to 1.6 mol.%, greater than or equal to 0.75 mol.% and less than or equal to 1.07 mol.%, greater than or equal to 0.0 mol.% and less than or equal to 44.5 mol.%, greater than or equal to 0.0 mol.% and less than or equal to 1.1 mol.%, greater than or equal to 0.4 mol.% and less than or equal to 1.1 mol.%, greater than or equal to 0.8 mol.% and less than or equal to 44.5 mol.%, greater than or equal to 0.8 mol.% and less than or equal to 1.1 mol.%, greater than or equal to 10.0 mol.% and less than or equal to 25.0 mol.%, greater than or equal to 25.0 mol.% and less than or equal to 29.5 mol.%.

Glass composition may include divalent metal oxides (RO). In some embodiments, the glass composition may contain divalent metal oxides RO in an amount greater than or equal to 0.0 mol.%, greater than or equal to 10.0 mol.%, or greater than or equal to 20.0 mol.%. In some other embodiments, the glass composition may contain divalent metal oxides RO in an amount less than or equal to 25.0 mol.%, less than or equal to 20.0 mol.%, or less than or equal to 10.0 mol.%. In some more embodiments, the glass composition may contain RO in an amount greater than or equal to 0.0 mol.% and less than or equal to 25.0 mol.%, greater than or equal to 0.0 mol.% and less than or equal to 20.0 mol.%, or greater than or equal to 0.0 mol.% and less than or equal to 10.0 mol.%, greater than or equal to 10.0 mol.% and less than or equal to 25.0 mol.%, or greater than or equal to 10.0 mol.% and less than or equal to 20.0 mol.%.

Glass composition may include lead oxide (PbO). Lead oxide provides high refractive index, but also significantly increases the density. Also, PbO may cause ecological concern. For these reasons, the content of PbO is limited, or glasses may be substantially free of PbO. In embodiments, the glass composition may contain lead oxide (PbO) in an amount from greater than or equal to 0.0 mol.% to less than or equal to 10.0 mol.% and all ranges and sub-ranges between the foregoing values. In some embodiments, the glass composition may contain PbO in an amount greater than or equal to 0.0 mol.%, greater than or equal to 5.0 mol.%, greater than or equal to 7.0 mol.%, greater than or equal to 8.0 mol.%, or greater than or equal to 9.0 mol.%. In some other embodiments, the glass composition may contain PbO in an amount less than or equal to 10.0 mol.%, less than or equal to 9.0 mol.%, less than or equal to 8.0 mol.%, less than or equal to 7.0 mol.%, less than or equal to 5.0 mol.%, less than or equal to 0.1 mol.%, or less than or equal to 0.05 mol.%. In some more embodiments, the glass composition may contain PbO in an amount greater than or equal to 0.0 mol.% and less than or equal to 10.0 mol.%, greater than or equal to 0.0 mol.% and less than or equal to 5.0 mol.%, greater than or equal to 0.0 mol.% and less than or equal to 0.1 mol.%, greater than or equal to 0.0 mol.% and less than or equal to 0.05 mol.%, greater than or equal to 5.0 mol.% and less than or equal to 10.0 mol.%, greater than or equal to 5.0 mol.% and less than or equal to 7.0 mol.%, greater than or equal to 7.0 mol.% and less than or equal to 10.0 mol.%, greater than or equal to 7.0 mol.% and less than or equal to 8.0 mol.%, greater than or equal to 8.0 mol.% and less than or equal to 10.0 mol.%, greater than or equal to 8.0 mol.% and less than or equal to 9.0 mol.%.

Glass composition may include barium oxide (BaO). Barium oxide may increase the solubility of high index components, such as $TiO_2$ and $Nb_2O_5$, which may indirectly lead to a further increase in the refractive index at comparably low density. However, barium oxide itself may increase the density of glass. Also, in high concentration, it may cause crystallization of such minerals as barium titanate ($BaTiO_3$), barium niobate ($BaNb_2O_6$) and others. Accordingly, the amount of BaO is limited, or glasses may be substantially free of BaO. In embodiments, the glass composition may contain barium oxide (BaO) in an amount from greater than or equal to 0.0 mol.% to less than or equal to 5.0 mol.% and all ranges and sub-ranges between the foregoing values. In some other embodiments, the glass composition may contain BaO in an amount less than or equal to 5.0 mol.%, less than or equal to 2.5 mol.%, less than or equal to 2.0 mol.%, less than or equal to 1.8 mol.%, or less than or equal to 1.5 mol.%. In some more embodiments, the glass composition may contain BaO in an amount greater than or equal to 0.0 mol.% and less than or equal to 2.0 mol.%, greater than or equal to 0.0 mol.% and less than or equal to 1.8 mol.%, greater than or equal to 0.13 mol.% and less than or equal to 1.54 mol.%, greater than or equal to 0.0 mol.% and less than or equal to 5.0 mol.%, greater than or equal to 0.0 mol.% and less than or equal to 1.5 mol.%.

Glass composition may include calcium oxide (CaO). Calcium oxide provides the highest ratio of the refractive index to density of glasses among the known monovalent and divalent metal oxides. Also, in some embodiments, CaO may help to increase the solubility of $Nb_2O_5$ and $TiO_2$, which additionally contributes to an increase in refractive index at comparably low density. However, if the amount of CaO in a glass is too high, it may cause crystallization of refractory species, such as calcium titanates ($CaTiO_3$, $CaTi_2O_5$, etc.) calcium niobate ($CaNb_2O_6$), calcium metasilicate ($CaSiO_3$) and others, which may cause crystallization of the glass-forming melt when cooling. The amount of CaO is accordingly limited, or glasses may be substantially free of CaO. In embodiments, the glass composition may contain calcium oxide (CaO) in an amount from greater than or equal to 0.0 mol.% to less than or equal to 5.0 mol.% and all ranges and sub-ranges between the foregoing values. In some other embodiments, the glass composition may contain CaO in an amount less than or equal to 5.0 mol.%, less than or equal to 2.5 mol.%, less than or equal to 1.5 mol.%, less than or equal to 1.1 mol.%, less than or equal to 1.0 mol.%, or less than or equal to 0.5 mol.%. In some more embodiments, the glass composition may contain CaO in an amount greater than or equal to 0.0 mol.% and less than or equal to 1.5 mol.%, greater than or equal to 0.0 mol.% and less than or equal to 1.1 mol.%, greater than or equal to 0.0 mol.% and less than or equal to 1.0 mol.%, greater than or equal to 0.03 mol.% and less than or equal to 0.49 mol.%, greater than or equal to 0.0 mol.% and less than or equal to 5.0 mol.%, greater than or equal to 0.0 mol.% and less than or equal to 0.5 mol.%. Glass composition may include alkali metal oxides ($Alk_2O$). Alkali metal oxides act as modifiers, potentially improving the stability of the glass-forming melt when cooling and reheating. Also, alkali metal oxides may increase the basicity of the melt, which may reduce undesirable coloration provided by other species, such as, for example, bismuth, antimony and iron oxides. However, alkali metal oxides provide low refractive indexes. Also, in some cases, alkali metal oxides may cause crystallization or liquid-liquid phase separation of the melt when cooling. Accordingly, the content of alkali metal oxides is limited, or glass compositions may be substantially free of $Alk_2O$. In embodiments, the glass composition may contain alkali metal oxides $Alk_2O$ in an amount less than or equal to 3.0 mol.%, less than or equal to 2.0 mol.%, or less than or equal to 1.0 mol.%. In some more embodiments, the glass composition may contain $Alk_2O$ in an amount greater than or equal to 0.0 mol.% and less than or equal to 3.0 mol.%, greater than or equal to 0.0 mol.% and less than or equal to 2.0 mol.%, or greater than or equal to 0.0 mol.% and less than or equal to 1.0 mol.%.

Glass composition may include Cu and Co ("Cu+Co"). Cobalt and copper, whether intentionally introduced or present as impurities from other components, may provide undesirable coloration. Accordingly, the content of Cu+Co is limited, or glass compositions may be substantially free of Cu+Co. In embodiments, the glass composition may contain Cu+Co in an amount from greater than or equal to 0.0 at.% to less than or equal to 5.0 at.% and all ranges and sub-ranges between the foregoing values. In some other embodiments, the glass composition may contain Cu+Co in an amount less than or equal to 5.0 at.%, less than or equal to 2.5 at.%, or less than or equal to 0.005 at.%. In some more embodiments, the glass composition may contain Cu+Co in an amount greater than or equal to 0.0 at.% and less than or equal to 0.005 at.%, greater than or equal to 0.0 at.% and less than or equal to 5.0 at.%.

Glass composition may include antimony oxide ($Sb_2O_3$). Antimony oxide, like arsenic oxide, may be used as a fining agent. Also, it may prevent reduction of $TiO_2$ and $Nb_2O_5$ and, therefore, may improve the blue transmittance. However, at high concentration, antimony oxide may impart undesirable coloration to the glass and may also cause crystallization of the melt when cooling. Accordingly, in some embodiments, the content of $Sb_2O_3$ is limited or glass compositions may be substantially free of antimony oxide. In embodiments, the glass composition may contain antimony oxide ($Sb_2O_3$) in an amount from greater than or equal to 0.0 mol.% to less than or equal to 5.0 mol.% and all ranges and sub-ranges between the foregoing values. In some other embodiments, the glass composition may contain $Sb_2O_3$ in an amount less than or equal to 5.0 mol.%, less than or equal to 2.5 mol.%, less than or equal to 1.0 mol.%, less than or equal to 0.9 mol.%, less than or equal to 0.5 mol.%, less than or equal to 0.3 mol.%, or less than or equal to 0.06 mol.%. In some more embodiments, the glass composition may contain $Sb_2O_3$ in an amount greater than or equal to 0.0 mol.% and less than or equal to 1.0 mol.%, greater than or equal to 0.0 mol.% and less than or equal to 0.9 mol.%, greater than or equal to 0.0 mol.% and less than or equal to 0.5 mol.%, greater than or equal to 0.0 mol.% and less than or equal to 0.3 mol.%, greater than or equal to 0.01 mol.% and less than or equal to 0.06 mol.%, greater than or equal to 0.0 mol.% and less than or equal to 5.0 mol.%, greater than or equal to 0.0 mol.% and less than or equal to 0.06 mol.%.

Glass composition may include bismuth oxide ($Bi_2O_3$). $Bi_2O_3$ provides high refractive index, but leads to increases in density. It may also decrease the viscosity of melts at high temperatures, which may cause crystallization of the melts when cooling. Accordingly, the content of bismuth oxide is limited, or glass compositions may be free of $Bi_2O_3$. In embodiments, the glass composition may contain bismuth oxide (BizOs) in an amount from greater than or equal to 0.0 mol.% to less than or equal to 5.0 mol.% and all ranges and sub-ranges between the foregoing values. In some other embodiments, the glass composition may contain $Bi_2O_3$ in an amount less than or equal to 5.0 mol.%, less than or equal to 5.0 mol.%, less than or equal to 2.5 mol.%, less than or equal to 0.12 mol.%, or less than or equal to 0.05 mol.%. In some more embodiments, the glass composition may contain $Bi_2O_3$ in an amount greater than or equal to 0.0 mol.% and less than or equal to 15.0 mol.%, greater than or equal to 0.0 mol.% and less than or equal to 0.12 mol.%, greater than or equal to 0.0 mol.% and less than or equal to 0.05 mol.%.

Glass composition may include zirconia ($ZrO_2$). Zirconia can increase the refractive index while maintaining low density. $ZrO_2$ can also increase the viscosity of the melt, which may inhibit crystallization from the melt. $ZrO_2$ does not introduce coloring in the glass in the visible and near-UV ranges, which may help to maintain a high transmittance of the glass. However, high concentrations of zirconia may cause crystallization of refractory minerals, such as zirconia ($ZrO_2$), zircon ($ZrSiO_4$), yttrium zirconate ($Y_2ZrO_5$) and others, which may decrease the glass forming ability of the melt. Accordingly, the content of zirconia is limited, or glass compositions may be free of ZrOz. In embodiments, the glass composition may contain zirconia (ZrOz) in an amount from greater than or equal to 0.0 mol.% to less than or equal to 15.0 mol.% and all ranges and sub-ranges between the foregoing values. In some embodiments, the glass composition may contain $ZrO_2$ in an amount greater than or equal to 0.0 mol.%, greater than or equal to 0.3 mol.%, greater than or equal to 3.5 mol.%, greater than or equal to 4.0 mol.%, greater than or equal to 4.4 mol.%, greater than or equal to 5.0 mol.%, greater than or equal to 7.0 mol.%, greater than or equal to 9.0 mol.%, greater than or equal to 10.0 mol.%, greater than or equal to 11.0 mol.%, or greater than or equal to 13.0 mol.%. In some other embodiments, the glass composition may contain $ZrO_2$ in an amount less than or equal to 15.0 mol.%, less than or equal to 13.0 mol.%, less than or equal to 11.0 mol.%, less than or equal to 10.0 mol.%, less than or equal to 9.5 mol.%, less than or equal to 9.0 mol.%, less than or equal to 8.6 mol.%, less than or equal to 7.3 mol.%, or less than or equal to 5.0 mol.%. In some more embodiments, the glass composition may contain $ZrO_2$ in an amount greater than or equal to 0.3 mol.% and less than or equal to 15.0 mol.%, greater than or equal to 0.3 mol.% and less than or equal to 10.0 mol.%, greater than or equal to 3.5 mol.% and less than or equal to 9.5 mol.%, greater than or equal to 4.0 mol.% and less than or equal to 10.0 mol.%, greater than or equal to 4.4 mol.% and less than or equal to 8.6 mol.%, greater than or equal to 6.99 mol.% and less than or equal to 7.29 mol.%, greater than or equal to 0.0 mol.% and less than or equal to 15.0 mol.%, greater than or equal to 0.3 mol.% and less than or equal to 5.0 mol.%, greater than or equal to 3.5 mol.% and less than or equal to 5.0 mol.%, greater than or equal to 4.0 mol.% and less than or equal to 5.0 mol.%, greater than or equal to 7.0 mol.% and less than or equal to 7.3 mol.%.

Glass composition may include tungsten oxide ($WO_3$). $WO_3$ provides high refractive index without significantly increasing density or causing undesirable coloring. Also, addition of $WO_3$ to glass composition may decrease the liquidus temperature, which allows melting such glasses at lower temperatures, that, in turn, may increase the transmittance of such glasses. Also, addition of $WO_3$ may decrease the glass transition temperature $T_g$, which allows glass formation at lower temperatures. At high concentrations of $WO_3$, the liquidus temperature tends to increase, and the viscosity at the liquidus temperature decreases, making it difficult to avoid crystallization of melts when cooling. Accordingly, the content of $WO_3$ is limited, or glass compositions may be free of $WO_3$. In embodiments, the glass composition may contain tungsten oxide ($WO_3$) in an amount from greater than or equal to 0.0 mol.% to less than or equal to 32.0 mol.% and all ranges and sub-ranges between the foregoing values. In some embodiments, the glass composition may contain $WO_3$ in an amount greater than or equal to 0.0 mol.%, greater than or equal to 10.0 mol.%, greater than or equal to 15.0 mol.%, greater than or equal to 17.5 mol.%, greater than or equal to 18.0 mol.%, greater than or equal to 20.0 mol.%, greater than or equal to 21.0 mol.%, or greater than or equal to 30.0 mol.%. In some other embodiments, the glass composition may contain $WO_3$ in an amount less than or equal to 32.0 mol.%, less than or equal to 30.0 mol.%, less than or equal to 27.5 mol.%, less than or equal to 26.5 mol.%, less than or equal to 26.0 mol.%, less than or equal to 22.1 mol.%, less than or equal to 20.0 mol.%, or less than or equal to 10.0 mol.%. In some more embodiments, the glass composition may contain $WO_3$ in an amount greater than or equal to 15.0 mol.% and less than or equal to 30.0 mol.%, greater than or equal to 17.5 mol.% and less than or equal to 27.5 mol.%, greater than or equal to 18.0 mol.% and less than or equal to 26.5 mol.%, greater than or equal to 18.0 mol.% and less than or equal to 26.0 mol.%, greater than or equal to 20.99 mol.% and less than or equal to 22.11 mol.%, greater than or equal to 0.0 mol.% and less than or equal to 32.0 mol.%, greater than or equal to 0.0 mol.% and less than or equal to 10.0 mol.%, greater than or equal to 10.0 mol.% and less than or equal to 32.0 mol.%, greater than or equal to 10.0 mol.% and less than or equal to 20.0 mol.%, greater than or equal to 15.0 mol.% and less than or equal to 20.0 mol.%, greater than or equal to 17.5 mol.% and less than or equal to 20.0 mol.%, greater than or equal to 18.0 mol.% and less than or equal to 20.0 mol.%.

Glass composition may include titania ($TiO_2$). The levels of $TiO_2$ and/or $Nb_2O_5$ that are typically used in glasses to increase refractive index tend to decrease the transmittance in the near-UV region and shift the UV cut-off to higher wavelengths. Accordingly, the amount of $TiO_2$ is limited, and in some cases a glass composition may be substantially free of $TiO_z$. In embodiments, the glass composition may contain titania ($TiO_2$) in an amount from greater than or equal to 0.0 mol.% to less than or equal to 28.5 mol.% and all ranges and sub-ranges between the foregoing values. In some embodiments, the glass composition may contain $TiO_2$ in an amount greater than or equal to 0.0 mol.%, greater than or equal to 0.3 mol.%, greater than or equal to 1.0 mol.%, greater than or equal to 5.0 mol.%, greater than or equal to 10.0 mol.%, greater than or equal to 13.0 mol.%, greater than or equal to 20.0 mol.%, greater than or equal to 22.5 mol.%, greater than or equal to 24.5 mol.%, or greater than or equal to 26.5 mol.%. In some other embodiments, the glass composition may contain $TiO_2$ in an amount less than or equal to 28.5 mol.%, less than or equal to 28.5 mol.%, less than or equal to 28.0 mol.%, less than or equal to 26.5 mol.%, less than or equal to 25.0 mol.%, less than or equal to 24.5 mol.%, less than or equal to 22.5 mol.%, less than or equal to 22.0 mol.%, less than or equal to 20.0 mol.%, less than or equal to 15.0 mol.%, less than or equal to 10.0 mol.%, or less than or equal to 5.0 mol.%. In some more embodiments, the glass composition may contain $TiO_2$ in an amount greater than or equal to 0.3 mol.% and less than or equal to 30.0 mol.%, greater than or equal to 0.3 mol.% and less than or equal to 28.5 mol.%, greater than or equal to 1.0 mol.% and less than or equal to 25.0 mol.%, greater than or equal to 5.0 mol.% and less than or equal to 25.0 mol.%, greater than or equal to 10.0 mol.% and less than or equal to 22.5 mol.%, greater than or equal to 10.0 mol.% and less than or equal to 22.0 mol.%, greater than or equal to 12.85 mol.% and less than or equal to 15.27 mol.%, greater than or equal to 0.0 mol.% and less than or equal to 30.0 mol.%, greater than or equal to 0.0 mol.% and less than or equal to 5.0 mol.%, greater than or equal to 0.3 mol.% and less than or equal to 5.0 mol.%, greater than or equal to 1.0 mol.% and less than or equal to 5.0 mol.%, greater than or equal to 5.0 mol.% and less than or equal to 30.0 mol.%, greater than or equal to 5.0 mol.% and less than or equal to 10.0 mol.%, greater than or equal to 10.0 mol.% and less than or equal to 30.0 mol.%, greater than or equal to 10.0 mol.% and less than or equal to 15.0 mol.%, greater than or equal to 20.0 mol.% and less than or equal to 30.0 mol.%.

Glass composition may include niobia ($Nb_2O_5$). Niobia can be used to increase the refractive index of glass while maintaining a low density. However, niobia can introduce a yellow coloring to the glass that cannot be bleached in the same manner as titania, which can result in a loss of transmittance, particularly in the blue and UV range. Niobia may cause crystallization and/or phase separation of the melt. Accordingly, the amount of $Nb_2O_5$ is limited; in some embodiments, the glasses may be substantially free of $Nb_2O_5$. In embodiments, the glass composition may contain niobia ($Nb_2O_5$) in an amount from greater than or equal to 0.0 mol.% to less than or equal to 44.5 mol.% and all ranges and sub-ranges between the foregoing values. In some embodiments, the glass composition may contain $Nb_2O_5$ in an amount greater than or equal to 0.0 mol.%, greater than or equal to 0.3 mol.%, greater than or equal to 1.0 mol.%, greater than or equal to 10.0 mol.%, greater than or equal to 15.0 mol.%, greater than or equal to 15.5 mol.%, greater than or equal to 16.4 mol.%, greater than or equal to 16.89 mol.%, greater than or equal to 25.0 mol.%, greater than or equal to 29.5 mol.%, greater than or equal to 34.5 mol.%, or greater than or equal to 39.5 mol.%. In some other embodiments, the glass composition may contain $Nb_2O_5$ in an amount less than or equal to 44.5 mol.%, less than or equal to 39.5 mol.%, less than or equal to 34.5 mol.%, less than or equal to 30.0 mol.%, less than or equal to 29.5 mol.%, less than or equal to 25.0 mol.%, less than or equal to 22.5 mol.%, less than or equal to 21.25 mol.%, less than or equal to 20.6 mol.%, less than or equal to 17.8 mol.%, or less than or equal to 10.0 mol.%. In some more embodiments, the glass composition may contain $Nb_2O_5$ in an amount greater than or equal to 0.0 mol.% and less than or equal to 25.0 mol.%, greater than or equal to 0.3 mol.% and less than or equal to 30.0 mol.%, greater than or equal to 1.0 mol.% and less than or equal to 25.0 mol.%, greater than or equal to 15.0 mol.% and less than or equal to 25.0 mol.%, greater than or equal to 15.0 mol.% and less than or equal to 22.5 mol.%, greater than or equal to 15.5 mol.% and less than or equal to 21.25 mol.%, greater than or equal to 16.4 mol.% and less than or equal to 20.6 mol.%, greater than or equal to 16.89 mol.% and less than or equal to 17.8 mol.%, greater than or equal to 0.0 mol.% and less than or equal to 44.5 mol.%, greater than or equal to 0.0 mol.% and less than or equal to 10.0 mol.%, greater than or equal to 0.3 mol.% and less than or equal to 10.0 mol.%, greater than or equal to 1.0 mol.% and less than or equal to 44.5 mol.%, greater than or equal to 1.0 mol.% and less than or equal to 10.0 mol.%, greater than or equal to 10.0 mol.% and less than or equal to 17.8 mol.%, greater than or equal to 15.0 mol.% and less than or equal to 44.5 mol.%, greater than or equal to 15.0 mol.% and less than or equal to 17.8 mol.%, greater than or equal to 16.4 mol.% and less than or equal to 17.8 mol.%.

In some embodiments, the glass composition may have a sum of $B_2O_3+SiO_2$ greater than or equal to 0.0 mol.%, greater than or equal to 5.0 mol.%, greater than or equal to 18.0 mol.%, or greater than or equal to 20.0 mol.%. In some other embodiments, the glass composition may have a sum of $B_2O_3+SiO_2$ less than or equal to 35.0 mol.%, less than or equal to 21.0 mol.%, or less than or equal to 20.0 mol.%. In some more embodiments, the glass composition may have a sum of $B_2O_3+SiO_2$ greater than or equal to 5.0 mol.% and less than or equal to 35.0 mol.%, greater than or equal to 0.0 mol.% and less than or equal to 35.0 mol.%, greater than or equal to 0.0 mol.% and less than or equal to 21.0 mol.%, or greater than or equal to 0.0 mol.% and less than or equal to 20.0 mol.%, greater than or equal to 5.0 mol.% and less than or equal to 21.0 mol.%, or greater than or equal to 5.0 mol.% and less than or equal to 20.0 mol.%, greater than or equal to 18.0 mol.% and less than or equal to 35.0 mol.%, greater than or equal to 18.0 mol.% and less than or equal to 21.0 mol.%, or greater than or equal to 18.0 mol.% and less than or equal to 20.0 mol.%.

In some other embodiments, the glass composition may have a sum of $GeO_2+TeO_2$ less than or equal to 5.0 mol.% or less than or equal to 2.5 mol.%. In some more embodiments, the glass composition may have a sum of $GeO_2+TeO_2$ greater than or equal to 0.0 mol.% and less than or equal to 5.0 mol.%, or greater than or equal to 0.0 mol.% and less than or equal to 2.5 mol.%.

In some embodiments, the glass composition may have a sum of $Li_2O+Na_2O+K_2O$ greater than or equal to 0.0 mol.%, or greater than or equal to 10.0 mol.%. In some other embodiments, the glass composition may have a sum of $Li_2O+Na_2O+K_2O$ less than or equal to 15.0 mol.% or less than or equal to 10.0 mol.%. In some more embodiments, the glass composition may have a sum of $Li_2O+Na_2O+K_2O$ greater than or equal to 0.0 mol.% and less than or equal to 15.0 mol.%, or greater than or equal to 0.0 mol.% and less than or equal to 10.0 mol.%.

In some embodiments, the glass composition may have a sum of $MgO+CaO+SrO+BaO$ greater than or equal to 0.0 mol.%, or greater than or equal to 10.0 mol.%. In some other embodiments, the glass composition may have a sum of $MgO+CaO+SrO+BaO$ less than or equal to 15.0 mol.% or less than or equal to 10.0 mol.%. In some more embodiments, the glass composition may have a sum of $MgO+CaO+SrO+BaO$ greater than or equal to 0.0 mol.% and less than or equal to 15.0 mol.%, or greater than or equal to 0.0 mol.% and less than or equal to 10.0 mol.%.

In some embodiments, the glass composition may have a sum of $Nb_2O_5+La_2O_3+Gd_2O_3+Y_2O_3$ greater than or equal to 0.0 mol.%, greater than or equal to 5.0 mol.%, greater than or equal to 25.0 mol.%, or greater than or equal to 36.0 mol.%. In some other embodiments, the glass composition may have a sum of $Nb_2O_5+La_2O_3+Gd_2O_3+Y_2O_3$ less than or equal to 45.0 mol.%, less than or equal to 44.5 mol.%, less than or equal to 37.2 mol.%, or less than or equal to 25.0 mol.%. In some more embodiments, the glass composition may have a sum of $Nb_2O_5+La_2O_3+Gd_2O_3+Y_2O_3$ greater than or equal to 0.0 mol.% and less than or equal to 44.5 mol.%, greater than or equal to 5.0 mol.% and less than or equal to 45.0 mol.%, greater than or equal to 0.0 mol.% and less than or equal to 45.0 mol.%, greater than or equal to 0.0 mol.% and less than or equal to 37.2 mol.%, or greater than or equal to 0.0 mol.% and less than or equal to 25.0 mol.%, greater than or equal to 5.0 mol.% and less than or equal to 44.5 mol.%, greater than or equal to 5.0 mol.% and less than or equal to 37.2 mol.%, or greater than or equal to 5.0 mol.% and less than or equal to 25.0 mol.%, greater than or equal to 25.0 mol.% and less than or equal to 45.0 mol.%, greater than or equal to 25.0 mol.% and less than or equal to 44.5 mol.%, or greater than or equal to 25.0 mol.% and less than or equal to 37.2 mol.%.

In some embodiments, the glass composition may have a sum of $Nb_2O_5+TiO_2$ greater than or equal to 0.0 mol.%, greater than or equal to 20.0 mol.%, or greater than or equal to 25.0 mol.%. In some other embodiments, the glass composition may have a sum of $Nb_2O_5+TiO_2$ less than or equal to 45.0 mol.% or less than or equal to 25.0 mol.%. In some more embodiments, the glass composition may have a sum of $Nb_2O_5+TiO_2$ greater than or equal to 20.0 mol.% and less than or equal to 45.0 mol.%, greater than or equal to 0.0 mol.% and less than or equal to 45.0 mol.%, or greater than or equal to 0.0 mol.% and less than or equal to 25.0 mol.%, or greater than or equal to 20.0 mol.% and less than or equal to 25.0 mol.%.

In some embodiments, the glass composition may have a sum of $R_2O+RO$ greater than or equal to 0.0 mol.%, greater than or equal to 10.0 mol.%, or greater than or equal to 20.0 mol.%. In some other embodiments, the glass composition may have a sum of $R_2O+RO$ less than or equal to 25.0 mol.%, less than or equal to 20.0 mol.%, less than or equal to 10.0 mol.%, or less than or equal to 1.0 mol.%. In some more embodiments, the glass composition may have a sum of $R_2O+RO$ greater than or equal to 0.0 mol.% and less than or equal to 25.0 mol.%, greater than or equal to 0.0 mol.% and less than or equal to 20.0 mol.%, greater than or equal to 0.0 mol.% and less than or equal to 10.0 mol.%, or greater than or equal to 0.0 mol.% and less than or equal to 1.0 mol.%, greater than or equal to 10.0 mol.% and less than or equal to 25.0 mol.%, or greater than or equal to 10.0 mol.% and less than or equal to 20.0 mol.%.

In some other embodiments, the glass composition may have a sum of V +Fe +Cr +Co +Ni +Cu +Sb less than or equal to 0.03 at.%, less than or equal to 0.02 at.%, or less than or equal to 0.01 at.%. In some more embodiments, the glass composition may have a sum of V +Fe +Cr +Co +Ni +Cu +Sb greater than or equal to 0.0 at.% and less than or equal to 0.03 at.%, greater than or equal to 0.0 at.% and less than or equal to 0.02 at.%, or greater than or equal to 0.0 at.% and less than or equal to 0.01 at.%.

In some other embodiments, the glass composition may have a sum of V+Fe+Cr+Ni less than or equal to 1.0 at.%, less than or equal to 0.5 at.%, or less than or equal to 0.05 at.%. In some more embodiments, the glass composition may have a sum of V+Fe+Cr+Ni greater than or equal to 0.0 at.% and less than or equal to 1.0 at.%, greater than or equal to 0.0 at.% and less than or equal to 0.05 at.%, greater than or equal to 0.0 at.% and less than or equal to 0.5 at.%.

In some embodiments, the glass composition may have a sum of $Y_2O_3+Gd_2O_3+Er_2O_3$ greater than or equal to 0.0 mol.%, or greater than or equal to 10.0 mol.%. In some other embodiments, the glass composition may have a sum of $Y_2O_3+Gd_2O_3+Er_2O_3$ less than or equal to 15.0 mol.% or less than or equal to 10.0 mol.%. In some more embodiments, the glass composition may have a sum of $Y_2O_3+Gd_2O_3+Er_2O_3$ greater than or equal to 0.0 mol.% and less than or equal to 15.0 mol.%, or greater than or equal to 0.0 mol.% and less than or equal to 10.0 mol.%.

In some embodiments, the glass composition may have a sum of $ZrO_2+WO_3$ greater than or equal to 0.0 mol.%, greater than or equal to 3.0 mol.%, or greater than or equal to 20.0 mol.%. In some other embodiments, the glass composition may have a sum of $ZrO_2+WO_3$ less than or equal to 40.0 mol.% or less than or equal to 20.0 mol.%. In some more embodiments, the glass composition may have a sum of $ZrO_2+WO_3$ greater than or equal to 3.0 mol.% and less than or equal to 40.0 mol.%, greater than or equal to 0.0 mol.% and less than or equal to 40.0 mol.%, or greater than or equal to 0.0 mol.% and less than or equal to 20.0 mol.%, or greater than or equal to 3.0 mol.% and less than or equal to 20.0 mol.%.

In some embodiments, glass composition may have limitations for $\min(RE_mO_n,TiO_2,Nb_2O_5)$, where $\min(RE_mO_n,TiO_2,Nb_2O_5)$ refers to the smallest of the concentrations (in mol%) of $RE_mO_n$, TiOz, and NbzOs. When a glass composition contains significant amounts of rare earth metal oxides, titania and niobia simultaneously, it may precipitate a mineral or a solid solution containing these oxides, such as, for example, lanthanum niobium titanate LaNbTiOs, at high temperatures, which may increase the liquidus temperature and/or cause devitrification of the melt. Accordingly, in some embodiments of the present disclosure the value of $\min(RE_mO_n,TiO_2,Nb_2O_5)$ is limited. In some embodiments, the glass may have a value of $\min(RE_mO_n,TiO_2,Nb_2O_5)$ greater than or equal to 0.000 mol.%, or greater than or equal to 10 mol.%. In some other embodiments, the glass may have a value of $\min(RE_mO_n,TiO_2,Nb_2O_5)$ less than or equal to 18 mol.% or less than or equal to 10 mol.%. In some more embodiments, the glass may have a $\min(RE_mO_n,TiO_2,Nb_2O_5)$ greater than or equal to 0.000 mol.% and less than or equal to 18 mol.%, or greater than or equal to 0.000 mol.% and less than or equal to 10 mol.%.

In some embodiments, glass composition may have limitations for $\min(RO,RE_mO_n,TiO_2)$, where $\min(RO,RE_mO_n,TiO_2)$ refers to the smallest of the concentrations (in mol%) of RO, $RE_mO_n$, and $TiO_2$. When a glass composition simultaneously contains significant amounts of rare earth metal oxides, titania and divalent metal oxides, such as alkaline earth metal oxide, zinc oxide or others, it may precipitate a mineral or a solid solution containing these oxides, such as, for example, barium lanthanum titanate $BaLa_2TiO_6$, at high temperatures, which may increase the liquidus temperature and/or cause devitrification of the melt. Accordingly, in some embodiments of the present disclosure the value of $\min(RO, RE_mO_n,TiO_2)$ is limited. In some embodiments, the glass may have a value of $\min(RO,RE_mO_n,TiO_2)$ greater than or equal to 0.0 mol.%, or greater than or equal to 5.0 mol.%. In some other embodiments, the glass may have a value of $\min(RO,RE_mO_n,TiO_2)$ less than or equal to 10.0 mol.%, less than or equal to 5.0 mol.%, or less than or equal to 1.0 mol.%. In some more embodiments, the glass may have a $\min(RO,RE_mO_n,TiO_2)$ greater than or equal to 0.0 mol.% and less than or equal to 10.0 mol.%, greater than or equal to 0.0 mol.% and less than or equal to 5.0 mol.%, or greater than or equal to 0.0 mol.% and less than or equal to 1.0 mol.%.

In some embodiments, the glass may have a refractive index $n_d$ from greater than or equal to 1.80 to less than or equal to 2.25 and all ranges and sub-ranges between the foregoing values. In some embodiments, the glass may have a refractive index $n_d$ greater than or equal to 1.80, greater than or equal to 1.90, greater than or equal to 2.05, greater than or equal to 2.092, greater than or equal to 2.095, greater than or equal to 2.10, greater than or equal to 2.15, or greater than or equal to 2.20. In some other embodiments, the glass may have a refractive index $n_d$ less than or equal to 2.25, less than or equal to 2.20, less than or equal to 2.15, less than or equal to 2.12, less than or equal to 2.10, less than or equal to 2.05, or less than or equal to 1.90. In some more embodiments, the glass may have a refractive index $n_d$ greater than or equal to 2.05 and less than or equal to 2.25, greater than or equal to 2.092 and less than or equal to 2.25, greater than or equal to 2.095 and less than or equal to 2.20, greater than or equal to 1.80 and less than or equal to 2.25, greater than or equal to 2.05 and less than or equal to 2.10, greater than or equal to 2.092 and less than or equal to 2.10.

In some embodiments, the glass may have an Abbe number $v_d$ from greater than or equal to 0 to less than or equal to 28 and all ranges and sub-ranges between the foregoing values. In some embodiments, the glass may have an Abbe number $v_d$ greater than or equal to 0, greater than or equal to 5, greater than or equal to 10, greater than or equal to 15, greater than or equal to 20, greater than or equal to 22, greater than or equal to 24, or greater than or equal to 26. In some other embodiments, the glass may have an Abbe number $v_d$ less than or equal to 28, less than or equal to 26, less than or equal to 25, less than or equal to 24, less than or equal to 23, less than or equal to 22, less than or equal to 20, less than or equal to 10, or less than or equal to 5. In some more embodiments, the glass may have an Abbe number $v_d$ greater than or equal to 0 and less than or equal to 28, greater than or equal to 5 and less than or equal to 10, greater than or equal to 10 and less than or equal to 28, greater than or equal to 10 and less than or equal to 20, greater than or equal to 15 and less than or equal to 28, greater than or equal to 20 and less than or equal to 28.

In some embodiments, the glass may have a density at room temperature $d_{RT}$ less than or equal to 6 g/cm$^3$.

In some embodiments, the glass may have a liquidus temperature $T_{liq}$ less than or equal to 1150 °C.

In some embodiments, the glass may have a glass transition temperature $T_g$ less than or equal to 700 °C.

In some embodiments, the glass may have a blue transmittance attribute $Q_{420}$ - (31.1 - 14.1 * $n_d$) greater than or equal to 0.000.

In some embodiments, the glass may have a blue transmittance attribute $Q_{420}$ - (31.25 - 14.1 * $n_d$) greater than or equal to 0.000.

A refractive index estimate parameter $n_{365,est}$ is a parameter that estimates the refractive index of a glass at a wavelength of 365 nm and is calculated by the following formula (V):

$$n_{365,est} = 0.0422 + 4.333 * n_F - 3.369 * n_{531.9}. \quad (V)$$

where $n_F$ is the refractive index of the glass at 486.13 nm and $n_{531.9}$ is the refractive index of the glass at 531.9 nm. The formula (V) was derived by the method of linear regression over the data reported in the catalogue of commercial optical glasses manufactured by Hoya Corporation. The catalogue is electronically available from the official website of Hoya Corporation (see https://www.hoya-opticalworld.com/english/datadownload).

The refractive index estimate parameter $n_{365,est}$ is used to provides an estimate of the refractive index of the Exemplary Glasses of the present disclosure at a wavelength of 365 nm. The refractive index estimate parameter $n_{365,est}$ was also used for evaluation of the internal transmittance of the Exemplary Glasses in the ultraviolet (UV) range as described below.

The exact refractive index of glasses in the UV range may not be easy to directly measure with reliable accuracy, especially on samples of imperfect optical quality, such as those containing some crystals, internal inhomogeneity (for example, cord), gas inclusions or other defects. The uncertainty in measured values of refractive index introduced by such imperfections increases as the wavelength decreases. The refractive indexes of samples containing such imperfections can be accurately measured in visible range, but not in the UV range. Preparation of samples of optical glasses having negligible levels of imperfections is difficult, expensive, and impractical for evaluating refractive index in the UV range for a large number of samples of Exemplary Glasses having high refractive index. It is preferred instead to develop models or correlations that allow for accurate estimates of the refractive index in the UV range from accurate values measured in the visible range, which is a wavelength range in which the effect of imperfections on the accuracy of the measurement of refractive index is minimal.

There are some known formulas for interpolation and extrapolation of the refractive index as a function of the wavelength, such as, for example, Sellmeier equation or Cauchi equation. However, for the glasses with very high refractive indexes, such as, for example, 2.0 or higher, extrapolation from visible range to the UV range may give biased values, which, in turn, may distort the evaluated internal transmittance.

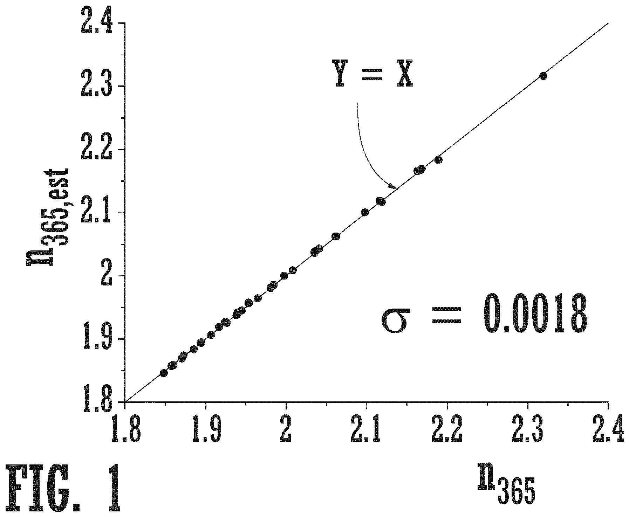

To get accurate and unbiased estimate of the refractive index in the UV range for purposes of the present disclosure, a correlation between the refractive indexes in the UV and visible ranges was developed. This correlation was evaluated from the available data on optical glasses with high refractive indexes ($n_d$ > 1.80) and negligible levels of imperfections reported in the literature. FIG. 1 shows the relationship between the quantity $n_{365,est}$ and the refractive index $n_{365}$ reported in the catalogue of commercial optical glasses manufactured by Hoya Corporation as referred above. The version available on January 8, 2023, was accessed and used to develop the correlation represented by formula (V). As follows from the plot shown in FIG. 1, the correlation is common to a wide range of high index optical glass compositions and provides an estimate characterized by the standard error of $\sigma$=0.0018, which is sufficient for accurate evaluation of the internal transmittance for purposes of the present disclosure.

After calculating the refractive index estimate parameter $n_{365,est}$ from formula (V), the refractive indexes at other wavelengths in the UV and blue ranges (between about 310 and 500 nm) are evaluated from the form of the Sellmeier equation given in formula (VI):

$$n_\lambda = 1 + B * \lambda^2 / (\lambda^2 - C), \quad (VI)$$

where $n_\lambda$ is the refractive index at wavelength $\lambda$, and B and C are empirical fitting parameters that can be evaluated from values of the refractive index of the sample at two different wavelengths. In the present disclosure, the refractive indexes in the UV range were evaluated from formula (VI), with the coefficients B and C being determined from the refractive index $n_F$ at the wavelength of 486.1 nm and the refractive index estimate parameter $n_{365,est}$ determined by formula (V).

When evaluating the refractive index based on published data that report only the refractive index $n_d$ and the Abbe number $v_d$, the refractive index $n_F$ can be measured or calculated from the following formula (VII):

$$n_F = n_d + ((n_d - 1) / v_d)) * (1 - (0.22071 + 0.0204 * \ln(v_d))) \quad (VII)$$

Formula (VII) is an empirical formula derived from known data for refractive index or Abbe number of commercial optical glasses available from multiple manufacturers. It allows evaluation of the value of $n_F$ with a standard error about 0.00002 unit, which is sufficient for the purposes of the present disclosure.

In the case when one or both of the quantities $n_d$ and $v_d$ are unknown, but the glass composition is reported, the unknown quantities can be evaluated by using the quantities $P_n$ and $P_v$ accordingly, which are calculated by formulas (XXIII) and (XXI) as explained below.

The blue transmittance attribute $Q_{420}$ is a quantity calculated by the following formula (VIII):

$$Q_{420} = -\ln(k_{365}) - B_{UV} * 0.36. \quad (VIII)$$

where $k_{365}$ is the light absorption coefficient defined above (formulas (I)-(III)) at a wavelength of 365 nm and $B_{uv}$ is the coefficient shown in formula (IV).

The blue transmittance attribute $Q_{420}$ given in formula (VIII) corresponds to a predicted contribution of composition to the internal transmittance at a wavelength of 420 nm. It is known in the art that the internal transmittance of glass depends not only on composition, but also on process conditions. As is discussed more fully below, it has been discovered herein for glasses of the present disclosure that internal transmittance over a specified wavelength range in the UV is essentially independent of process conditions and is primarily a function of composition. By analyzing internal transmittance attributes in the process-independent wavelength range (e.g. a part of the UV wavelength range) and extrapolating to the process-dependent wavelength range (e.g. visible), it becomes possible to predict the contribution of composition to internal transmittance in the process-dependent wavelength range and thus to separate the process-dependent contribution from the compositional contribution in the process-dependent wavelength range. With this capability, new process strategies can be developed to minimize deleterious effects of processing on internal transmittance so that high index glasses with high internal transmittance can be achieved. Of particular interest are high index glasses having high internal transmittance in the visible. Accordingly, glasses of the present disclosure preferably have high values of $Q_{420}$.

To illustrate the significance and determination of the blue transmittance attribute $Q_{420}$, we consider Exemplary Glass 18 of the present disclosure (see Table 5 below). Samples A-F of Exemplary Glass 18 were prepared under different processing conditions and tested for internal transmittance.

Samples A, B and C were extracted from a melt formed from 2500 grams of batch composition in a covered platinum crucible. The batch composition was heated to 1280°C and held for 2 hours, then cooled to 1200°C and held for an additional 2 hours, and then poured into three separate aliquots (corresponding to Samples A, B, and C) onto a steel plate, cooled down until becoming dark-red (that presumably corresponds to the temperature of about 500°C), then placed in an annealer and annealed at 630°C for 1 hour, finally cooled in air to room temperature, bleached (when the bleaching step was applied), then cut, polished and tested. Sample A was cut to a thickness of 2.20 mm without bleaching. The samples B and C were bleached for 14 days at 645°C. Sample B was then cut to a thickness of 1.00 mm and Sample C to a thickness of 6.96 mm. Samples D and E were extracted from a melt formed from 1000 grams of batch composition in a covered platinum crucible. The batch composition was heated to 1280°C and held for 2 hours, then cooled to 1170°C and held for an additional 2 hours, then poured into two separate aliquots (corresponding to Samples D and E) onto a steel plate, then cooled similar to the samples A to C, annealed at 630°C for 1 hour, and cooled in air to room temperature. Sample D was then cut to a thickness of 0.99 mm without bleaching. Sample E was bleached at 640°C for 14 days and then cut to a thickness of 7.03 mm. Sample F was melted from 15 grams of batch composition in a covered platinum crucible at 1300°C for 1 hour, the crucible was then placed on a water-cooled table and cooled to approximately 500°C, it was then reheated and annealed at 630°C for 1 hour, cooled to room temperature (all of the operations above performed keeping the sample in the crucible), then extracted from the crucible, cut to a thickness of 1.11 mm and polished. Sample F was not subjected to bleaching.

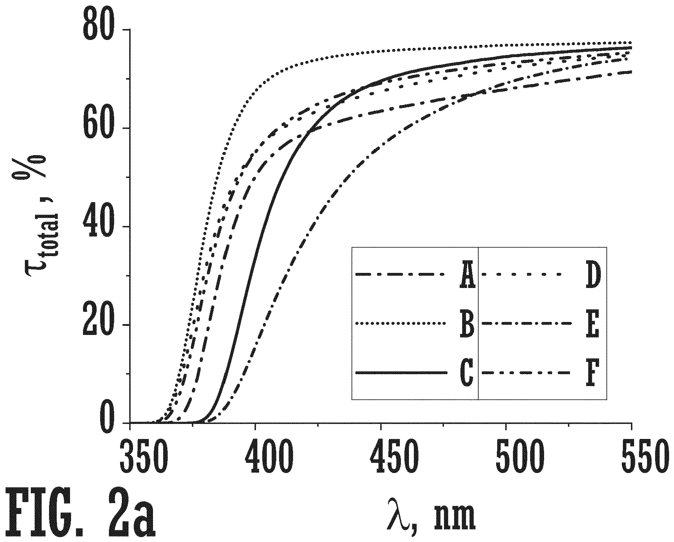

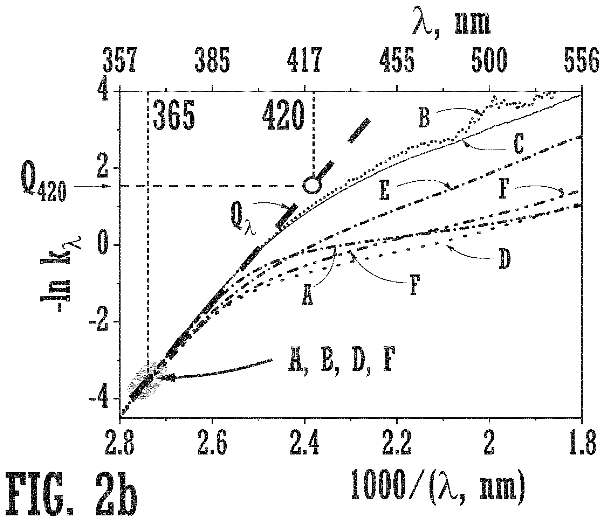

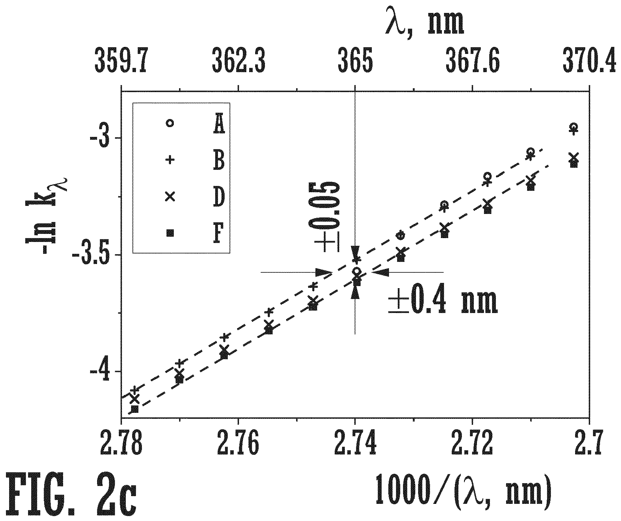

Transmittance and - $\ln(k_\lambda)$ data of Samples A-F are shown in FIGS 2a, b and c.

FIG. 2a shows the measured data in terms of percent of total transmittance $\tau_{total}$ versus wavelength $\lambda$, expressed in nanometers (nm).

FIG. 2b presents the data shown in FIG. 2a in terms of - $\ln(k_\lambda)$ where $k_\lambda$ is defined in formula (III) above. In order to present the data shown in FIG. 2b, it is necessary to convert the total transmittance data shown in FIG. 2A to internal transmittance at a thickness of 10 mm so that the light absorption coefficient k can be computed. The total transmittance $\tau_{total,d,\lambda}$ is converted to internal transmittance $\tau_{int,d,\lambda}$ by correcting for Fresnel losses using formula (IX):

$$\tau_{int,d,\lambda} = \tau_{total,d,\lambda}\left(\frac{2n_\lambda}{n_\lambda^2 + 1}\right) \qquad (IX)$$

where $\tau_{int,d,\lambda}$ is internal transmittance for a sample with thickness d at wavelength $\lambda$, $\tau_{total,d}$ is total transmittance for a sample with thickness d at wavelength $\lambda$, and $n_\lambda$ is the refractive index at wavelength $\lambda$. The value of $n_\lambda$ in formula (IX) can be measured or estimated by calculation using formula (VI) above (over the wavelength range from 310 nm to 500 nm or any subrange herein). Formula (II) above is used to compute the light absorption coefficient k from $\tau_{int,d,\lambda}$. FIG. 2b shows -$\ln(k_\lambda)$ derived from the total transmittance $\tau_{total,d,\lambda}$ data presented in FIG. 2a as a function of 1000/$\lambda$, where $\lambda$ is expressed in units of nm.

A noteworthy feature of FIG. 2b is convergence of the value of -$\ln(k_\lambda)$ at UV wavelengths (below about 370 nm). Without wishing to be bound by theory, convergence of -$\ln(k_\lambda)$ at short wavelength for samples of the same composition that have been subjected to different processing conditions suggests that the value of -$\ln(k_\lambda)$ at the indicated UV wavelengths is an attribute of the composition that is independent of processing conditions. FIG. 2c shows an enlargement of FIG. 2b in the wavelength range from about 360 nm to about 370 nm. Data for Samples A, B, D, and F at 1 nm increments are shown. Samples C and E are not included in FIG. 2c because the total transmittance $\tau_{total,d,\lambda}$ at UV wavelengths (below about 375 nm, see FIG. 2a) for these samples was extremely low (due to sample thickness) and could not be reliably measured. FIG. 2c shows the similarity in the values of -$\ln(k_\lambda)$ for Samples A, B, D, and F. FIG. 2c also shows that the dependence of -$\ln(k_\lambda)$ on 1000/$\lambda$ closely approximates a linear function. The best fit linear function in the wavelength range of linearity is designated $Q_\lambda$ herein.

Of interest to the present disclosure are glasses having high index and high internal transmittance in the blue. Embodiments herein seek to identify high-index glasses with compositions that intrinsically possess high internal transmittance in the blue. By "intrinsically" is meant that contribution to the internal transmittance in the blue that is essentially independent of processing conditions and dependent primarily on composition. Attempts to identify such glasses in the prior art have not been fully successful because the internal transmittance of high-index glasses in the blue is typically highly sensitive to processing conditions. Because of processing conditions, for example, glass compositions with intrinsically high internal transmittance in the blue may not be properly identified. Without wishing to be bound by theory, even though it is recognized that processing conditions affect internal transmittance in the blue, it is believed that for glass compositions determined herein to have high intrinsic internal transmittance in the blue, it is possible to identify process conditions that produce samples of the glass composition having a measured internal transmittance in the blue that approaches the intrinsic internal transmittance.

To facilitate identification of new glass compositions with high intrinsic internal transmittance in the blue, we consider extrapolation of the function $Q_\lambda$ from a UV wavelength range of linearity for -$\ln(k_\lambda)$ to visible wavelengths. An example of an extrapolation of the function $Q_\lambda$ is depicted as a dashed line in FIG. 2b. High values of $Q_\lambda$ in the blue signify high values of -$\ln(k_\lambda)$ in the blue, which in turn signify high values of the intrinsic internal transmittance $\tau_{int,10}$ in the blue. For purposes of the present disclosure, we consider a wavelength of 420 nm as a characteristic wavelength in the blue and define a quantity $Q_{420}$ as representative of the intrinsic internal transmittance of a glass composition in the blue, where the quantity $Q_{420}$ corresponds to the value of the function $Q_\lambda$ upon extrapolation to a wavelength of 420 nm and is referred to herein as a blue transmittance attribute. An illustrative depiction of the determination of $Q_{420}$ is shown in FIG. 2b.

When analyzing the data related to different glass compositions and different process conditions, it was empirically found that the dependence of -$\ln(k_\lambda)$ on 1000/$\lambda$ in all observed cases remained essentially linear, at least, within the range of wavelengths from 360 to 370 nm.

At wavelengths greater than 370 nm, the dependence remained essentially linear up to about 380-400 nm for most of the samples that were thermally bleached; typically, the nonlinear effects were observed when the values of -$\ln(k_\lambda)$ became greater than about +1.0, which approximately corresponds to an internal transmittance of 70% for a 10 mm thick sample. For samples that were not bleached, such as, for example, the samples A, D and F in FIG. 2b, the upper bound of linearity typically was around 370-380 nm for silica-free compositions and 380-400 nm for silica-containing compositions; more exact positions of the boundaries varied from composition to composition and/or depended on the melting and cooling conditions.

At wavelengths less than 360 nm, significant deviations from linearity were not observed. However, it should be noted that the glasses disclosed herein with high refractive indexes, such as, for example, greater than or equal to about 2.0, typically have very low transmittance below 360 nm, and this transmittance may be difficult to reliably measure at the wavelengths below 360 nm, unless using very thin samples. When testing samples of lower refractive indexes characterized by higher UV transmittance, linearity was typically observed at wavelengths greater than or equal to about 280-310 nm.

Accordingly, it can be concluded that in the vast majority of the studied cases, the relationship between $-\ln(k_\lambda)$ and $(1000/\lambda)$ can be considered essentially linear in the range of wavelengths from about 310 to about 370 nm; in the case when the samples are thermally bleached to improve the blue transmittance, the upper boundary of range of linearity is typically extended to the lesser of 400 nm and the wavelength corresponding to the value of $-\ln(k_\lambda)$ that is equal to about +1.0 (for a sample thickness of 10 mm).

The function $Q_\lambda$, as a best fit linear function to $-\ln(k_\lambda)$, can be represented by formula (IV) above, which is reproduced below:

$$Q_\lambda = A_{UV} + B_{UV} * 1000/\lambda, \qquad (IV)$$

where $A_{UV}$ and $B_{UV}$ are empirical coefficients resulting from a best fit of $-\ln(k_\lambda)$ as a function of $1000/\lambda$ in the range of linearity in the UV as described above. The blue transmittance attribute $Q_{420}$ is determined from formula (IV) at the wavelength $\lambda = 420$ nm.

The blue transmittance attribute $Q_{420}$ can alternatively be expressed in terms of $Q_\lambda$ by solving formula (IV) for $A_{UV}$ and substituting the result into formula (V) to obtain formula (X):

$$Q_{420} = Q_\lambda + B_{UV} \left(\frac{1000}{420} - \frac{1000}{\lambda}\right) \qquad (X)$$

In the UV wavelength range of linearity over which the best fit function for $Q_\lambda$ is determined (formula (IV)), the value of $Q_\lambda$ closely approximates $-\ln(k_\lambda)$, where $k_\lambda$ is the light absorption coefficient at wavelength $\lambda$. In this UV wavelength range, the blue transmittance attribute $Q_{420}$ can be expressed by formula (XI):

$$Q_{420} = -\ln(k_\lambda) + B_{UV} \left(\frac{1000}{420} - \frac{1000}{\lambda}\right) \qquad (XI)$$

For glass compositions of the present disclosure, the UV wavelength $\lambda = 365$ nm is expected to be within the region of linearity and for convenience is selected as a reference wavelength for the determination of the blue transmittance attribute $Q_{420}$. At $\lambda = 365$ nm, formula (XI) becomes formula (VIII) above, which is reproduced below:

$$Q_{420} = -\ln(k_{365}) - 0.36 B_{UV} \qquad (VIII)$$

To simplify determination of $Q_{420}$, it is desirable to rewrite formula (VIII) in terms of quantities that are readily measured or estimated. Transmittance is the quantity of relevance to the glass compositions of the present disclosure. Formula (VIII) can be rewritten as formula (XII) by expressing $k_{365}$ in terms of formula (III):

$$Q_{420} = -\ln\left(-\ln\left(\tau_{int,10,365}\right)\right) - 0.36 B_{UV} \qquad (XII)$$

where $\tau_{int,10,365}$ is internal transmittance at a wavelength of 365 nm for a sample having a thickness of 10 mm. For samples of arbitrary thickness d, formula (VIII) can be rewritten as formula (XIII) by expressing $k_{365}$ in terms of formula (II):

$$Q_{420} = -ln\left(-ln\left(\frac{\tau_{int,d,365}}{\left(d/10\right)}\right)\right) - 0.36B_{UV} \quad \text{(XIII)}$$

where $\tau_{int,d,365}$ is internal transmittance at a wavelength of 365 nm for a sample having a thickness of d mm.

Formula (XIII) can be rewritten in terms of total transmittance $\tau_{total,d,365}$ through formula (IX) above to obtain formula (XIV):

$$Q_{420} = -ln\left(-ln\left(\frac{\tau_{total,d,365}\left(\frac{2n_{365}}{n_{365}^2 + 1}\right)}{\left(d/10\right)}\right)\right) - 0.36B_{UV} \quad \text{(XIV)}$$

To simplify determination of $Q_{420}$, we substitute $n_{365,est}$ from formula (V) for $n_{365}$ in formula (XIV) to get formula (XV):

$$Q_{420} = -ln\left(-ln\left(\frac{\tau_{total,d,365}\left(\frac{2n_{365,est}}{n_{365,est}^2 + 1}\right)}{\left(d/10\right)}\right)\right) - 0.36B_{UV} \quad \text{(XV)}$$

For the Exemplary Glasses and Comparative Glasses of the present disclosure that were melted and tested by the Applicant, formula (XV) is used to compute $Q_{420}$.

For the Comparative Glasses taken from the literature sources, several variants of the calculation procedure were used depending on the availability of the data. The said variants of calculation are disclosed below.

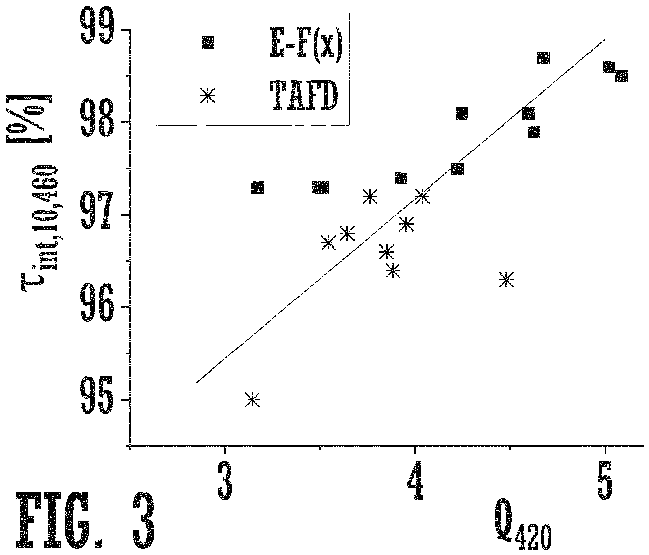

As noted above, the blue transmittance attribute $Q_{420}$ provides a guide to the intrinsic internal transmittance in the blue, which is an estimate of the internal transmittance in the blue due to glass composition independent of processing conditions. The utility of using the blue transmittance attribute $Q_{420}$ to estimate internal transmittance in the blue can be demonstrated by considering commercially available colorless optical glasses. As an illustration, FIG. 3 shows the relationship between the quantity $Q_{420}$ and internal transmittance $\tau_{int,10,460}$ at the wavelength $\lambda$=460 nm for 10 mm thick samples of commercial optical glasses available from HOYA Corporation according to the data taken from the catalogue referred above (see https://www.hoya-opticalworld.com/english/datadownload, accessed on Jan. 8, 2023). In FIG. 3, optical glasses of two categories are presented. The category labeled as "E-F(x)" (light flints) refers to the glass codes E-FEL1, E-FEL2, E-FL5, E-FL6, E-F$_2$, E-Fs, E-FD1L, E-FD2, E-FD4L, E-FD5, E-FD8, E-FD10L, E-FD13, E-FD15L, E-FD1, E-FD4, E-FD10, and E-FD15. The category "TAFD" (dense tantalum flints) refers to the glass codes TAFD33, TAFD35L, TAFD35, TAFD37A, TAFD45, TAFD55-W, TAFD55, and TAFD37.

For the commercial glasses depicted in FIG. 3, the quantity $Q_{420}$ was calculated from data given by the manufacturer for the internal transmittance of 10 mm thick samples at the wavelengths of 360 and 370 nm (corresponding to $\tau_{int,10,360}$ and $\tau_{int,10,370}$) by the following formula (XVI), which is derived from formula (XI) using the wavelength $\lambda$ = 360 nm:

$$Q_{420} = -ln(k_{360}) + B_{UV}\left(\frac{1000}{420} - \frac{1000}{360}\right) \quad \text{(XVI)}$$

which becomes formula (XVII) when formula (III) is incorporated into formula (XVI):

$$Q_{420} = -ln\left(-ln\left(\tau_{int,10,360}\right)\right) + B_{UV}\left(\frac{1000}{420} - \frac{1000}{360}\right) \quad \text{(XVII)}$$

where $B_{UV}$ is determined as formula (XVIII) from a linear fit of the internal transmittance between 360 nm and 370 nm:

$$B_{UV} = \frac{-ln\left(-\ln\left(\tau_{int,10,370}\right)\right) + ln\left(-\ln\left(\tau_{int,10,360}\right)\right)}{\left(\frac{1000}{370} - \frac{1000}{360}\right)} \qquad \text{(XVIII)}$$

The data points in FIG. 3 show the dependence of the internal transmittance $\tau_{int,10,460}$ (provided by the manufacturer) on the blue transmittance attribute (as computed from formula (XVII)). As one can see from the FIG. 3, for both light flints and dense tantalum flints, the values of the blue transmittance attribute $Q_{420}$ roughly correlate with the internal transmittance $\tau_{int,10,460}$ of 10 mm thick samples at the wavelength of 460 nm. Without wishing to be bound by theory, the results support the power of the blue transmittance attribute $Q_{420}$, which is based on internal transmittance in the UV (e.g. 360 nm -370 nm), to predict internal transmittance at longer wavelengths.

Abbe number $\nu_d$, blue transmittance attribute $Q_{420}$ and refractive index $n_d$ are properties of glass that can be predicted from the glass composition. A linear regression analysis of the Exemplary Glasses of the present disclosure in the EXAMPLES section below and other glass compositions reported in the literature was performed to determine equations that can predict the composition dependences of the Abbe number $\nu_d$, blue transmittance attribute $Q_{420}$ and refractive index $n_d$.

The training dataset of glass compositions satisfying the compositional limitations specified in Table 1 below and having measured values of the properties of interest, about 100 glass compositions for each property ($\nu_d$, $Q_{420}$ and $n_d$), was randomly selected from literature data presented in the publicly available SciGlass Information System database and from the Exemplary Glasses from the embodiments presented herein. The linear regression analysis on the above-specified dataset, with the exclusion of outliers, was used to determine the formulas (XXI), (XXII), and (XXIII). The resulting formulas are presented in Table 2 below.

Specifically when deriving the model for $Q_{420}$, the measured values were calculated from the data about the glass compositions for which, at least, transmittance at two wavelengths in the UV range were available.

When processing the data for the Comparative Examples taken from the literature sources, the following procedure was used to evaluate $Q_{420}$.

When the reported transmittance figures referred to internal transmittance, the values of $-\ln(k_\lambda)$ were calculated by formula (II) above.

When the reported transmittance figures referred to total transmittance, only the data with both of $n_d$ and $\nu_d$ reported directly were used. Then the refractive index $n_F$ was calculated by formula (VII) and $n_{365,est}$ by the formula (V), and then the refractive index in the range 310-500 nm was approximated by formula (VI). The refractive index calculated by formula (VI) was used to calculate the internal transmittance $\tau_{int,d}$ by formula (IX) and then $k_\lambda$ by formula (II) for the wavelengths at which the transmittance figures were reported, and the values of $-\ln(k_\lambda)$ were calculated.

When data were extracted from images, the images were programmatically digitized and transformed to numerical data, including the unit conversion to nanometers (for wavelength) and percent of total or internal transmittance (depending on what quantity was reported in the source document) when needed.

Only the values of $-\ln(k_\lambda)$ that were greater than or equal to -5 and less than or equal to +1 corresponding to the wavelengths $\lambda$ from 310 nm to 400 nm were selected for the further analysis. In the case when two such data points (i. e. two pairs $\lambda$ vs. $-\ln(k_\lambda)$, where 310 nm $\leq \lambda \leq$ 400 nm and $-5 \leq -\ln(k_\lambda) \leq +1$) were not available, the data set for the corresponding composition was not used. In the case when more than two such data points were available in the range from 360 to 370 nm, linear regression of $-\ln(k_\lambda)$ versus (1000/$\lambda$[nm]) was performed through all of these data points to determine the value of $-\ln(k_{365})$ and the coefficient $B_{UV}$ of formula (VIII).

In the case when two or more data points satisfying the above-stated conditions were available, but none or only one of them referred to the wavelength from 360 to 370 nm, two data points corresponding to the wavelengths $\lambda_1$ and $\lambda_2$ were selected for the further calculations and the values $-\ln(k_{\lambda 1})$ and $-\ln(k_{\lambda 2})$ were calculated for them. When more than two wavelengths were available, the two wavelengths closest to 365 nm were selected, preferably corresponding to $\lambda_1 \leq$ 365 nm and $\lambda_2 >$ 365 nm; for example, if three data points were available for the wavelengths 340, 370 and 390 nm then the wavelengths of $\lambda_1$ = 340 nm and $\lambda_2$ = 370 nm were selected. Then, the values of $-\ln(k_{360})$ and $B_{UV}$ were calculated by following formulas (XIX) and (XX):

$$B_{UV} = \frac{-\ln(k_{\lambda 1}) + \ln(k_{\lambda 2})}{\frac{1000}{\lambda_1} - \frac{1000}{\lambda_2}}; \qquad \text{(XIX)}$$

$$-\ln(k_{360}) = -\ln(k_{\lambda 1}) + B_{UV} * \left(\frac{1000}{360} - \frac{1000}{\lambda_1}\right). \qquad \text{(XX)}$$

Then, the value of $Q_{420}$ was calculated for each glass composition by formula (XVIII). The dataset of about 50 of such literature data points was then combined with the data for 50 randomly selected Exemplary Glasses of the present disclosure presented in Table 5, and the regression analysis was performed. Finally, three non-linear effects were identified for antimony oxide ($Sb_2O_3$), bismuth oxide ($Bi_2O_3$) and the sum of alkali metal oxides ($Alk_2O$), and the data for the compositions that included these species were analyzed separately, which resulted in additional terms for these species included in the formula (XXII) below.

In addition to the above-specified training sets, another subset of glass compositions satisfying the compositional limitations of Table 1 was used as a validation set to evaluate the ability to interpolate within the compositional limitations of Table 1 and was used to establish the standard deviations specified in the Table 2. An external dataset of prior art glass compositions, also randomly selected from the SciGlass Information System database, was used to evaluate the ability to predict the properties ($v_d$, $Q_{420}$, and $n_d$) outside of the compositional limitations of Table 1 with a reasonable accuracy. The data for the external dataset were selected by using same procedure as disclosed above for the training dataset. Multiple iterations of this process were performed in order to determine the best formula for each property ($v_d$, $Q_{420}$, and $n_d$). Formulas (XXI), (XXII), (XXIII) are the results of the analysis.

The data for the Comparative Glass compositions used in the linear regression modeling, including the training dataset, validation dataset and external dataset were obtained from the publicly available SciGlass Information System database. Formulas (XXI), (XXII) and (XXIII) below were obtained from the linear regression analysis and used to predict the Abbe number $v_d$, blue transmittance attribute $Q_{420}$ and refractive index $n_d$, respectively, of the glasses:

$$P_v = 33.17 + 0.081348 * La_2O_3 - 0.41202 * TiO_2 + 0.20789 * B_2O_3 + 0.17549 * SiO_2 +$$
$$0.078439 * ZrO_2 - 0.58620 * Nb_2O_5 + 0.092226 * CaO + 0.076225 * BaO + 0.064344 *$$
$$Y_2O_3 - 0.14136 * ZnO + 0.16651 * Gd_2O_3 + 0.081754 * Na_2O - 0.12348 * WO_3 +$$
$$0.21238 * Al_2O_3 + 0.051232 * Li_2O - 0.38171 * PbO - 0.67510 * Bi_2O_3 + 0.027632 *$$
$$GeO_2 - 0.17926 * TeO_2 + 0.17466 * Er_2O_3 + 0.25172 * Yb_2O_3 + 0.15621 * K_2O +$$
$$0.066001 * SrO + 0.15965 * MgO,$$

(XXI)

$$P_{Q420} = -\ln(\exp(-(2.153 + 0.022544 * La_2O_3 - 0.051067 * TiO_2 + 0.020256 * B_2O_3 +$$
$$0.015419 * SiO_2 + 0.023223 * CaO + 0.030580 * BaO - 0.027830 * Y_2O_3 - 0.018973 *$$
$$ZnO - 0.050965 * Gd_2O_3 + 0.010653 * Na_2O - 0.036583 * WO_3 - 0.019948 * Al_2O_3 +$$
$$0.014393 * Li_2O + 0.071064 * PbO - 0.33385 * Bi_2O_3 - 0.099409 * TeO_2 + 0.10072 *$$
$$Er_2O_3 + 0.047677 * Yb_2O_3 + 0.0098813 * K_2O + 0.0084835 * SrO + 0.029429 * MgO)) +$$
$$7 * \max(0, Sb_2O_3 - 0.015 * Alk_2O) + 0.4 * Bi_2O_3),$$

(XXII)

$$P_n = 1.863 + 0.0054878 * La_2O_3 + 0.002915 * TiO_2 - 0.0041892 * B_2O_3 - 0.0036169 *$$
$$SiO_2 + 0.0023451 * ZrO_2 + 0.0062709 * Nb_2O_5 + 0.0034815 * Y_2O_3 + 0.00018842 * ZnO$$
$$+ 0.0062484 * Gd_2O_3 - 0.0028025 * Na_2O + 0.002711 * WO_3 - 0.0041 * Al_2O_3 -$$
$$0.0014274 * Li_2O + 0.0053973 * PbO + 0.011116 * Bi_2O_3 - 0.0019963 * GeO_2 +$$
$$0.00060157 * TeO_2 + 0.0056358 * Er_2O_3 + 0.0045709 * Yb_2O_3 - 0.0044944 * K_2O -$$
$$0.0013229 * MgO.$$

(XXIII)

In Formulas (XXI), (XXII) and (XXIII) and Tables 1 and 2, the dispersion parameter $P_v$ is a parameter that predicts the Abbe number $v_d$, calculated from the components of the glass composition expressed in mol.%; the transmittance evaluation parameter $P_{Q420}$ is a parameter that predicts the blue transmittance attribute $Q_{420}$, calculated from the components of the glass composition expressed in mol.%; and the refractive index parameter $P_n$ is a parameter that predicts the refractive index $n_d$ at 587.56 nm, calculated from the components of the glass composition expressed in mol.%. For the transmittance evaluation parameter $P_{Q420}$, a logarithmic scale was applied when performing the regression analysis.

In Formulas (XXI), (XXII) and (XXIII), each component of the glass composition is listed in terms of its chemical formula, where the chemical formula refers to the concentration of the component expressed in mol.%. For example, for purposes of Formulas (XXI), (XXII) and (XXIII), $La_2O_3$ refers to the concentration of $La_2O_3$, expressed in mol.%, in the glass composition. It is understood that not all components listed in Formulas (XXI), (XXII) and (XXIII) are necessarily present in a particular glass composition and that Formulas (XXI), (XXII) and (XXIII) are equally valid for glass compositions that contain less than all of the components listed in the formulas. It is further understood that Formulas (XXI), (XXII) and (XXIII) are also valid for glass compositions within the scope and claims of the present disclosure that contain components in addition to the components listed in the formulas. If a component listed in Formulas (XXI), (XXII) and (XXIII) is absent in a particular glass composition, the concentration of the component in the glass composition is 0 mol.% and the contribution of the component to the value calculated from the formulas is zero.

**Table 1. Composition Space Used for Modeling**

| Property | $v_d$ | | $Q_{420}$ | | $n_d$ | |
|---|---|---|---|---|---|---|
| Component limits | Min, mol.% | Max, mol.% | Min, mol.% | Max, mol.% | Min, mol.% | Max, mol.% |
| $La_2O_3$ | 10 | 40 | Not limited | Not limited | 10 | 40 |
| $TiO_2$ | 10 | 40 | Not limited | Not limited | 10 | 40 |
| $B_2O_3$ | 10 | 30 | 10 | 30 | 10 | 30 |
| $SiO_2$ | 0 | 20 | 0 | 20 | 0 | 20 |
| $ZrO_2$ | 0 | 10 | Not limited | Not limited | 0 | 10 |
| $Nb_2O_5$ | 0 | 15 | Not limited | Not limited | 0 | 15 |
| CaO | 0 | 15 | Not limited | Not limited | 0 | 15 |
| BaO | 0 | 10 | Not limited | Not limited | 0 | 10 |
| $Y_2O_3$ | 0 | 10 | Not limited | Not limited | 0 | 10 |
| ZnO | 0 | 10 | 0 | 10 | 0 | 10 |
| $Gd_2O_3$ | 0 | 10 | Not limited | Not limited | 0 | 10 |
| $Na_2O$ | 0 | 10 | Not limited | Not limited | 0 | 10 |
| $WO_3$ | 0 | 30 | Not limited | Not limited | 0 | 30 |
| $Al_2O_3$ | 0 | 10 | Not limited | Not limited | 0 | 10 |
| $Li_2O$ | 0 | 8 | Not limited | Not limited | 0 | 8 |
| F | 0 | 2 [at.%] | 0 | 1 [at.%] | 0 | 2 [at.%] |
| $Bi_2O_3$ | 0 | 25 | 0 | 15 | 0 | 25 |
| $TeO_2$ | Not limited | Not limited | 0 | 10 | Not limited | Not limited |
| PbO | Not limited | Not limited | 0 | 5 | Not limited | Not limited |
| $P_2O_5$ | Not limited | Not limited | 0 | 10 | Not limited | Not limited |
| V + Fe + Cu + Cr + Co + Ni + Th | Not limited | Not limited | 0 | 1 [at.%] | Not limited | Not limited |
| $GeO_2$ | Not limited | Not limited | 0 | 10 | Not limited | Not limited |
| $Sb_2O_3$ | Not limited | Not limited | 0 | 0.5 | Not limited | Not limited |
| CdO | Not limited | Not limited | 0 | 10 | Not limited | Not limited |
| MgO + CaO + SrO + BaO | Not limited | Not limited | 0 | 15 | Not limited | Not limited |
| $Li_2O + Na_2O + K_2O$ | Not limited | Not limited | 0 | 15 | Not limited | Not limited |
| Other species | 0 | Not limited | 0 | Not limited | 0 | Not limited |

**Table 2. Property prediction models**

| Property | Abbreviation | Unit | Predicting Parameter | Regression Formula | Composition Unit | Standard Deviation |
|---|---|---|---|---|---|---|
| Abbe number | $\nu_d$ | | $P_\nu$ | Formula (XXI) | Mol.% | 2.1 |
| Blue transmittance attribute | $Q_{420}$ | | $P_{Q420}$ | Formula (XXII) | Mol.% | 0.24 |
| Refractive index at 587.56 nm | $n_d$ | | $P_n$ | Formula (XXIII) | Mol.% | 0.018 |

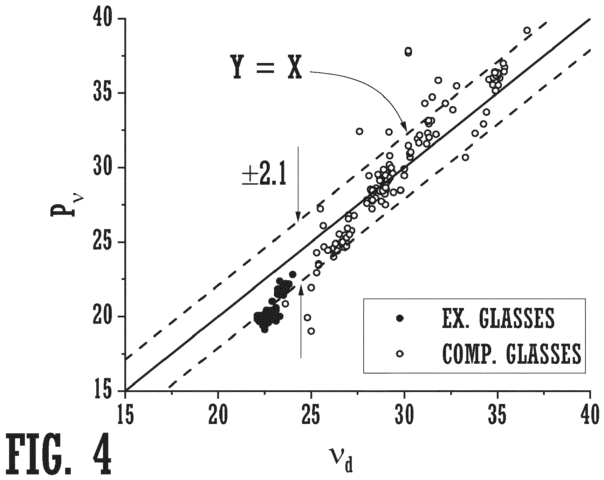

FIG. 4 is a plot of the dispersion parameter $P_\nu$ calculated by Formula (XXI) as a function of measured Abbe number $\nu_d$ for some Comparative Glasses ("Comp. Glasses") taken from the literature and some Exemplary Glasses ("Ex. Glasses"). As illustrated by the data in FIG. 4, the compositional dependence of the dispersion parameter $P_\nu$ had a standard deviation within a range of $\pm$ 2.1 unit of the measured $\nu_d$ for the majority of glasses, which corresponds to the standard deviation specified in Table 2.

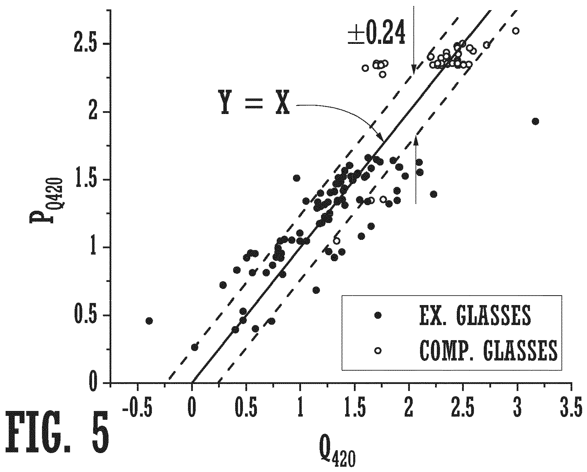

FIG. 5 is a plot of the transmittance evaluation parameter $P_{Q420}$ calculated by Formula (XXII) as a function of measured blue transmittance attribute $Q_{420}$ for some comparative glasses ("Comp. Glasses") taken from the literature and some Exemplary Glasses ("Ex. Glasses"). As illustrated by the data in FIG. 5, the compositional dependence of the transmittance evaluation parameter $P_{Q420}$ had a standard deviation within a range of $\pm$ 0.24 unit of the measured $Q_{420}$ for the majority of glasses, which corresponds to the standard deviation specified in Table 2.

The blue transmittance attribute $Q_{420}$ for the Comparative Glass compositions was calculated by the procedure disclosed above that referred for the selection of the Training Dataset for modeling.

In the case when the transmittance data were reported in terms of total transmittance in the source document for a Comparative Glass, the data was converted to internal transmittance using formula (IX) above. The refractive indexes needed to convert total transmittance to internal transmittance were evaluated from the reported data available in the source document, such as refractive indexes at specific wavelengths (such as 587.6 nm, 589.3 nm, 486.1 nm, etc.) and Abbe numbers. When some of these data were not available, the refractive index $n_d$ and Abbe number $\nu_d$ were calculated from the glass compositions by using the corresponding formulas (XXIII) and (XXI) of the present disclosure.

When the available reported data in the source document consisted of refractive index $n_d$ and the Abbe number $\nu_d$, the refractive index $n_F$ (corresponding to the wavelength of 486.1 nm) was evaluated by the following formula (VII):

$$n_F = n_d + ((n_d - 1) / \nu_d)) * (1 - (0.22071 + 0.0204 * \ln(\nu_d))). \quad (VII)$$

The formula (VII) was derived from an extensive dataset available for the refractive indexes of commercial optical glasses reported at different wavelengths by multiple manufacturers. It allows evaluation of the value of $n_F$ with the standard error about 0.00002 unit, which is sufficient for the purposes of the present disclosure.

Then, the refractive indexes in the UV range were evaluated by using the same algorithm as was described above related to the Exemplary Glasses of the present disclosure (formula (VI)). The evaluated refractive indexes were used for calculation of the Fresnel losses and then conversion of total transmittance to internal transmittance, then calculating the light absorption coefficient k as disclosed herein.

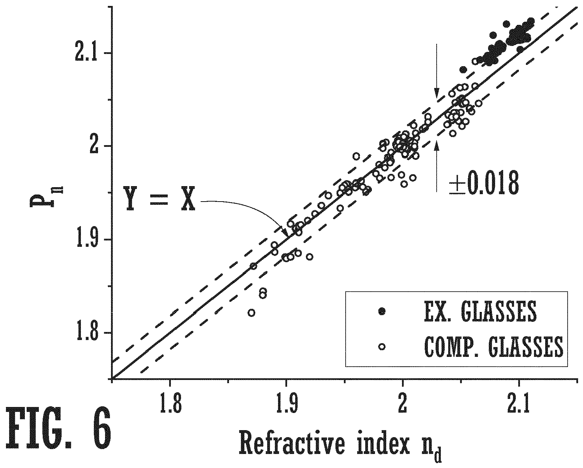

FIG. 6 is a plot of the refractive index parameter $P_n$ calculated by Formula (XXIII) as a function of measured refractive index $n_d$ for some Comparative Glasses ("Comp. Glasses") taken from the literature and some Exemplary Glasses ("Ex. Glasses"). As illustrated by the data in FIG. 6, the compositional dependence of the refractive index parameter $P_n$ had a standard deviation within a range of $\pm$ 0.018 unit of the measured $n_d$ for the majority of glasses, which corresponds to the standard deviation specified in Table 2.

Table 3 identifies the combination of components and their respective amounts according to some embodiments of the present disclosure. The Exemplary Glasses A in Table 3 may include additional components according to any aspects of the present disclosure as described herein.

**Table 3: Exemplary Glasses A**

| Component | Amount (mol.%) |
|---|---|
| $Nb_2O_5$ | 0.3 to 30.0 mol.% |

(continued)

| Component | Amount (mol.%) |
|---|---|
| $ZrO_2$ | 0.3 to 15.0 mol.% |
| $TiO_2$ | 0.0 to 28.0 mol.% |
| $La_2O_3$ | 0.0 to 28.0 mol.% |
| $P_2O_5$ | 0.0 to 10.0 mol.% |
| PbO | 0.0 to 10.0 mol.% |
| $GeO_2$ | 0.0 to 10.0 mol.% |
| Sum of $(B_2O_3+SiO_2)$ | 5.0 to 35.0 mol.% |
| Total sum of rare earth metal oxides $RE_mO_n$ | 0.0 to 30.0 mol.% |

Exemplary Glasses A according to embodiments of the present disclosure may satisfy the following condition:

$$0 \leq \min(RO, RE_mO_n, TiO_2) \,[mol.\%] \leq 10,$$

where $\min(RO, RE_mO_n, TiO_2)$ refers to the smallest of the concentrations of RO, $RE_mO_n$ and $TiO_2$, expressed in mol.%, and the chemical formulas refer to the amounts of components in glass, expressed in mol.%.

According to some embodiments of the present disclosure, Exemplary Glasses A may also have a refractive index at 587.56 nm $n_d$ from 2.092 to 2.25.

According to some embodiments of the present disclosure, Exemplary Glasses A may also have an Abbe number $v_d$ of less than or equal to 28.

Table 4 identifies the combination of components and their respective amounts according to some embodiments of the present disclosure. The Exemplary Glasses B in Table 4 may include additional components according to any aspects of the present disclosure as described herein.

**Table 4: Exemplary Glasses B**

| Component | Amount (mol.%) |
|---|---|
| $B_2O_3$ | 10.0 to 30.0 mol.% |
| $TiO_2$ | 0.3 to 28.5 mol.% |
| SiOz | 0.0 to 30.0 mol.% |
| $P_2O_5$ | 0.0 to 30.0 mol.% |
| PbO | 0.0 to 10.0 mol.% |
| Sum of $(Nb_2O_5+La_2O_3+Gd_2O_3+Y_2O_3)$ | 0.0 to 44.5 mol.% |
| Total sum of rare earth metal oxides $RE_mO_n$ | 0.0 to 28.5 mol.% |
| Sum of $(R_2O+RO)$ | 0.0 to 25.0 mol.% |

Exemplary Glasses B according to embodiments of the present disclosure may have a refractive index at 587.56 nm $n_d$ of greater than or equal to 1.8.

According to some embodiments of the present disclosure, Exemplary Glasses B may also satisfy the following condition:

$$Q_{420} - (31.1 - 14.1 * n_d) > 0.000,$$

where $Q_{420}$ is a blue transmittance attribute, and $n_d$ is a refractive index at 587.56 nm.

According to some embodiments of the present disclosure, Exemplary Glasses B may also satisfy the following condition:

$$Q_{420} - (31.25 - 14.1 * n_d) > 0.000,$$

where $Q_{420}$ is a blue transmittance attribute, and $n_d$ is a refractive index at 587.56 nm.

## EXAMPLES

The following examples describe various features and advantages provided by the disclosure, and are in no way intended to limit the invention and appended claims.

To prepare the glass samples for some exemplary glasses of the present disclosure, 15 to 5000 grams of each sample (content of intended components in the as-batched composition was more than 99.99 wt %) was melted from batch raw materials. Three types of melting and cooling conditions were applied.

In the first process condition, a 15 gram charge of the batch composition was melted in a covered platinum crucible at 1300-1400°C and held for one hour, then optionally held for three hours at a temperature in the range 1100-1150°C, but above the liquidus temperature, and then cooled in 3-5 min by placing the crucible on a water-cooled table. Then the samples were annealed at a temperature 630-650°C for 1 hour.

In the second process condition, a 1000 to 2500 grams charge of batch composition was melted in a covered platinum crucible at 1250-1300°C and held for two hours, then held for 1-3 hours at a temperature in the range 1150-1200°C, but above the liquidus temperature, to equilibrate at this temperature, and then poured on a steel plate to form one or several samples with sizes between $50 \times 50 \times 15\ mm^3$ to $150 \times 100 \times 20\ mm^3$, then annealed at a temperature 630-650°C for 1 hour.

In the third process condition, a 3500 to 5000 gram charge of batch composition was melted in a covered platinum crucible via Joule heating. The crucible was held at 1250°C and filled with the batch composition over a time period of 1.5 hours. The temperature was then raised to 1300°C and the crucible was held for one hour. During this step, the melt was stirred at 60 rpm for 30 minutes. Stirring was then paused for the 30 minutes. Stirring at 60 rpm was resumed and the temperature was then decreased to 1170-1200°C where crucible was allowed to equilibrate for 30 minutes and at a reduced stirring speed of 20 rpm. A delivery tube was then heated above the liquidus temperature of the glass and the melt was cast on a cooled graphite table to form glass bars having approximate dimensions of $(900...1200) \times 50 \times 25\ mm^3$. The bars were inspected under an optical microscope (up to 500X) to check for crystallization and, except for a surface layer (100-300 µm) in some cases, all were determined to be essentially free of a crystalline phase (in the bulk).

For each of the three process conditions, the glass samples were annealed at 625-645°C for one hour and then cooled down to room temperature at 1-10°C/min. Afterwards, some of samples were held at 640-650°C for 1-2 weeks to improve the transmittance (below, this treatment is called a "bleaching step") and tested for refractive index and transmittance; other samples were tested without the bleaching step. When using the bleaching step, the glasses were heated from the room temperature to the temperature of bleaching at a rate from 3 to 5 °C/min. After bleaching, the glasses were cooled to room temperature at a rate from 1 to 3 °C/min.

No chemical analysis of the tested samples was performed because chemical analysis was performed for similar samples prepared in independent meltings using XRF (X-ray fluorescence - for all oxides, except for $B_2O_3$ and $Li_2O$), ICP-MS method (inductively coupled plasma mass spectrometry - for $B_2O_3$) and FES method (flame emission spectrometry - for $Li_2O$). These analyses gave deviations from the as-batched compositions within $\pm 2.0$ mass % for the major components, which is equivalently less than about 1 mol%.

In Tables 5 and 6, the abbreviation "n" with a subscript refers to the refractive index at a corresponding wavelength in nm; for example, $n_{632.8}$ refers to the refractive index at wavelengths of 632.8 nm. $T_{liq}$ refers to liquidus temperature, $T_g$ refers to glass transition temperature, $d_{RT}$ refers to density at room temperature, $min(RO, RE_mO_n, TiO_2)$ refers to the smallest of the concentrations (in mol%) of RO, $RE_mO_n$, and $TiO_2$, $k_{363}$ is the light absorption coefficient (in units of $cm^{-1}$) at a wavelength of 365 nm, and $k_{380}$ is the light absorption coefficient (in units of $cm^{-1}$) at a wavelength of 380 nm.

The values of coefficient $B_{UV}$ and the blue transmittance parameter $Q_{420}$ for Exemplary Glasses and Comparative Glasses were calculated by using the procedure disclosed above that referred to evaluation of these quantities for the Training Dataset, depending on the information available for the specific compositions.

**Table 5. Exemplary Glass Compositions**

| Exemplary Glass | | 1 | 2 | 3 | 4 | 5 | 6 | 7 | 8 |
|---|---|---|---|---|---|---|---|---|---|
| Composition - mol.% | | | | | | | | | |
| $WO_3$ | mol.% | 21.09 | 20.34 | 21.99 | 21.81 | 21.65 | 19.49 | 20.79 | 21.99 |
| $B_2O_3$ | mol.% | 22.00 | 21.49 | 17.09 | 18.53 | 19.78 | 22.69 | 18.99 | 18.79 |
| $La_2O_3$ | mol.% | 18.38 | 18.59 | 18.99 | 18.51 | 18.42 | 19.99 | 18.99 | 17.79 |
| $TiO_2$ | mol.% | 12.39 | 15.20 | 16.98 | 15.30 | 14.67 | 14.19 | 14.99 | 15.51 |
| $Nb_2O_5$ | mol.% | 17.09 | 16.34 | 16.79 | 17.72 | 17.52 | 16.49 | 17.99 | 17.69 |
| $ZrO_2$ | mol.% | 7.10 | 7.09 | 7.10 | 6.83 | 6.94 | 7.10 | 7.00 | 7.19 |
| $Y_2O_3$ | mol.% | 0.90 | 0.90 | 1.00 | 0.99 | 0.97 | 0 | 1.00 | 1.00 |
| BaO | mol.% | 0.60 | 0 | 0 | 0.27 | 0 | 0 | 0.20 | 0 |
| CaO | mol.% | 0.41 | 0 | 0 | 0 | 0 | 0 | 0 | 0 |
| $SiO_2$ | mol.% | 0.0319 | 0.0315 | 0.0323 | 0.0323 | 0.0321 | 0.0316 | 0.0324 | 0.0321 |
| $Ta_2O_5$ | mol.% | 0.0173 | 0.0171 | 0.0176 | 0.0176 | 0.0175 | 0.0172 | 0.0176 | 0.0174 |
| Composition constraints | | | | | | | | | |
| $B_2O_3 + SiO_2$ | mol.% | 22.03 | 21.52 | 17.12 | 18.56 | 19.81 | 22.73 | 19.02 | 18.82 |
| $min(RO, RE_mO_n, TiO_2)$ | mol.% | 1.009 | 0 | 0 | 0.2661 | 0 | 0 | 0.2028 | 0 |
| $Nb_2O_5 + La_2O_3 + Gd_2O_3 + Y_2O_3$ | mol.% | 36.37 | 35.83 | 36.78 | 37.22 | 36.91 | 36.48 | 37.98 | 36.48 |
| $R_2O + RO$ | mol.% | 1.009 | 0 | 0 | 0.2661 | 0 | 0 | 0.2028 | 0 |
| Measured properties | | | | | | | | | |
| $n_d$ | | | | 2.1085 | 2.1027 | 2.0924 | 2.0789 | 2.1019 | 2.0964 |
| $n_F$ | | | | 2.1440 | 2.1373 | 2.1271 | 2.1115 | 2.1359 | 2.1313 |
| $n_{531.9}$ | | | | 2.1248 | 2.1187 | 2.1084 | 2.0940 | 2.1176 | 2.1125 |
| $n_{632.8}$ | | | | 2.0988 | 2.0931 | 2.0829 | 2.0699 | 2.0924 | 2.0870 |
| $n_{365,est}$ | | | | 2.1735 | 2.1654 | 2.1557 | 2.1370 | 2.1631 | 2.1601 |

(continued)

| Measured properties | | | | | | | | | |
|---|---|---|---|---|---|---|---|---|---|
| $\nu_d$ | | | | | 22.5 | 22.6 | 22.7 | 23.8 | 23.3 | 22.7 |
| $d_{RT}$ | g/cm3 | 5.392 | 5.394 | 5.516 | 5.474 | 5.422 | 5.399 | 5.486 | 5.442 |
| $-\ln(k_{365})$ | | | | | -3.6797 | -3.4399 | -3.5559 | -3.0254 | -3.3223 | -3.6428 |
| $-\ln(k_{380})$ | | | | | -2.3940 | -1.8236 | -2.1253 | -1.4212 | -1.6585 | -2.1683 |
| $B_{UV}$ | | | | | -13.648 | -14.738 | -14.699 | -14.223 | -14.480 | -14.042 |
| $T_{liq}$ | °C | 1065 | 1112 | 1115 | 1117 | 1099 | 1111 | 1135 | 1110 |
| $T_g$ | °C | 645 | 640 | 654 | 646 | 645 | 646 | | |
| $Q_{420}$ | | | | | 1.2335 | 1.8928 | 1.1863 | 2.0950 | 1.8905 | 1.4124 |
| Predicted and calculated properties | | | | | | | | | |
| $P_n$ [for $n_d$] | | 2.0918 | 2.0966 | 2.1301 | 2.1212 | 2.1121 | 2.0918 | 2.1203 | 2.1179 |
| $P_\nu$ [for $\nu_d$] | | 22.22 | 21.41 | 19.34 | 19.77 | 20.40 | 22.16 | 20.01 | 19.68 |
| $P_{Q420}$ [for $Q_{420}$] | | 1.6122 | 1.4627 | 1.2282 | 1.3477 | 1.4012 | 1.6262 | 1.4185 | 1.3112 |
| Exemplary Glass | | 1 | 2 | 3 | 4 | 5 | 6 | 7 | 8 |
| $P_{Q420} - (31.1 - 14.1 * P_n)$ | | 0.0072 | -0.0754 | 0.1624 | 0.1562 | 0.0820 | 0.0202 | 0.2151 | 0.0734 |
| $P_{Q420} - (31.25 - 14.1 * P_n)$ | | -0.1428 | -0.2254 | 0.0124 | 0.0062 | -0.0680 | -0.1298 | 0.0651 | -0.0766 |
| **Table 5 Continued** | | | | | | | | | |
| Exemplary Glass | | 9 | 10 | 11 | 12 | 13 | 14 | 15 | 16 |
| Composition - mol.% | | | | | | | | | |
| $WO_3$ | mol.% | 21.88 | 21.99 | 21.99 | 21.79 | 21.79 | 21.85 | 21.64 | 21.78 |
| $B_2O_3$ | mol.% | 19.30 | 18.79 | 18.79 | 19.30 | 19.30 | 19.15 | 19.80 | 19.28 |
| $La_2O_3$ | mol.% | 17.79 | 17.59 | 17.44 | 18.03 | 18.06 | 17.97 | 18.42 | 18.03 |
| $TiO_2$ | mol.% | 15.19 | 15.19 | 15.20 | 15.08 | 14.93 | 15.02 | 14.67 | 15.09 |
| $Nb_2O_5$ | mol.% | 17.59 | 17.79 | 17.79 | 17.59 | 17.64 | 17.68 | 17.52 | 17.58 |

(continued)

| Table 5 Continued | | | | | | | | | |
|---|---|---|---|---|---|---|---|---|---|
| Exemplary Glass | | 9 | 10 | 11 | 12 | 13 | 14 | 15 | 16 |
| Composition - mol.% | | | | | | | | | |
| $ZrO_2$ | mol.% | 7.19 | 6.99 | 6.99 | 7.10 | 7.00 | 6.99 | 6.94 | 7.09 |
| $Y_2O_3$ | mol.% | 1.00 | 1.20 | 1.35 | 1.05 | 1.03 | 1.04 | 0.95 | 1.05 |
| BaO | mol.% | 0 | 0.30 | 0.40 | 0 | 0.10 | 0.18 | 0 | 0 |
| $Sb_2O_3$ | mol.% | 0 | 0 | 0 | 0.0132 | 0.0133 | 0.0133 | 0.0133 | 0.0529 |
| $Bi_2O_3$ | mol.% | 0 | 0.0995 | 0 | 0 | 0.0996 | 0.0622 | 0 | 0 |
| $SiO_2$ | mol.% | 0.032 | 0.0322 | 0.0321 | 0.0321 | 0.0322 | 0.0322 | 0.0321 | 0.0321 |
| $Ta_2O_5$ | mol.% | 0.0174 | 0.0175 | 0.0174 | 0.0175 | 0.0175 | 0.0175 | 0.0175 | 0.0175 |
| Composition constraints | | | | | | | | | |
| $B_2O_3 + SiO_2$ | mol.% | 19.34 | 18.82 | 18.82 | 19.33 | 19.33 | 19.18 | 19.83 | 19.31 |
| $min(RO, RE_mO_n, TiO_2)$ | mol.% | 0 | 0.3024 | 0.4021 | 0 | 0.1009 | 0.1764 | 0 | 0 |
| $Nb_2O_5 + La_2O_3 + Gd_2O_3 + Y_2O_3$ | mol.% | 36.38 | 36.59 | 36.58 | 36.67 | 36.73 | 36.70 | 36.88 | 36.66 |
| $R_2O + RO$ | mol.% | 0 | 0.3024 | 0.4021 | 0 | 0.1009 | 0.1764 | 0 | 0 |
| Measured properties | | | | | | | | | |
| $n_d$ | | 2.1005 | 2.1007 | 2.0994 | 2.0984 | 2.0984 | 2.0987 | 2.0942 | 2.0972 |
| $n_F$ | | 2.1353 | 2.1357 | 2.1344 | 2.1335 | 2.1335 | 2.1338 | 2.1288 | 2.1321 |
| $n_{531.9}$ | | 2.1166 | 2.1169 | 2.1155 | 2.1145 | 2.1146 | 2.1149 | 2.1101 | 2.1133 |
| $n_{632.8}$ | | 2.0909 | 2.0911 | 2.0897 | 2.0886 | 2.0886 | 2.0889 | 2.0846 | 2.0875 |
| $n_{365,est}$ | | 2.1639 | 2.1646 | 2.1635 | 2.1626 | 2.1628 | 2.1631 | 2.1573 | 2.1611 |
| $\nu_d$ | | 22.6 | 22.6 | 22.6 | 22.6 | 22.5 | 22.5 | 22.7 | 22.2 |
| $d_{RT}$ | $g/cm^3$ | 5.459 | 5.456 | 5.446 | 5.447 | 5.459 | 5.453 | 5.444 | 5.448 |
| $-ln(k_{363})$ | | -3.6507 | -3.5806 | -3.5066 | -3.5871 | -3.6279 | -3.6412 | -3.4656 | -3.9322 |

| Measured properties | | | | | | | | | |
|---|---|---|---|---|---|---|---|---|---|
| $-\ln(k_{380})$ | | -2.2165 | -1.9760 | -1.8691 | -2.1915 | -2.1274 | -2.0499 | -1.9187 | -2.7510 |
| $B_{UV}$ | | -14.623 | -14.535 | -14.788 | -12.904 | -13.731 | -13.959 | -13.963 | -12.626 |
| $T_{liq}$ | °C | 1107 | 1105 | 1106 | 1105 | 1132 | 1117 | 1126 | |
| Exemplary Glass | | 9 | 10 | 11 | 12 | 13 | 14 | 15 | 16 |
| $Q_{420}$ | | 1.0528 | 1.6518 | 1.8173 | 1.0583 | 1.3153 | 1.3841 | 1.5611 | 0.47070 |
| Predicted and calculated properties | | | | | | | | | |
| $P_n$ [for $n_d$] | | 2.1139 | 2.1179 | 2.1164 | 2.1146 | 2.1155 | 2.1159 | 2.1119 | 2.1146 |
| $P_v$ [for $v_d$] | | 19.99 | 19.69 | 19.76 | 20.06 | 20.03 | 19.95 | 20.41 | 20.06 |
| $P_{Q420}$ [for $Q_{420}$] | | 1.3417 | 1.1577 | 1.3216 | 1.0479 | 0.9257 | 0.9661 | 1.0826 | 0.4641 |
| $P_{Q420}$ - (31.1 - 14.1 * $P_n$) | | 0.0478 | -0.0801 | 0.0632 | -0.2356 | -0.3464 | -0.2996 | -0.2399 | -0.8194 |
| $P_{Q420}$ - (31.25 - 14.1 * $P_n$) | | -0.1022 | -0.2301 | -0.0868 | -0.3856 | -0.4964 | -0.4496 | -0.3899 | -0.9694 |

**Table 5 Continued**

| Exemplary Glass | | 17 | 18 | 19 | 20 | 21 | 22 | 23 | 24 |
|---|---|---|---|---|---|---|---|---|---|
| Composition - mol.% | | | | | | | | | |
| $WO_3$ | mol.% | 21.78 | 21.79 | 22.25 | 22.79 | 22.25 | 21.74 | 22.74 | 22.74 |
| $B_2O_3$ | mol.% | 19.30 | 19.30 | 18.38 | 18.18 | 18.38 | 19.48 | 18.16 | 18.15 |
| $La_2O_3$ | mol.% | 18.03 | 18.04 | 17.01 | 16.99 | 16.99 | 18.04 | 16.95 | 16.96 |
| $TiO_2$ | mol.% | 15.08 | 15.08 | 14.44 | 14.59 | 14.44 | 14.90 | 14.55 | 14.56 |
| $Nb_2O_5$ | mol.% | 17.58 | 17.59 | 17.78 | 17.79 | 17.79 | 17.65 | 17.75 | 17.75 |
| $ZrO_2$ | mol.% | 7.10 | 7.10 | 7.00 | 6.99 | 7.00 | 6.89 | 6.99 | 6.98 |
| $Y_2O_3$ | mol.% | 1.05 | 1.05 | 1.20 | 1.00 | 1.20 | 0.86 | 1.00 | 1.00 |
| BaO | mol.% | 0 | 0 | 1.54 | 1.60 | 1.54 | 0.13 | 1.60 | 1.60 |
| CaO | mol.% | 0 | 0 | 0 | 0 | 0 | 0 | 0.0344 | 0.0345 |

(continued)

| Table 5 Continued | | | | | | | | | |
|---|---|---|---|---|---|---|---|---|---|
| Exemplary Glass | | 17 | 18 | 19 | 20 | 21 | 22 | 23 | 24 |
| Composition - mol.% | | | | | | | | | |
| $Sb_2O_3$ | mol.% | 0.0265 | 0 | 0 | 0 | 0.0133 | 0 | 0.0133 | 0.0331 |
| $Bi_2O_3$ | mol.% | 0 | 0 | 0.32 | 0 | 0.32 | 0.26 | 0 | 0 |
| $Na_2O$ | mol.% | 0 | 0 | 0 | 0 | 0 | 0 | 0.0312 | 0.0312 |
| $CeO_2$ | mol.% | 0 | 0 | 0 | 0 | 0 | 0 | 0.10 | 0.10 |
| $SiO_2$ | mol.% | 0.0321 | 0.0321 | 0.0323 | 0.0322 | 0.0323 | 0.0322 | 0.0321 | 0.0322 |
| $Ta_2O_5$ | mol.% | 0.0175 | 0.0175 | 0.0176 | 0.0175 | 0.0176 | 0.0175 | 0.0175 | 0.0175 |
| $SrO$ | mol.% | 0 | 0 | 0.0187 | 0.0187 | 0.0187 | 0 | 0.0186 | 0.0186 |
| Composition constraints | | | | | | | | | |
| $B_2O_3 + SiO_2$ | mol.% | 19.33 | 19.33 | 18.41 | 18.21 | 18.41 | 19.52 | 18.21 | 18.19 |
| $min(RO,RE_mO_n,TiO_2)$ | mol.% | 0 | 0 | 1.562 | 1.619 | 1.561 | 0.1262 | 1.653 | 1.654 |
| $Nb_2O_5 + La_2O_3 + Gd_2O_3 + Y_2O_3$ | mol.% | 36.66 | 36.68 | 36.00 | 35.78 | 35.98 | 36.54 | 35.72 | 35.73 |
| $R_2O + RO$ | mol.% | 0 | 0 | 1.562 | 1.619 | 1.561 | 0.1262 | 1.684 | 1.685 |
| Measured properties | | | | | | | | | |
| $n_d$ | | 2.0971 | 2.0971 | 2.1003 | 2.0979 | 2.0998 | 2.0984 | 2.0985 | 2.0986 |
| $n_F$ | | 2.1322 | 2.1318 | 2.1359 | 2.1332 | 2.1352 | 2.1337 | 2.1339 | 2.1340 |
| Exemplary Glass | | 17 | 18 | 19 | 20 | 21 | 22 | 23 | 24 |
| $n_{531.9}$ | | 2.1132 | 2.1131 | 2.1167 | 2.1142 | 2.1161 | 2.1146 | 2.1148 | 2.1149 |
| $n_{632.8}$ | | 2.0874 | 2.0875 | 2.0903 | 2.0881 | 2.0900 | 2.0885 | 2.0888 | 2.0889 |
| $n_{365,est}$ | | 2.1614 | 2.1605 | 2.1660 | 2.1628 | 2.1649 | 2.1633 | 2.1635 | 2.1636 |
| $v_d$ | | 22.3 | 22.7 | 22.3 | 22.4 | 22.4 | 22.4 | 22.4 | 22.4 |
| $d_{RT}$ | g/cm$^3$ | 5.452 | 5.444 | 5.485 | 5.470 | 5.483 | 5.461 | | |

| Exemplary Glass | | 17 | 18 | 19 | 20 | 21 | 22 | 23 | 24 |
|---|---|---|---|---|---|---|---|---|---|
| $-\ln(k_{365})$ | | -3.8825 | -3.4998 | | -3.5683 | -3.8449 | -3.6927 | -3.5685 | |
| $-\ln(k_{380})$ | | -2.5560 | -2.0670 | -2.1852 | -2.1620 | -2.3183 | -2.1111 | -2.1900 | -2.4179 |
| $B_{UV}$ | | -13.322 | -13.619 | -14.400 | -14.340 | -13.866 | -13.766 | -12.470 | -11.268 |
| $T_{liq}$ | °C | | 1111 | 1113 | 1111 | 1116 | 1116 | 1105 | |
| $T_g$ | °C | | 641 | | | | | | |
| $Q_{420}$ | | 0.68502 | 1.3895 | | 1.1888 | 1.1468 | 1.2630 | 0.92085 | |
| Predicted and calculated properties | | | | | | | | | |
| $P_n$ [for $n_d$] | | 2.1146 | 2.1147 | 2.1173 | 2.1157 | 2.1173 | 2.1153 | 2.1151 | 2.1152 |
| $P_v$ [for $\nu_d$] | | 20.07 | 20.06 | 19.79 | 19.82 | 19.78 | 19.95 | 19.86 | 19.85 |
| $P_{Q420}$ [for $Q_{420}$] | | 0.8137 | 1.3545 | 0.8905 | 1.3475 | 0.6858 | 0.9687 | 1.0538 | 0.7173 |
| $P_{Q420} - (31.1 - 14.1 * P_n)$ | | -0.4709 | 0.0717 | -0.3553 | 0.0791 | -0.5608 | -0.3050 | -0.2228 | -0.5580 |
| $P_{Q420} - (31.25 - 14.1 * P_n)$ | | -0.6209 | -0.0783 | -0.5053 | -0.0709 | -0.7108 | -0.4550 | -0.3728 | -0.7080 |
| **Table 5 Continued** | | | | | | | | | |
| Exemplary Glass | | 25 | 26 | 27 | 28 | 29 | 30 | 31 | 32 |
| Composition - mol.% | | | | | | | | | |
| $WO_3$ | mol. % | 21.74 | 20.94 | 20.94 | 21.75 | 22.73 | 21.97 | 21.75 | 22.74 |
| $B_2O_3$ | mol. % | 19.26 | 18.95 | 18.96 | 18.55 | 18.16 | 18.73 | 18.55 | 18.16 |
| $La_2O_3$ | mol. % | 18.00 | 19.95 | 18.95 | 18.45 | 16.95 | 18.02 | 18.46 | 16.96 |
| $TiO_2$ | mol. % | 15.05 | 14.97 | 14.97 | 15.27 | 14.55 | 15.17 | 15.27 | 14.55 |
| $Nb_2O_5$ | mol. % | 17.55 | 17.95 | 17.95 | 17.66 | 17.75 | 17.78 | 17.66 | 17.76 |
| $ZrO_2$ | mol. % | 7.08 | 6.98 | 6.99 | 7.08 | 6.99 | 6.98 | 7.08 | 6.99 |
| $Y_2O_3$ | mol. % | 1.05 | 0 | 1.00 | 1.00 | 1.00 | 0.75 | 1.00 | 1.00 |

EP 4 421 045 A1

(continued)

| Exemplary Glass | | 25 | 26 | 27 | 28 | 29 | 30 | 31 | 32 |
|---|---|---|---|---|---|---|---|---|---|
| BaO | mol. % | 0 | 0 | 0 | 0 | 1.60 | 0 | 0 | 1.60 |
| CaO | mol. % | 0.0344 | 0.0349 | 0.0347 | 0.0346 | 0.0344 | 0.21 | 0.0346 | 0.0344 |
| Sb$_2$O$_3$ | mol. % | 0.033 | 0.0201 | 0.02 | 0.02 | 0.0199 | 0.0132 | 0.0067 | 0.0066 |
| ZnO | mol. % | 0 | 0 | 0 | 0 | 0 | 0.19 | 0 | 0 |
| Na$_2$O | mol. % | 0.0311 | 0.0315 | 0.0314 | 0.0313 | 0.0312 | 0.0311 | 0.0313 | 0.0312 |
| CeO$_2$ | mol. % | 0.11 | 0.12 | 0.11 | 0.11 | 0.10 | 0.11 | 0.11 | 0.10 |
| SiO$_2$ | mol. % | 0.0321 | 0.0325 | 0.0324 | 0.0323 | 0.0321 | 0.0321 | 0.0323 | 0.0321 |
| Ta$_2$O$_5$ | mol. % | 0.0174 | 0.0177 | 0.0176 | 0.0176 | 0.0175 | 0.0175 | 0.0176 | 0.0175 |
| SrO | mol. % | 0 | 0 | 0 | 0 | 0.0186 | 0 | 0 | 0.0186 |
| Composition constraints | | | | | | | | | |
| B$_2$O$_3$ + SiO$_2$ | mol. % | 19.30 | 18.99 | 19.00 | 18.59 | 18.21 | 18.78 | 18.59 | 18.20 |
| min(RO,RE$_m$O$_n$,TiO$_2$) | mol. % | 0.03437 | 0.03487 | 0.034688 | 0.034600 | 1.653 | 0.3963 | 0.034600 | 1.653 |
| Nb$_2$O$_5$ + La$_2$O$_3$ + Gd$_2$O$_3$ + Y$_2$O$_3$ | mol. % | 36.63 | 37.92 | 37.92 | 37.12 | 35.73 | 36.57 | 37.14 | 35.74 |
| R$_2$O + RO | mol. % | 0.065 47 | 0.066 42 | 0.066 06 | 0.065 91 | 1.684 | 0.4274 | 0.065 91 | 1.684 |
| Measured properties | | | | | | | | | |
| n$_d$ | | 2.0987 | 2.102 | 2.1002 | 2.1012 | 2.0992 | 2.1029 | | |
| n$_F$ | | 2.1339 | 2.1371 | 2.1353 | 2.1366 | 2.1350 | 2.1384 | | |
| n$_{531.9}$ | | 2.1149 | 2.1181 | 2.1164 | 2.1175 | 2.1157 | 2.1192 | | |
| n$_{632.8}$ | | 2.0891 | 2.0922 | 2.0904 | 2.0913 | 2.0893 | 2.0930 | | |
| n$_{365,est}$ | | 2.1631 | 2.1661 | 2.1643 | 2.1661 | 2.1654 | 2.1680 | | |
| v$_d$ | | 22.5 | 22.6 | 22.6 | 22.4 | 22.1 | 22.4 | | |
| d$_{RT}$ | g/cm3 | | 5.497 | 5.470 | 5.478 | 5.478 | 5.476 | 5.475 | 5.470 |
| -ln(k$_{365}$) | | -3.7082 | -3.5268 | -3.5411 | -3.6217 | -3.7000 | -3.6377 | | |

(continued)

| Measured properties | | | | | | | | |
|---|---|---|---|---|---|---|---|---|
| $-\ln(k_{380})$ | | -2.3743 | -2.0770 | -2.2046 | -2.2922 | -2.2223 | -2.2739 | | |
| $B_{UV}$ | | -11.104 | -12.005 | -12.042 | -12.342 | -12.435 | -12.874 | | |
| $T_{liq}$ | °C | 1095 | | | | | | 1115 | 1095 |
| Exemplary Glass | | 25 | 26 | 27 | 28 | 29 | 30 | 31 | 32 |
| $Q_{420}$ | | 0.2892 6 | 0.7948 7 | 0.7941 8 | 0.8194 5 | 0.7767 2 | 0.9970 0 | | |
| Predicted and calculated properties | | | | | | | | |
| $P_n$ [for $n_d$] | | 2.1142 | 2.1224 | 2.1203 | 2.1207 | 2.1151 | 2.1176 | 2.1208 | 2.1152 |
| $P_v$ [for $v_d$] | | 20.09 | 20.00 | 19.99 | 19.83 | 19.86 | 19.74 | 19.82 | 19.85 |
| $P_{Q420}$ [for $Q_{420}$] | | 0.7224 | 0.9929 | 0.9633 | 0.9223 | 0.9291 | 1.047 | 1.1895 | 1.1968 |
| $P_{Q420} - (31.1 - 14.1 * P_n)$ | | -0.5672 | -0.1810 | -0.2399 | -0.2753 | -0.3478 | -0.1947 | -0.0070 | -0.079 0 |
| $P_{Q420} - (31.25 - 14.1 * P_n)$ | | -0.7172 | -0.3310 | -0.3899 | -0.4253 | -0.4978 | -0.3447 | -0.1570 | -0.229 0 |

**Table 5 Continued**

| Exemplary Glass | | 33 | 34 | 35 | 36 | 37 | 38 | 39 | 40 |
|---|---|---|---|---|---|---|---|---|---|
| Composition - mol.% | | | | | | | | | |
| $WO_3$ | mol.% | 20.17 | 20.47 | 21.12 | 21.04 | 20.95 | 20.79 | 20.99 | 21.94 |
| $B_2O_3$ | mol.% | 21.79 | 21.31 | 20.20 | 20.07 | 20.19 | 18.99 | 19.84 | 17.92 |
| $La_2O_3$ | mol.% | 19.09 | 19.11 | 19.72 | 19.35 | 20.13 | 19.99 | 20.06 | 18.46 |
| $TiO_2$ | mol.% | 12.85 | 12.84 | 12.21 | 12.39 | 12.02 | 14.99 | 13.29 | 14.96 |
| $Nb_2O_5$ | mol.% | 16.49 | 16.61 | 17.16 | 17.12 | 17.47 | 17.99 | 17.22 | 17.84 |
| $ZrO_2$ | mol.% | 7.51 | 7.67 | 8.23 | 8.27 | 8.30 | 7.00 | 8.14 | 7.57 |
| $Y_2O_3$ | mol.% | 0 | 0.37 | 0 | 0 | 0 | 0 | 0 | 1.01 |
| BaO | mol.% | 0.96 | 0.76 | 0.65 | 0.86 | 0.45 | 0.10 | 0.20 | 0.0637 |
| CaO | mol.% | 1.08 | 0.82 | 0.66 | 0.86 | 0.45 | 0.10 | 0.21 | 0.0696 |

(continued)

| Table 5 Continued | | | | | | | | | |
|---|---|---|---|---|---|---|---|---|---|
| Exemplary Glass | | 33 | 34 | 35 | 36 | 37 | 38 | 39 | 40 |
| Composition - mol.% | | | | | | | | | |
| $Bi_2O_3$ | mol.% | 0 | 0 | 0 | 0 | 0 | 0 | 0 | 0.12 |
| $SiO_2$ | mol.% | 0.0316 | 0.0318 | 0.0323 | 0.0322 | 0.0325 | 0.0325 | 0.0324 | 0.0325 |
| $Ta_2O_5$ | mol.% | 0.0172 | 0.0173 | 0.0176 | 0.0175 | 0.0177 | 0.0177 | 0.0176 | 0.0177 |
| Composition constraints | | | | | | | | | |
| $B_2O_3 + SiO_2$ | mol.% | 21.83 | 21.34 | 20.23 | 20.10 | 20.22 | 19.02 | 19.87 | 17.95 |
| $min(RO, RE_mO_n, TiO_2)$ | mol.% | 2.047 | 1.577 | 1.304 | 1.719 | 0.8995 | 0.2063 | 0.4117 | 0.1333 |
| $Nb_2O_5 + La_2O_3 + Gd_2O_3 + Y_2O_3$ | mol.% | 35.58 | 36.09 | 36.88 | 36.46 | 37.60 | 37.98 | 37.28 | 37.31 |
| $R_2O + RO$ | mol.% | 2.047 | 1.577 | 1.304 | 1.719 | 0.8995 | 0.2063 | 0.4117 | 0.1333 |
| Measured properties | | | | | | | | | |
| $n_d$ | | | | 2.076 | 2.0842 | 2.0857 | 2.0823 | 2.0987 | 2.0916 | |
| $n_F$ | | | | 2.1096 | | | | 2.1315 | 2.1251 | |
| $n_{531.9}$ | | | | 2.0918 | 2.0998 | 2.1012 | 2.0978 | 2.1140 | 2.1071 | |
| $n_{632.8}$ | | | | 2.0673 | 2.0753 | 2.0768 | 2.0735 | 2.0892 | 2.0822 | |
| $n_{365,est}$ | | | | 2.1359 | | | | 2.1556 | 2.1515 | |
| Exemplary Glass | | | 33 | 34 | 35 | 36 | 37 | 38 | 39 | 40 |
| $\nu_d$ | | | | 23.3 | | | | 22.8 | 23.5 | |
| dpi | $g/cm^3$ | 5.384 | 5.392 | 5.485 | 5.479 | 5.470 | 5.441 | 5.461 | |
| $-ln(k_{365})$ | | | | | -3.1809 | -2.9452 | -3.1509 | -3.5088 | | |
| $-ln(k_{380})$ | | | | | -1.7384 | -1.5440 | -1.7428 | -2.0798 | -1.7565 | |
| Buv | | | | | -13.562 | -13.333 | -13.263 | -13.487 | -13.194 | |
| $T_g$ | °C | | | | | | | 643 | | |

| Exemplary Glass | | 33 | 34 | 35 | 36 | 37 | 38 | 39 | 40 |
|---|---|---|---|---|---|---|---|---|---|
| $Q_{420}$ | | | | 1.7015 | 1.8546 | 1.6238 | 1.3309 | | |
| Predicted and calculated properties | | | | | | | | | |
| $P_n$ [for $n_d$] | | 2.0895 | 2.0948 | 2.1063 | 2.1048 | 2.1096 | 2.1223 | 2.1126 | 2.1266 |
| $P_v$ [for $v_d$] | | 22.57 | 22.37 | 22.04 | 21.98 | 21.96 | 20.03 | 21.44 | 19.67 |
| $P_{Q420}$ [for $Q_{420}$] | | 1.6859 | 1.6436 | 1.6462 | 1.640 | 1.6604 | 1.4686 | 1.5721 | 1.1431 |
| $P_{Q420} - (31.1 - 14.1 * P_n)$ | | 0.0478 | 0.0806 | 0.2444 | 0.2183 | 0.3054 | 0.2931 | 0.2596 | 0.0284 |
| $P_{Q420} - (31.25 - 14.1 * P_n)$ | | -0.1022 | -0.0694 | 0.0944 | 0.0683 | 0.1554 | 0.1431 | 0.1096 | -0.1216 |

**Table 5 Continued**

| Exemplary Glass | | 41 | 42 | 43 | 44 | 45 | 46 | 47 | 48 |
|---|---|---|---|---|---|---|---|---|---|
| Composition - mol.% | | | | | | | | | |
| $WO_3$ | mol.% | 21.83 | 21.67 | 21.69 | 21.68 | 21.99 | 22.09 | 22.34 | 22.34 |
| $B_2O_3$ | mol.% | 18.65 | 19.57 | 18.01 | 17.99 | 17.90 | 17.88 | 17.90 | 17.88 |
| $La_2O_3$ | mol.% | 17.73 | 16.78 | 19.79 | 19.78 | 18.59 | 18.29 | 18.29 | 18.29 |
| $TiO_2$ | mol.% | 14.44 | 13.79 | 15.99 | 15.99 | 14.99 | 15.75 | 15.36 | 16.50 |
| $Nb_2O_5$ | mol.% | 17.80 | 17.74 | 16.89 | 16.89 | 17.99 | 17.24 | 17.61 | 16.49 |
| $ZrO_2$ | mol.% | 7.80 | 8.08 | 7.20 | 7.20 | 7.00 | 7.14 | 7.14 | 7.15 |
| $Y_2O_3$ | mol.% | 1.39 | 1.87 | 0 | 0 | 1.00 | 1.30 | 1.30 | 1.30 |
| BaO | mol.% | 0.10 | 0.16 | 0 | 0 | 0.50 | 0.25 | 0 | 0 |
| CaO | mol.% | 0.10 | 0.17 | 0 | 0 | 0 | 0 | 0 | 0 |
| $Li_2O$ | mol.% | 0 | 0 | 0.39 | 0.13 | 0 | 0 | 0 | 0 |
| $Bi_2O_3$ | mol.% | 0.12 | 0.12 | 0 | 0 | 0 | 0 | 0 | 0 |
| $K_2O$ | mol.% | 0 | 0 | 0 | 0.29 | 0 | 0 | 0 | 0 |
| $SiO_2$ | mol.% | 0.0323 | 0.0319 | 0.0323 | 0.0323 | 0.0326 | 0.0323 | 0.0324 | 0.0321 |

EP 4 421 045 A1

| Table 5 Continued | | | | | | | | | |
|---|---|---|---|---|---|---|---|---|---|
| Exemplary Glass | | 41 | 42 | 43 | 44 | 45 | 46 | 47 | 48 |
| Composition - mol.% | | | | | | | | | |
| $Ta_2O_3$ | mol.% | 0.0175 | 0.0174 | 0.0176 | 0.0176 | 0.0177 | 0.0176 | 0.0176 | 0.0174 |
| Composition constraints | | | | | | | | | |
| $B_2O_3 + SiO_2$ | mol.% | 18.68 | 19.60 | 18.04 | 18.02 | 17.93 | 17.91 | 17.94 | 17.91 |
| $min(RO,RE_mO_n,TiO_2)$ | mol.% | 0.2048 | 0.3338 | 0 | 0 | 0.4975 | 0.2529 | 0 | 0 |
| $Nb_2O_5 + La_2O_3 + Gd_2O_3 + Y_2O_3$ | mol.% | 36.91 | 36.39 | 36.69 | 36.67 | 37.58 | 36.83 | 37.20 | 36.08 |
| Exemplary Glass | | 41 | 42 | 43 | 44 | 45 | 46 | 47 | 48 |
| $R_2O + RO$ | mol.% | 0.2048 | 0.3338 | 0.3897 | 0.4185 | 0.4975 | 0.2529 | 0 | 0 |
| Measured properties | | | | | | | | | |
| $n_d$ | | | | | | | 2.0983 | | 2.0972 |
| nF | | | | | | | 2.1332 | | 2.1321 |
| n531.9 | | | | | | | 2.1144 | | 2.1133 |
| n632.8 | | | | | | | 2.0885 | | 2.0874 |
| $n_{365,est}$ | | | | | | | 2.1620 | | 2.1609 |
| $\nu_d$ | | | | | | | 22.7 | | 22.6 |
| $d_{RT}$ | g/cm$^3$ | | | 5.456 | 5.467 | | 5.441 | | 5.446 |
| $-ln(k_{380})$ | | | | | | | -2.1712 | | -2.1322 |
| Buv | | | | | | | -11.784 | | -12.482 |
| $T_{liq}$ | °C | | | 1113 | | 1118 | | 1119 | |
| $T_g$ | °C | | | | | | | 641 | |
| Predicted and calculated properties | | | | | | | | | |
| $P_n$ [for $n_d$] | | 2.1193 | 2.110 | 2.1237 | 2.1228 | 2.1259 | 2.1235 | 2.1253 | 2.1217 |
| $P_\nu$ [for $\nu_d$] | | 20.06 | 20.55 | 19.95 | 19.98 | 19.62 | 19.72 | 19.62 | 19.80 |

(continued)

| Predicted and calculated properties | | | | | | | | |
|---|---|---|---|---|---|---|---|---|
| $P_{Q420}$ [for $Q_{420}$] | | 1.162 | 1.173 | 1.3604 | 1.3587 | 1.3528 | 1.2872 | 1.2906 | 1.2321 |
| $P_{Q420}$ - (31.1- 14.1 * $P_n$) | | -0.0557 | -0.1762 | 0.2047 | 0.1902 | 0.2287 | 0.1292 | 0.1575 | 0.0485 |
| $P_{Q420}$ - (31.25 - 14.1 * $P_n$) | | -0.2057 | -0.3262 | 0.0547 | 0.0402 | 0.0787 | -0.0208 | 0.0075 | -0.1015 |

| **Table 5 Continued** | | | | | | | | | |
|---|---|---|---|---|---|---|---|---|---|
| Exemplary Glass | | 49 | 50 | 51 | 52 | 53 | 54 | 55 | 56 |
| Composition - mol.% | | | | | | | | | |
| $WO_3$ | mol.% | 20.93 | 20.11 | 22.02 | 21.99 | 22.01 | 22.04 | 22.04 | 20.13 |
| $B_2O_3$ | mol.% | 20.00 | 22.12 | 16.59 | 17.35 | 17.44 | 17.46 | 17.95 | 22.12 |
| $La_2O_3$ | mol.% | 18.21 | 18.77 | 19.25 | 18.84 | 18.85 | 18.87 | 18.63 | 18.77 |
| $TiO_2$ | mol.% | 16.31 | 14.74 | 17.27 | 15.78 | 16.73 | 17.48 | 17.32 | 14.24 |
| $Nb_2O_5$ | mol.% | 16.61 | 16.24 | 16.81 | 17.63 | 16.67 | 15.97 | 15.74 | 16.73 |
| $ZrO_2$ | mol.% | 6.99 | 7.07 | 7.00 | 7.00 | 7.01 | 7.01 | 7.02 | 7.06 |
| $Y_2O_3$ | mol.% | 0.90 | 0.90 | 1.00 | 1.00 | 1.00 | 1.01 | 1.00 | 0.90 |
| BaO | mol.% | 0 | 0 | 0 | 0.36 | 0.24 | 0.13 | 0.25 | 0 |
| $SiO_2$ | mol.% | 0.0316 | 0.0315 | 0.0324 | 0.0325 | 0.0322 | 0.032 | 0.0319 | 0.0316 |
| $Ta_2O_3$ | mol.% | 0.0172 | 0.0171 | 0.0176 | 0.0177 | 0.0175 | 0.0131 | 0.013 | 0.0172 |
| Composition constraints | | | | | | | | | |
| $B_2O_3 + SiO_2$ | mol.% | 20.03 | 22.15 | 16.63 | 17.38 | 17.47 | 17.49 | 17.98 | 22.15 |
| $min(RO,RE_mO_n,TiO_2)$ | mol.% | 0 | 0 | 0 | 0.3569 | 0.2399 | 0.1254 | 0.2496 | 0 |
| Exemplary Glass | | 49 | 50 | 51 | 52 | 53 | 54 | 55 | 56 |
| $Nb_2O_3 + La_2O_3 + Gd_2O_3 + Y_2O_3$ | mol.% | 35.72 | 35.91 | 37.06 | 37.48 | 36.52 | 35.84 | 35.38 | 36.40 |
| $R_2O + RO$ | mol.% | 0 | 0 | 0 | 0.3569 | 0.2399 | 0.1254 | 0.2496 | 0 |

(continued)

| | | 57 | 58 | 59 | 60 | 61 | 62 | 63 | 64 |
|---|---|---|---|---|---|---|---|---|---|
| **Measured properties** | | | | | | | | | |
| $n_d$ | | | 2.0728 | 2.1099 | 2.1058 | 2.1045 | 2.1027 | 2.0989 | |
| $n_F$ | | | 2.1059 | 2.1454 | 2.1410 | 2.1396 | 2.1379 | 2.1341 | |
| $n_{531.9}$ | | | 2.0881 | 2.1262 | 2.1220 | 2.1207 | 2.1189 | 2.1151 | |
| $n_{632.8}$ | | | 2.0637 | 2.1004 | 2.0962 | 2.0949 | 2.0929 | 2.0892 | |
| $n_{365,est}$ | | | 2.1324 | 2.1748 | 2.1702 | 2.1686 | 2.1670 | 2.1635 | |
| $v_d$ | | | 23.2 | 22.5 | 22.4 | 22.7 | 22.6 | 22.4 | |
| $d_{RT}$ | g/cm³ | | 5.366 | 5.524 | 5.490 | 5.488 | 5.487 | | |
| $-\ln(k_{363})$ | | | -3.4063 | -3.6634 | -3.6566 | -3.6417 | -3.6598 | -3.6333 | |
| $-\ln(k_{380})$ | | | -1.9599 | -2.4000 | -2.3500 | -2.1591 | -2.3864 | -2.1732 | |
| $B_{UV}$ | | | -13.645 | -13.686 | -13.455 | -13.649 | -13.649 | -13.493 | |
| $T_{liq}$ | °C | 1115 | 1096 | | | | | | 1092 |
| $Q_{420}$ | | | 0.96636 | 1.2637 | 1.1873 | 1.2721 | 1.2539 | 1.2240 | |
| **Predicted and calculated properties** | | | | | | | | | |
| $P_n$ [for $n_d$] | | 2.107 | 2.0923 | 2.1344 | 2.1297 | 2.1262 | 2.1241 | 2.1189 | 2.0939 |
| $P_v$ [for $v_d$] | | 20.38 | 21.84 | 19.12 | 19.40 | 19.58 | 19.68 | 19.97 | 21.75 |
| $P_{Q420}$ [for $Q_{420}$] | | 1.3454 | 1.5111 | 1.2082 | 1.3024 | 1.2515 | 1.2093 | 1.2261 | 1.5359 |
| $P_{Q420} - (31.1 - 14.1 * P_n)$ | | -0.0454 | -0.0878 | 0.2029 | 0.2310 | 0.1306 | 0.0586 | 0.0022 | -0.0400 |
| $P_{Q420} - (31.25 - 14.1 * P_n)$ | | -0.1954 | -0.2378 | 0.0529 | 0.0810 | -0.0194 | -0.0914 | -0.1478 | -0.1900 |

**Table 5 Continued**

| Exemplary Glass | | 57 | 58 | 59 | 60 | 61 | 62 | 63 | 64 |
|---|---|---|---|---|---|---|---|---|---|
| **Composition - mol.%** | | | | | | | | | |
| $WO_3$ | mol.% | 19.90 | 19.62 | 20.24 | 20.06 | 20.07 | 19.99 | 22.00 | 22.49 |
| $B_2O_3$ | mol.% | 22.11 | 22.12 | 21.07 | 21.57 | 21.32 | 22.09 | 21.54 | 19.92 |

(continued)

| Table 5 Continued | | | | | | | | | |
|---|---|---|---|---|---|---|---|---|---|
| Exemplary Glass | | 57 | 58 | 59 | 60 | 61 | 62 | 63 | 64 |
| Composition - mol.% | | | | | | | | | |
| $La_2O_3$ | mol.% | 18.77 | 18.77 | 18.84 | 18.81 | 18.82 | 18.79 | 19.19 | 19.14 |
| $TiO_2$ | mol.% | 14.54 | 14.33 | 14.47 | 14.32 | 14.31 | 13.98 | 12.44 | 12.73 |
| $Nb_2O_5$ | mol.% | 16.44 | 16.65 | 16.39 | 16.24 | 16.24 | 17.00 | 15.78 | 17.09 |
| $ZrO_2$ | mol.% | 7.29 | 7.57 | 7.17 | 7.15 | 7.40 | 7.20 | 7.00 | 7.30 |
| $Y_2O_3$ | mol.% | 0.90 | 0.90 | 0.90 | 0.90 | 0.90 | 0.90 | 1.00 | 1.00 |
| BaO | mol.% | 0 | 0 | 0.53 | 0.56 | 0.56 | 0 | 0.59 | 0.11 |
| CaO | mol.% | 0 | 0 | 0.34 | 0.34 | 0.34 | 0 | 0.41 | 0.17 |
| $SiO_2$ | mol.% | 0.0315 | 0.0315 | 0.0316 | 0.0315 | 0.0316 | 0.0317 | 0.0321 | 0.0326 |
| Exemplary Glass | | 57 | 58 | 59 | 60 | 61 | 62 | 63 | 64 |
| $Ta_2O_5$ | mol.% | 0.0171 | 0.0171 | 0.0172 | 0.0172 | 0.0172 | 0.0172 | 0.0131 | 0.0177 |
| Composition constraints | | | | | | | | | |
| $B_2O_3 + SiO_2$ | mol.% | 22.15 | 22.15 | 21.11 | 21.61 | 21.35 | 22.12 | 21.58 | 19.95 |
| $min(RO, RE_mO_n, TiO_2)$ | mol.% | 0 | 0 | 0.8719 | 0.8937 | 0.8945 | 0 | 1.002 | 0.2892 |
| $Nb_2O_3 + La_2O_3 + Gd_2O_3 + Y_2O_3$ | mol.% | 36.11 | 36.31 | 36.13 | 35.95 | 35.96 | 36.69 | 35.97 | 37.22 |
| $R_2O + RO$ | mol.% | 0 | 0 | 0.8719 | 0.8937 | 0.8945 | 0 | 1.002 | 0.2892 |
| Measured properties | | | | | | | | | |
| $n_d$ | | 2.0739 | | 2.0778 | | | | 2.0661 | 2.0832 |
| $n_F$ | | 2.1066 | | 2.1107 | | | | 2.0980 | 2.1167 |
| $n_{531.9}$ | | 2.0890 | | 2.0930 | | | | 2.0809 | 2.0987 |
| $n_{632.8}$ | | 2.0649 | | 2.0685 | | | | 2.0571 | 2.0740 |
| $n_{365,est}$ | | 2.1323 | | 2.1366 | | | | 2.1225 | 2.1435 |

40

EP 4 421 045 A1

(continued)

| Measured properties | | | | | | | | | |
|---|---|---|---|---|---|---|---|---|---|
| $v_d$ | | 23.6 | | 23.6 | | | | 24.0 | 23.3 |
| $d_{RT}$ | g/cm$^3$ | | | 5.389 | | | | | 5.486 |
| $-\ln(k_{365})$ | | -3.3247 | | -3.2817 | | | | -3.1564 | -3.3081 |
| $-\ln(k_{380})$ | | -1.8594 | | -1.8514 | | | | -1.7781 | -1.9456 |
| $B_{UV}$ | | -13.702 | | -13.191 | | | | -13.357 | -13.308 |
| $T_{liq}$ | °C | 1098 | 1108 | | 1114 | 1117 | 1093 | | |
| $Q_{420}$ | | 1.6080 | | 1.4671 | | | | 1.6520 | 1.4829 |
| Predicted and calculated properties | | | | | | | | | |
| $P_n$ [for $n_d$] | | 2.0929 | 2.0934 | 2.0978 | 2.0936 | 2.0953 | 2.0951 | 2.0927 | 2.1103 |
| $P_v$ [for $v_d$] | | 21.85 | 21.87 | 21.72 | 21.99 | 21.96 | 21.72 | 22.82 | 21.49 |
| $P_{Q420}$ [for $Q_{420}$] | | 1.5294 | 1.5503 | 1.5251 | 1.5491 | 1.5445 | 1.5538 | 1.5824 | 1.4953 |
| $P_{Q420}$ - (31.1 - 14.1 * $P_n$) | | -0.0608 | -0.0322 | 0.0034 | -0.0310 | -0.0121 | -0.0061 | -0.0105 | 0.1507 |
| $P_{Q420}$ - (31.25 - 14.1 * $P_n$) | | -0.2108 | -0.1822 | -0.1466 | -0.1810 | -0.1621 | -0.1560 | -0.1605 | 7.000E-04 |
| **Table 5 Continued** | | | | | | | | | |
| Exemplary Glass | | 65 | 66 | 67 | 68 | 69 | 70 | 71 | 72 |
| Composition - mol.% | | | | | | | | | |
| $WO_3$ | mol.% | 22.09 | 22.49 | 21.73 | 22.05 | 21.34 | 21.24 | 21.02 | 21.21 |
| $B_2O_3$ | mol.% | 19.96 | 20.68 | 20.68 | 20.69 | 19.99 | 21.77 | 22.20 | 21.24 |
| $La_2O_3$ | mol.% | 18.99 | 18.99 | 18.74 | 18.84 | 18.38 | 18.58 | 18.52 | 18.65 |
| $TiO_2$ | mol.% | 12.72 | 12.39 | 12.40 | 12.40 | 12.85 | 12.46 | 13.20 | 12.51 |
| $Nb_2O_5$ | mol.% | 17.09 | 17.10 | 17.09 | 17.09 | 17.09 | 17.09 | 16.88 | 17.09 |
| $ZrO_2$ | mol.% | 7.30 | 7.30 | 7.30 | 7.30 | 7.30 | 7.30 | 7.24 | 7.30 |

| Exemplary Glass | | 65 | 66 | 67 | 68 | 69 | 70 | 71 | 72 |
|---|---|---|---|---|---|---|---|---|---|
| $Y_2O_3$ | mol.% | 1.00 | 1.00 | 1.00 | 1.00 | 1.00 | 0.93 | 0.90 | 0.95 |
| BaO | mol.% | 0.32 | 0 | 0.40 | 0.24 | 0.80 | 0.35 | 0 | 0.60 |
| CaO | mol.% | 0.49 | 0 | 0.59 | 0.35 | 1.20 | 0.24 | 0 | 0.41 |
| $SiO_2$ | mol.% | 0.0324 | 0.0325 | 0.0322 | 0.0323 | 0.032 | 0.032 | 0.0318 | 0.032 |
| $Ta_2O_5$ | mol.% | 0.0176 | 0.0177 | 0.0175 | 0.0176 | 0.0174 | 0.0174 | 0.0173 | 0.0174 |
| Composition constraints | | | | | | | | | |
| $B_2O_3 + SiO_2$ | mol.% | 19.99 | 20.72 | 20.71 | 20.72 | 20.02 | 21.81 | 22.23 | 21.27 |
| $min(RO, RE_mO_n, TiO_2)$ | mol.% | 0.8033 | 0 | 0.9905 | 0.5868 | 2.002 | 0.5907 | 0 | 1.015 |
| $Nb_2O_5 + La_2O_3 + Gd_2O_3 + Y_2O_3$ | mol.% | 37.08 | 37.09 | 36.84 | 36.93 | 36.46 | 36.59 | 36.30 | 36.69 |
| $R_2O + RO$ | mol.% | 0.8033 | 0 | 0.9905 | 0.5868 | 2.002 | 0.5907 | 0 | 1.015 |
| Measured properties | | | | | | | | | |
| $n_d$ | | 2.0817 | 2.0762 | 2.0775 | 2.0797 | | 2.0714 | 2.0723 | 2.0752 |
| $n_F$ | | 2.1152 | 2.1090 | 2.1104 | 2.1129 | | 2.1041 | 2.1050 | 2.1078 |
| $n_{531.9}$ | | 2.0972 | 2.0914 | 2.0927 | 2.0950 | | 2.0865 | 2.0874 | 2.0902 |
| $n_{632.8}$ | | 2.0726 | 2.0672 | 2.0684 | 2.0706 | | 2.0624 | 2.0633 | 2.0663 |
| $n_{365,est}$ | | 2.1421 | 2.1349 | 2.1365 | 2.1392 | | 2.1300 | 2.1307 | 2.1332 |
| $\nu_d$ | | 23.2 | 23.5 | 23.5 | 23.4 | | 23.5 | 23.6 | 23.7 |
| $d_{RT}$ | g/cm³ | 5.497 | 5.447 | 5.440 | 5.448 | | 5.375 | 5.367 | 5.407 |
| $-ln(k_{365})$ | | -3.2840 | -3.2923 | -3.2622 | -3.3004 | | -3.2755 | -3.3312 | -3.2271 |
| $-ln(k_{380})$ | | -1.8948 | -1.8716 | -1.8835 | -1.8646 | | -1.8603 | -1.9184 | -1.8327 |
| $B_{UD}$ | | -13.004 | -13.565 | -12.981 | -13.415 | | -14.421 | -15.094 | -14.264 |
| $T_{liq}$ | °C | | 1118 | | 1114 | | | | |
| $T_g$ | °C | | 640 | | | | | | |

EP 4 421 045 A1

(continued)

**Table 5 Continued**

| Measured properties | | | | | | | | |
|---|---|---|---|---|---|---|---|---|
| | 73 | 74 | 75 | 76 | 77 | 78 | 79 | 80 |
| $Q_{420}$ | 1.3976 | 1.5910 | 1.4110 | 1.5289 | | 1.9162 | 2.1025 | 1.9079 |

| Predicted and calculated properties | | | | | | | | |
|---|---|---|---|---|---|---|---|---|
| | 73 | 74 | 75 | 76 | 77 | 78 | 79 | 80 |
| $P_n$ [for $n_d$] | 2.1082 | 2.1053 | 2.102 | 2.1033 | 2.1031 | 2.095 | 2.0929 | 2.0978 |
| $P_v$ [for $v_d$] | 21.59 | 21.76 | 21.91 | 21.85 | 21.69 | 22.12 | 21.99 | 22.03 |
| $P_{Q420}$ [for $Q_{420}$] | 1.5214 | 1.5176 | 1.5645 | 1.5454 | 1.5604 | 1.5905 | 1.5527 | 1.5911 |
| $P_{Q420}$ - (31.1 - 14.1 * $P_n$) | 0.1468 | 0.1029 | 0.1028 | 0.1015 | 0.1137 | 0.0301 | -0.0367 | 0.0702 |
| $P_{Q420}$ - (31.25 - 14.1 * $P_n$) | -0.0032 | -0.0471 | -0.0472 | -0.0485 | -0.0363 | -0.1199 | -0.1867 | -0.0798 |

| Composition - mol.% | | | | | | | | | |
|---|---|---|---|---|---|---|---|---|---|
| Exemplary Glass | | 73 | 74 | 75 | 76 | 77 | 78 | 79 | 80 |
| $WO_3$ | mol.% | 20.99 | 20.81 | 21.69 | 21.78 | 21.63 | 21.72 | 21.82 | 21.58 |
| Exemplary Glass | | 73 | 74 | 75 | 76 | 77 | 78 | 79 | 80 |
| $B_2O_3$ | mol.% | 21.56 | 21.99 | 20.69 | 19.24 | 20.22 | 19.87 | 19.31 | 20.82 |
| $La_2O_3$ | mol.% | 18.60 | 18.54 | 19.69 | 18.04 | 18.14 | 18.24 | 18.29 | 18.34 |
| $TiO_2$ | mol.% | 13.21 | 13.78 | 11.48 | 14.52 | 13.88 | 13.54 | 13.42 | 12.93 |
| $Nb_2O_5$ | mol.% | 16.89 | 16.72 | 17.39 | 17.45 | 17.33 | 17.41 | 17.49 | 17.30 |
| $ZrO_2$ | mol.% | 7.24 | 7.20 | 7.00 | 7.22 | 7.25 | 7.18 | 7.09 | 7.19 |
| $Y_2O_3$ | mol.% | 0.92 | 0.90 | 0 | 1.00 | 1.00 | 1.00 | 1.00 | 1.00 |
| $BaO$ | mol.% | 0.32 | 0 | 1.99 | 0.70 | 0.49 | 1.00 | 1.51 | 0.79 |
| $CaO$ | mol.% | 0.20 | 0 | 0 | 0 | 0 | 0 | 0 | 0 |
| $SiO_2$ | mol.% | 0.0319 | 0.0317 | 0.0326 | 0.0321 | 0.0321 | 0.0322 | 0.0323 | 0.0321 |
| $Ta_2O_5$ | mol.% | 0.0173 | 0.0172 | 0.0177 | 0.0175 | 0.0174 | 0.0175 | 0.0176 | 0.0175 |
| $SrO$ | mol.% | 0 | 0 | 0.0189 | 0 | 0 | 0 | 0.0188 | 0 |

| Composition constraints | | | | | | | | |
|---|---|---|---|---|---|---|---|---|
| $B_2O_3 + SiO_2$ | mol.% | 21.59 | 22.02 | 20.73 | 19.27 | 20.25 | 19.90 | 19.34 | 20.85 |
| $min(RO, RE_mO_n, TiO_2)$ | mol.% | 0.5296 | 0 | 2.013 | 0.7049 | 0.4898 | 0.9968 | 1.526 | 0.7931 |
| $Nb_2O_5 + La_2O_3 + Gd_2O_3 + Y_2O_3$ | mol.% | 36.42 | 36.16 | 37.07 | 36.48 | 36.47 | 36.65 | 36.78 | 36.64 |
| $R_2O + RO$ | mol.% | 0.5296 | 0 | 2.013 | 0.7049 | 0.4898 | 0.9968 | 1.526 | 0.7931 |
| Measured properties | | | | | | | | |
| $n_d$ | | | 2.0741 | | 2.0957 | | 2.086 | | 2.082 |
| $n_F$ | | | 2.1069 | | 2.1305 | | 2.1201 | | 2.1155 |
| $n_{531.9}$ | | | 2.0892 | | 2.1118 | | 2.1017 | | 2.0974 |
| $n_{632.8}$ | | | 2.0650 | | 2.0860 | | 2.0767 | | 2.0725 |
| $n_{365,est}$ | | | 2.1328 | | 2.1593 | | 2.1479 | | 2.1424 |
| $\nu_d$ | | | 23.5 | | 22.6 | | 22.9 | | 23.2 |
| $d_{RT}$ | g/cm$^3$ | | 5.364 | | | | | | |
| $-ln(k_{36})$ | | | -3.3549 | | -3.5527 | | -3.4299 | | -3.3645 |
| $-ln(k_{380})$ | | | -1.9488 | | -2.0988 | | -1.9976 | | -1.9308 |
| $B_{UV}$ | | | -14.784 | | -13.419 | | -13.347 | | -13.565 |
| $T_{liq}$ | °C | 1098 | | 1111 | 1113 | 1102 | | 1116 | |
| $Q_{420}$ | | | 1.9675 | | 1.2781 | | 1.3750 | | 1.5188 |
| Predicted and calculated properties | | | | | | | | |
| $P_n$ [for $n_d$] | | 2.0962 | 2.094 | 2.1019 | 2.1125 | 2.1061 | 2.1076 | 2.1104 | 2.1013 |
| $P_\nu$ [for $\nu_d$] | | 21.91 | 21.83 | 22.18 | 20.43 | 20.97 | 21.03 | 20.94 | 21.55 |
| $P_{Q420}$ [for $Q_{420}$] | | 1.5561 | 1.5267 | 1.6978 | 1.4051 | 1.4588 | 1.4838 | 1.4915 | 1.5356 |
| $P_{Q420} - (31.1 - 14.1 * P_n)$ | | 0.0121 | -0.0481 | 0.2352 | 0.0910 | 0.0542 | 0.1008 | 0.1488 | 0.0641 |
| $P_{Q420} - (31.25 - 14.1 * P_n)$ | | -0.1379 | -0.1981 | 0.0852 | -0.0590 | -0.0958 | -0.0492 | -0.0012 | -0.0859 |

EP 4 421 045 A1

| Table 5 Continued | | | | | | | | |
|---|---|---|---|---|---|---|---|---|
| Exemplary Glass | | 81 | 82 | 83 | 84 | 85 | 86 | 87 | 88 |
| Composition - mol.% | | | | | | | | | |
| $WO_3$ | mol.% | 21.40 | 21.49 | 21.56 | 21.68 | 21.80 | 21.84 | 21.99 | 21.66 |
| $B_2O_3$ | mol.% | 21.97 | 21.58 | 21.21 | 20.70 | 19.56 | 19.53 | 18.58 | 19.62 |
| $La_2O_3$ | mol.% | 18.48 | 18.55 | 18.60 | 18.68 | 18.11 | 18.02 | 17.99 | 18.60 |
| $TiO_2$ | mol.% | 12.13 | 11.93 | 11.76 | 11.50 | 14.10 | 14.58 | 15.20 | 14.46 |
| $Nb_2O_5$ | mol.% | 17.18 | 17.24 | 17.30 | 17.38 | 17.49 | 17.54 | 17.69 | 17.61 |
| $ZrO_2$ | mol.% | 7.21 | 7.16 | 7.09 | 6.99 | 7.18 | 7.18 | 7.20 | 7.03 |
| $Y_2O_3$ | mol.% | 1.00 | 1.00 | 1.00 | 1.00 | 1.00 | 1.00 | 1.00 | 0.97 |
| BaO | mol.% | 0.58 | 1.00 | 1.43 | 2.00 | 0.72 | 0.26 | 0.29 | 0 |
| $SiO_2$ | mol.% | 0.0321 | 0.0322 | 0.0323 | 0.0325 | 0.0322 | 0.0321 | 0.0322 | 0.0323 |
| $Ta_2O_3$ | mol.% | 0.0174 | 0.0175 | 0.0176 | 0.0177 | 0.0175 | 0.0175 | 0.0175 | 0.0175 |
| SrO | mol.% | 0 | 0 | 0.0187 | 0.0188 | 0 | 0 | 0 | 0 |
| Composition constraints | | | | | | | | | |
| $B_2O_3 + SiO_2$ | mol.% | 22.00 | 21.61 | 21.24 | 20.73 | 19.59 | 19.56 | 18.61 | 19.66 |
| $min(RO, RE_mO_n, TiO_2)$ | mol.% | 0.5779 | 0.9963 | 1.449 | 2.015 | 0.7182 | 0.2641 | 0.2901 | 0 |
| $Nb_2O_3 + La_2O_3 + Gd_2O_3 + Y_2O_3$ | mol.% | 36.66 | 36.79 | 36.89 | 37.07 | 36.59 | 36.56 | 36.69 | 37.18 |
| $R_2O + RO$ | mol.% | 0.5779 | 0.9963 | 1.449 | 2.015 | 0.7182 | 0.2641 | 0.2901 | 0 |
| Measured properties | | | | | | | | | |
| $n_d$ | | 2.0709 | | 2.0727 | | | | 2.0775 | 2.0986 |
| $n_F$ | | 2.1036 | | 2.1051 | | | | 2.1111 | 2.1328 |
| $n_{531.9}$ | | 2.0860 | | 2.0876 | | | | 2.0930 | 2.1144 |
| $n_{632.8}$ | | 2.0620 | | 2.0637 | | | | 2.0685 | 2.0893 |

EP 4 421 045 A1

(continued)

| Measured properties | | | | | | | | | |
|---|---|---|---|---|---|---|---|---|---|
| $n_{365,est}$ | | 2.1293 | | 2.1303 | | | | 2.1385 | 2.1603 |
| $\nu_d$ | | 23.6 | | 23.8 | | | | 23.0 | 23.1 |
| $d_{RT}$ | g/cm$^3$ | | | | | | | | 5.446 |
| $-ln(k_{365})$ | | -3.3129 | | -3.1822 | | | | -3.5534 | -3.5087 |
| $-ln(k_{380})$ | | -1.9009 | | -1.7639 | | | | -2.0981 | -2.0690 |
| $B_{UV}$ | | -13.242 | | -13.659 | | | | -13.601 | -13.402 |
| $T_{liq}$ | °C | | 1097 | | 1116 | 1113 | 1110 | 1104 | |
| $Q_{420}$ | | 1.4542 | | 1.7349 | | | | 1.3429 | 1.3161 |
| Predicted and calculated properties | | | | | | | | | |
| $P_n$ [for $n_d$] | | 2.0938 | 2.0957 | 2.0974 | 2.0999 | 2.1105 | 2.112 | 2.119 | 2.1139 |
| $P_\nu$ [for $\nu_d$] | | 22.21 | 22.20 | 22.18 | 22.16 | 20.65 | 20.36 | 19.80 | 20.43 |
| $P_{Q420}$ [for $Q_{420}$] | | 1.6026 | 1.6156 | 1.6293 | 1.647 | 1.4347 | 1.3919 | 1.3357 | 1.4126 |
| $P_{Q420}$ - (31.1- 14.1 * $P_n$) | | 0.0250 | 0.0650 | 0.1024 | 0.1556 | 0.0923 | 0.0708 | 0.1139 | 0.1184 |
| Exemplary Glass | | 81 | 82 | 83 | 84 | 85 | 86 | 87 | 88 |
| $P_{Q420}$ - (31.25 - 14.1 * $P_n$) | | -0.1250 | -0.0850 | -0.0476 | 0.0056 | -0.0577 | -0.0792 | -0.0361 | -0.0316 |
| **Table 5 Continued** | | | | | | | | | |
| Exemplary Glass | | 89 | 90 | 91 | 92 | 93 | 94 | 95 | 96 |
| Composition - mol.% | | | | | | | | | |
| $WO_3$ | mol.% | 21.54 | 21.43 | 20.99 | 20.63 | 21.79 | 21.85 | 21.57 | 21.10 |
| $B_2O_3$ | mol.% | 20.59 | 21.40 | 18.99 | 20.61 | 18.53 | 18.54 | 19.09 | 19.99 |
| $La_2O_3$ | mol.% | 18.44 | 18.46 | 19.28 | 19.24 | 17.50 | 18.06 | 19.56 | 19.67 |
| $TiO_2$ | mol.% | 13.99 | 13.31 | 14.27 | 14.74 | 15.28 | 15.28 | 15.13 | 14.90 |
| $Nb_2O_5$ | mol.% | 17.39 | 17.27 | 18.00 | 17.09 | 17.75 | 17.74 | 17.59 | 17.29 |

| Table 5 Continued | | | | | | | | | |
|---|---|---|---|---|---|---|---|---|---|
| Exemplary Glass | | 89 | 90 | 91 | 92 | 93 | 94 | 95 | 96 |
| Composition - mol.% | | | | | | | | | |
| $ZrO_2$ | mol.% | 7.05 | 7.15 | 6.99 | 7.14 | 7.10 | 7.05 | 7.00 | 7.00 |
| $Y_2O_3$ | mol.% | 0.95 | 0.93 | 1.42 | 0.49 | 2.00 | 1.43 | 0 | 0 |
| $SiO_2$ | mol.% | 0.0321 | 0.032 | 0.0326 | 0.032 | 0.0322 | 0.0323 | 0.0324 | 0.0322 |
| $Ta_2O_5$ | mol.% | 0.0174 | 0.0174 | 0.0177 | 0.0174 | 0.0175 | 0.0175 | 0.0176 | 0.0175 |
| Composition constraints | | | | | | | | | |
| $B_2O_3 + SiO_2$ | mol.% | 20.62 | 21.44 | 19.02 | 20.64 | 18.57 | 18.57 | 19.13 | 20.02 |
| $Nb_2O_5 + La_2O_3 + Gd_2O_3 + Y_2O_3$ | mol.% | 36.78 | 36.66 | 38.70 | 36.83 | 37.24 | 37.24 | 37.15 | 36.96 |
| Measured properties | | | | | | | | | |
| $n_d$ | | | 2.0799 | 2.0946 | | 2.0977 | 2.0993 | 2.0979 | 2.0931 |
| $n_F$ | | | 2.1134 | 2.1290 | | 2.1325 | 2.1342 | 2.1324 | 2.1272 |
| $n_{531.9}$ | | | 2.0953 | 2.1105 | | 2.1137 | 2.1154 | 2.1138 | 2.1088 |
| $n_{632.8}$ | | | 2.0707 | 2.0852 | | 2.0883 | 2.0898 | 2.0884 | 2.0837 |
| $n_{365,est}$ | | | 2.1403 | 2.1571 | | 2.1612 | 2.1630 | 2.1604 | 2.1547 |
| $\nu_d$ | | | 23.2 | 22.9 | | 22.7 | 22.7 | 22.9 | 23.1 |
| $d_{RT}$ | $g/cm^3$ | | 5.396 | 5.505 | | 5.463 | 5.484 | 5.478 | 5.477 |
| $-\ln(k_{365})$ | | | -3.4499 | -3.3871 | | -3.6090 | -3.5605 | -3.5453 | -3.4901 |
| $-\ln(k_{380})$ | | | -2.0079 | -1.9983 | | -2.2311 | -2.1333 | -2.1145 | -2.0725 |
| $B_{UV}$ | | | -13.336 | -13.320 | | -13.233 | -13.296 | -13.732 | -13.448 |
| $T_{liq}$ | °C | 1091 | | | 1109 | | | | |
| $Q_{420}$ | | | 1.3510 | 1.4080 | | 1.1547 | 1.2259 | 1.3982 | 1.3511 |

(continued)

**Predicted and calculated properties**

| | | | | | | | | |
|---|---|---|---|---|---|---|---|---|
| Exemplary Glass | 89 | 90 | 91 | 92 | 93 | 94 | 95 | 96 |
| $P_n$ [for $n_d$] | 2.1059 | 2.0997 | 2.1219 | 2.1067 | 2.1198 | 2.1209 | 2.1196 | 2.1126 |
| $P_v$ [for $v_d$] | 20.95 | 21.49 | 20.31 | 20.98 | 19.75 | 19.75 | 20.08 | 20.60 |
| $P_{Q420}$ [for $Q_{420}$] | 1.4574 | 1.5136 | 1.4364 | 1.4836 | 1.2901 | 1.3166 | 1.4193 | 1.469 |
| $P_{Q420} - (31.1 - 14.1 * P_n)$ | 0.0504 | 0.0194 | 0.2545 | 0.0879 | 0.0790 | 0.1214 | 0.2051 | 0.1567 |
| $P_{Q420} - (31.25 - 14.1 * P_n)$ | -0.0996 | -0.1306 | 0.1045 | -0.0621 | -0.0710 | -0.0286 | 0.0551 | 0.0067 |

**Table 5 Continued**

**Composition - mol.%**

| Exemplary Glass | | 97 | 98 | 99 | 100 | 101 | 102 | 103 | 104 |
|---|---|---|---|---|---|---|---|---|---|
| $WO_3$ | mol.% | 22.03 | 21.98 | 21.99 | 21.99 | 21.99 | 21.99 | 21.99 | 21.99 |
| $B_2O_3$ | mol.% | 18.30 | 18.80 | 18.79 | 18.79 | 18.80 | 18.79 | 18.80 | 18.60 |
| $La_2O_3$ | mol.% | 18.08 | 18.04 | 17.85 | 17.60 | 17.13 | 17.70 | 16.99 | 17.64 |
| $TiO_2$ | mol.% | 15.19 | 15.18 | 15.19 | 15.19 | 15.20 | 15.19 | 15.19 | 15.19 |
| $Nb_2O_5$ | mol.% | 17.73 | 17.79 | 17.79 | 17.79 | 17.79 | 17.79 | 17.79 | 17.79 |
| $ZrO_2$ | mol.% | 7.19 | 7.00 | 7.00 | 6.99 | 6.99 | 7.00 | 6.99 | 7.00 |
| $Y_2O_3$ | mol.% | 1.00 | 0.75 | 0.94 | 1.20 | 1.66 | 1.09 | 1.80 | 0.75 |
| $BaO$ | mol.% | 0.43 | 0.20 | 0.29 | 0.29 | 0.29 | 0.40 | 0.40 | 0 |
| $CaO$ | mol.% | 0 | 0.21 | 0 | 0 | 0 | 0 | 0 | 0 |
| $Sb_2O_3$ | mol.% | 0 | 0 | 0 | 0 | 0 | 0 | 0 | 1.00 |
| $Bi_2O_3$ | mol.% | 0 | 0 | 0.12 | 0.11 | 0.12 | 0 | 0 | 0 |
| $SiO_2$ | mol.% | 0.0323 | 0.0321 | 0.0322 | 0.0322 | 0.0321 | 0.0321 | 0.032 | 0.0323 |
| $Ta_2O_3$ | mol.% | 0.0176 | 0.0175 | 0.0175 | 0.0175 | 0.0175 | 0.0175 | 0.0174 | 0.0176 |

(continued)

| Composition constraints | | | | | | | | | |
|---|---|---|---|---|---|---|---|---|---|
| $B_2O_3 + SiO_2$ | mol.% | 18.33 | 18.83 | 18.82 | 18.82 | 18.83 | 18.82 | 18.84 | 18.63 |
| $min(RO, RE_mO_n, TiO_2)$ | mol.% | 0.4299 | 0.4080 | 0.2902 | 0.2898 | 0.2891 | 0.4027 | 0.4012 | 0 |
| $Nb_2O_5 + La_2O_3 + Gd_2O_3 + Y_2O_3$ | mol.% | 36.81 | 36.58 | 36.58 | 36.59 | 36.57 | 36.58 | 36.58 | 36.18 |
| $R_2O + RO$ | mol.% | 0.4299 | 0.4080 | 0.2902 | 0.2898 | 0.2891 | 0.4027 | 0.4012 | 0 |
| Measured properties | | | | | | | | | |
| $n_d$ | | 2.0954 | 2.0932 | | | | 2.1001 | 2.0977 | 2.1014 |
| $n_F$ | | 2.1300 | 2.1282 | | | | 2.1355 | 2.1327 | 2.1371 |
| $n_{531.9}$ | | 2.1114 | 2.1093 | | | | 2.1164 | 2.1138 | 2.1178 |
| $n_{632.8}$ | | 2.0860 | 2.0838 | | | | 2.0905 | 2.0882 | 2.0917 |
| $n_{365,est}$ | | 2.1585 | 2.1573 | | | | 2.1652 | 2.1619 | 2.1673 |
| $\nu_d$ | | 22.8 | 22.5 | | | | 22.4 | 22.5 | 22.2 |
| $d_{RT}$ | g/cm$^3$ | 5.451 | 5.426 | | | | 5.463 | 5.448 | 5.454 |
| $-ln(k_{365})$ | | -3.5816 | -3.6327 | | | | -3.6183 | -3.6495 | |
| $-ln(k_{380})$ | | -2.1485 | -2.1943 | | | | -2.1844 | -2.2168 | |
| $B_{UV}$ | | -13.175 | -14.648 | | | | -13.541 | -13.390 | -11.737 |
| $T_{liq}$ | °C | | 1108 | | 1097 | | | | |
| $T_g$ | °C | | 639 | | | | | | |
| Exemplary Glass | | 97 | 98 | 99 | 100 | 101 | 102 | 103 | 104 |
| $Q_{420}$ | | 1.1613 | 1.2448 | | | | 1.2565 | 1.1708 | |
| Predicted and calculated properties | | | | | | | | | |
| $P_n$ [for $n_d$] | | 2.121 | 2.1175 | 2.1186 | 2.118 | 2.117 | 2.117 | 2.1155 | 2.1162 |
| $P_\nu$ [for $\nu_d$] | | 19.74 | 19.79 | 19.69 | 19.68 | 19.67 | 19.77 | 19.76 | 19.67 |
| $P_{Q420}$ [for $Q_{420}$] | | 1.3351 | 1.3517 | 1.1428 | 1.1445 | 1.1121 | 1.335 | 1.2998 | -1.9821 |

(continued)

| Predicted and calculated properties | | | | | | | | |
|---|---|---|---|---|---|---|---|---|
| $P_{Q420}$ - (31.1 - 14.1 * $P_n$) | | 0.1411 | 0.1089 | -0.0854 | -0.0919 | -0.1376 | 0.0842 | 0.0278 | -3.2433 |
| $P_{Q420}$ - (31.25 - 14.1 * $P_n$) | | -0.0089 | -0.0411 | -0.2354 | -0.2419 | -0.2876 | -0.0658 | -0.1222 | -3.3933 |

**Table 5 Continued**

| Exemplary Glass | | 105 | 106 | 107 | 108 | 109 | 110 | 111 | 112 |
|---|---|---|---|---|---|---|---|---|---|
| Composition - mol.% | | | | | | | | | |
| $WO_3$ | mol.% | 21.98 | 21.99 | 21.99 | 21.99 | 21.99 | 22.11 | 22.10 | 21.99 |
| $B_2O_3$ | mol.% | 18.66 | 18.70 | 18.69 | 18.74 | 18.73 | 18.62 | 18.71 | 18.79 |
| $La_2O_3$ | mol.% | 17.75 | 17.84 | 17.86 | 17.93 | 17.94 | 17.91 | 17.98 | 18.04 |
| $TiO_2$ | mol.% | 15.19 | 15.18 | 15.20 | 15.19 | 15.18 | 15.21 | 15.19 | 15.19 |
| $Nb_2O_5$ | mol.% | 17.79 | 17.79 | 17.80 | 17.79 | 17.79 | 18.21 | 18.00 | 17.79 |
| $ZrO_2$ | mol.% | 7.00 | 7.00 | 6.99 | 6.99 | 7.00 | 7.00 | 7.01 | 6.99 |
| $Y_2O_3$ | mol.% | 0.75 | 0.75 | 0.75 | 0.75 | 0.75 | 0.70 | 0.73 | 0.75 |
| BaO | mol.% | 0.11 | 0.20 | 0.10 | 0.29 | 0.19 | 0 | 0.15 | 0.29 |
| CaO | mol.% | 0 | 0 | 0.10 | 0 | 0.10 | 0 | 0 | 0 |
| $Sb_2O_3$ | mol.% | 0.71 | 0.50 | 0.47 | 0.29 | 0.27 | 0 | 0 | 0 |
| CdO | mol.% | 0 | 0 | 0 | 0 | 0 | 0 | 0 | 0.12 |
| $K_2O$ | mol.% | 0 | 0 | 0 | 0 | 0 | 0.19 | 0.0822 | 0 |
| $SiO_2$ | mol.% | 0.0323 | 0.0323 | 0.0322 | 0.0322 | 0.0322 | 0.0323 | 0.0322 | 0.0322 |
| $Ta_2O_5$ | mol.% | 0.0176 | 0.0175 | 0.0175 | 0.0175 | 0.0175 | 0.0175 | 0.0175 | 0.0175 |
| Composition constraints | | | | | | | | | |
| $B_2O_3$ + $SiO_2$ | mol.% | 18.69 | 18.73 | 18.72 | 18.77 | 18.76 | 18.65 | 18.74 | 18.82 |
| $min(RO, RE_mO_n, TiO_2)$ | mol.% | 0.1138 | 0.2022 | 0.2046 | 0.2903 | 0.2927 | 0 | 0.1515 | 0.4102 |
| $Nb_2O_5$ + $La_2O_3$ + $Gd_2O_3$ + $Y_2O_3$ | mol.% | 36.29 | 36.38 | 36.40 | 36.47 | 36.48 | 36.83 | 36.71 | 36.58 |

| Composition constraints | | | | | | | | | |
|---|---|---|---|---|---|---|---|---|---|
| $R_2O + RO$ | mol.% | 0.1138 | 0.2022 | 0.2046 | 0.2903 | 0.2927 | 0.1851 | 0.2337 | 0.4102 |
| Measured properties | | | | | | | | | |
| $n_d$ | | | | | 2.0996 | 2.1065 | | 2.0959 | 2.0932 |
| $n_F$ | | | | | 2.1346 | 2.1422 | | 2.1309 | 2.1278 |
| $n_{531.9}$ | | | | | 2.1157 | 2.1230 | | 2.1120 | 2.1092 |
| $n_{632.8}$ | | | | | 2.0899 | 2.0967 | | 2.0863 | 2.0835 |
| Exemplary Glass | | 105 | 106 | 107 | 108 | 109 | 110 | 111 | 112 |
| $n_{365,est}$ | | | | | 2.1635 | 2.1723 | | 2.1601 | 2.1561 |
| $\nu_d$ | | | | | 22.5 | 22.3 | | 22.5 | 22.8 |
| dpi | g/cm$^3$ | | | | 5.432 | | | 5.415 | 5.425 |
| $-\ln(k_{365})$ | | | | | | | | -3.6401 | -3.6391 |
| $-\ln(k_{380})$ | | | | | -3.5432 | -3.5441 | | -2.1990 | -2.1805 |
| $B_{UV}$ | | | | | -9.0862 | -9.0768 | | -14.609 | -14.402 |
| $T_{liq}$ | °C | | 1123 | | | | 1106 | | 1117 |
| $T_g$ | °C | | | | | | 641 | | |
| $Q_{420}$ | | | | | | | | 1.6191 | 1.5457 |
| Predicted and calculated properties | | | | | | | | | |
| $P_n$ [for $n_d$] | | 2.1166 | 2.1169 | 2.1171 | 2.1172 | 2.1174 | 2.1197 | 2.1188 | 2.1176 |
| $P_\nu$ [for $\nu_d$] | | 19.70 | 19.73 | 19.72 | 19.75 | 19.75 | 19.46 | 19.61 | 19.77 |
| $P_{Q420}$ [for $Q_{420}$] | | -1.6573 | -1.3221 | -1.2708 | -0.8149 | -0.7509 | 1.3311 | 1.3386 | 1.3485 |
| $P_{Q420} - (31.1 - 14.1 * P_n)$ | | -2.9132 | -2.5739 | -2.5195 | -2.062 | -1.9958 | 0.1186 | 0.1142 | 0.1068 |
| $P_{Q420} - (31.25 - 14.1 * P_n)$ | | -3.0632 | -2.7239 | -2.6695 | -2.212 | -2.1458 | -0.0314 | -0.0358 | -0.0432 |

| | | 113 | 114 | 115 | 116 | 117 | 118 | 119 | 120 |
|---|---|---|---|---|---|---|---|---|---|
| **Table 5 Continued** | | | | | | | | | |
| Exemplary Glass | | 113 | 114 | 115 | 116 | 117 | 118 | 119 | 120 |
| Composition - mol.% | | | | | | | | | |
| $WO_3$ | mol. % | 21.99 | 21.99 | 21.99 | 21.99 | 21.99 | 22.00 | 21.98 | 21.70 |
| $B_2O_3$ | mol. % | 18.79 | 18.79 | 18.79 | 18.79 | 18.79 | 18.78 | 18.79 | 19.50 |
| $La_2O_3$ | mol. % | 18.04 | 18.04 | 18.04 | 18.04 | 18.05 | 18.05 | 18.04 | 18.16 |
| $TiO_2$ | mol. % | 15.19 | 15.19 | 15.19 | 15.19 | 15.19 | 15.19 | 15.20 | 14.92 |
| $Nb_2O_5$ | mol. % | 17.79 | 17.79 | 17.79 | 17.79 | 17.79 | 17.80 | 17.79 | 17.55 |
| $ZrO_2$ | mol. % | 6.99 | 6.99 | 6.99 | 6.99 | 6.99 | 6.99 | 7.00 | 7.06 |
| $Y_2O_3$ | mol. % | 0.75 | 0.75 | 0.75 | 0.75 | 0.75 | 0.75 | 0.75 | 1.00 |
| BaO | mol. % | 0.20 | 0.11 | 0.10 | 0 | 0 | 0 | 0 | 0 |
| $Sb_2O_3$ | mol. % | 0 | 0 | 0 | 0 | 0 | 0 | 0 | 0.0595 |
| Exemplary Glass | | 113 | 114 | 115 | 116 | 117 | 118 | 119 | 120 |
| CdO | mol. % | 0.20 | 0.29 | 0.20 | 0.41 | 0.29 | 0.20 | 0 | 0 |
| $MnO_2$ | mol. % | 0 | 0 | 0.11 | 0 | 0.11 | 0.20 | 0.40 | 0 |
| $SiO_2$ | mol. % | 0.0322 | 0.0322 | 0.0322 | 0.0322 | 0.0322 | 0.0322 | 0.0321 | 0.0321 |
| $Ta_2O_5$ | mol. % | 0.0175 | 0.0175 | 0.0175 | 0.0175 | 0.0175 | 0.0175 | 0.0175 | 0.0175 |
| Composition constraints | | | | | | | | | |
| $B_2O_3 + SiO_2$ | mol. % | 18.82 | 18.82 | 18.82 | 18.82 | 18.82 | 18.82 | 18.83 | 19.53 |
| $min(RO, RE_mO_n, TiO_2)$ | mol. % | 0.3973 | 0.3994 | 0.4075 | 0.4062 | 0.3970 | 0.3955 | 0.3996 | 0 |
| $Nb_2O_5 + La_2O_3 + Gd_2O_3 + Y_2O_3$ | mol. % | 36.59 | 36.59 | 36.59 | 36.58 | 36.59 | 36.60 | 36.58 | 36.71 |
| $R_2O + RO$ | mol. % | 0.3973 | 0.3994 | 0.4075 | 0.4062 | 0.3970 | 0.3955 | 0.3996 | 0 |
| Measured properties | | | | | | | | | |
| $n_d$ | | 2.0949 | | | | | | | |

(continued)

| Measured properties | | | | | | | | | |
|---|---|---|---|---|---|---|---|---|---|
| $n_F$ | | 2.1298 | | | | | | | |
| $n_{531.9}$ | | 2.1110 | | | | | | | |
| $n_{632.8}$ | | 2.0853 | | | | | | | |
| $n_{365,est}$ | | 2.1587 | | | | | | | |
| $\nu_d$ | | 22.6 | | | | | | | |
| $d_{RT}$ | g/cm$^3$ | 5.438 | | | | | | | 5.441 |
| $-\ln(k_{365})$ | | -3.592 2 | | | | | | | -3.8834 |
| $-\ln(k_{380})$ | | -2.162 8 | | | | | | | -2.6727 |
| $B_{UV}$ | | -13.95 5 | | | | | | | -12.414 |
| $T_{liq}$ | °C | | | | 1099 | | | 1099 | 1104 |
| $Q_{420}$ | | 1.4315 | | | | | | | 0.5856 2 |
| Predicted and calculated properties | | | | | | | | | |
| $P_n$ [for $n_d$] | | 2.1177 | 2.1177 | 2.1177 | 2.1177 | 2.1177 | 2.1178 | 2.1176 | 2.1133 |
| $P_\nu$ [for $\nu_d$] | | 19.76 | 19.75 | 19.75 | 19.74 | 19.74 | 19.74 | 19.75 | 20.21 |
| $P_{Q420}$ [for $Q_{420}$] | | 1.3459 | 1.3432 | 1.3429 | 1.3396 | 1.3397 | 1.3397 | 1.3396 | 0.4007 |
| Exemplary Glass | | 113 | 114 | 115 | 116 | 117 | 118 | 119 | 120 |
| $P_{Q420}$ - (31.1- 14.1 * $P_n$) | | 0.1049 | 0.1021 | 0.1021 | 0.0987 | 0.0993 | 0.1000 | 0.0979 | -0.9023 |
| $P_{Q420}$ - (31.25 - 14.1 * $P_n$) | | -0.045 1 | -0.047 9 | -0.047 9 | -0.051 3 | -0.050 7 | -0.050 0 | -0.052 1 | -1.0523 |
| **Table 5 Continued** | | | | | | | | | |
| Exemplary Glass | | 121 | 122 | 123 | 124 | 125 | 126 | 127 | 128 |
| Composition - mol.% | | | | | | | | | |
| $WO_3$ | mol. % | 21.78 | 21.99 | 22.02 | 21.98 | 21.99 | 22.00 | 21.99 | 21.99 |
| $B_2O_3$ | mol. % | 19.30 | 18.79 | 18.52 | 18.73 | 18.74 | 18.74 | 18.76 | 18.78 |

| Table 5 Continued | | | | | | | | | |
|---|---|---|---|---|---|---|---|---|---|
| Exemplary Glass | | 121 | 122 | 123 | 124 | 125 | 126 | 127 | 128 |
| Composition - mol.% | | | | | | | | | |
| $La_2O_3$ | mol. % | 18.03 | 17.99 | 18.05 | 18.04 | 18.04 | 18.04 | 18.04 | 18.04 |
| $TiO_2$ | mol. % | 15.08 | 15.19 | 15.19 | 15.19 | 15.19 | 15.19 | 15.19 | 15.18 |
| $Nb_2O_5$ | mol. % | 17.59 | 17.79 | 17.79 | 17.79 | 17.79 | 17.80 | 17.80 | 17.79 |
| $ZrO_2$ | mol. % | 7.10 | 6.99 | 7.05 | 6.99 | 7.00 | 7.00 | 6.99 | 7.01 |
| $Y_2O_3$ | mol. % | 1.00 | 0.75 | 0.82 | 0.75 | 0.75 | 0.75 | 0.75 | 0.75 |
| $Sb_2O_3$ | mol. % | 0.0595 | 0.053 | 0.0531 | 0.0729 | 0.053 | 0.0464 | 0.0265 | 0.0265 |
| CdO | mol. % | 0 | 0.41 | 0.45 | 0.14 | 0.30 | 0.20 | 0.17 | 0.0602 |
| ZnO | mol. % | 0 | 0 | 0 | 0.26 | 0.095 | 0.19 | 0.24 | 0.33 |
| $SiO_2$ | mol. % | 0.0321 | 0.0322 | 0.0322 | 0.0322 | 0.0322 | 0.0322 | 0.0322 | 0.0321 |
| $Ta_2O_5$ | mol. % | 0.0175 | 0.0175 | 0.0175 | 0.0175 | 0.0175 | 0.0175 | 0.0175 | 0.0175 |
| Composition constraints | | | | | | | | | |
| $B_2O_3 + SiO_2$ | mol. % | 19.33 | 18.82 | 18.55 | 18.77 | 18.77 | 18.77 | 18.79 | 18.81 |
| $min(RO, RE_mO_n, TiO_2)$ | mol. % | 0 | 0.4062 | 0.4522 | 0.3966 | 0.3960 | 0.3856 | 0.4028 | 0.3923 |
| $Nb_2O_5 + La_2O_3 + Gd_2O_3 + Y_2O_3$ | mol. % | 36.62 | 36.53 | 36.66 | 36.58 | 36.58 | 36.60 | 36.59 | 36.58 |
| Exemplary Glass | | 121 | 122 | 123 | 124 | 125 | 126 | 127 | 128 |
| $R_2O + RO$ | mol. % | 0 | 0.4062 | 0.4522 | 0.3966 | 0.3960 | 0.3856 | 0.4028 | 0.3923 |
| Measured properties | | | | | | | | | |
| $n_d$ | | 2.0957 | 2.0981 | | | | 2.0952 | | 2.096 |
| $n_F$ | | 2.1306 | 2.1333 | | | | 2.1300 | | 2.1302 |
| $n_{531.9}$ | | 2.1118 | 2.1143 | | | | 2.1112 | | 2.1117 |
| $n_{632.8}$ | | 2.0863 | 2.0885 | | | | 2.0855 | | 2.0864 |

54

(continued)

| Measured properties | | | | | | | | | |
|---|---|---|---|---|---|---|---|---|---|
| $n_{365,est}$ | | 2.1596 | 2.1625 | | | | 2.1588 | | 2.1577 |
| $\nu_d$ | | 22.6 | 22.5 | | | | 22.6 | | 23.1 |
| $d_{RT}$ | $g/cm^3$ | | | | | | 5.444 | | 5.436 |
| $-ln(k_{365})$ | | -3.8729 | -3.8868 | | | | -3.8905 | | -3.7842 |
| $-ln(k_{380})$ | | -2.6422 | -2.6303 | | | | -2.6280 | | -2.4526 |
| $B_{UV}$ | | -11.874 | -13.418 | | | | -12.115 | | -12.836 |
| $T_{liq}$ | °C | | | | | | | 1112 | |
| $T_g$ | °C | | | | | | | 638 | |
| $Q_{420}$ | | 0.4015 9 | 0.9436 2 | | | | 0.4708 6 | | 0.8366 2 |
| Predicted and calculated properties | | | | | | | | | |
| $P_n$ [for $n_d$] | | 2.1145 | 2.1174 | 2.1193 | 2.1179 | 2.1179 | 2.118 | 2.1179 | 2.1178 |
| $P_\nu$ [for $\nu_d$] | | 20.06 | 19.74 | 19.69 | 19.70 | 19.72 | 19.70 | 19.70 | 19.70 |
| $P_{Q420}$ [for $Q_{420}$] | | 0.394 | 0.4567 | 0.4525 | 0.2564 | 0.4557 | 0.5308 | 0.8012 | 0.8008 |
| $P_{Q420} - (31.1 - 14.1 * P_n)$ | | -0.8921 | -0.7881 | -0.765 2 | -0.981 3 | -0.781 9 | -0.7053 | -0.436 7 | -0.4389 |
| $P_{Q420} - (31.25 - 14.1 * P_n)$ | | -1.0421 | -0.9381 | -0.915 2 | -1.131 3 | -0.931 9 | -0.8553 | -0.586 7 | -0.5889 |
| Table 5 Continued | | | | | | | | | |
| Exemplary Glass | | 129 | 130 | 131 | 132 | 133 | 134 | 135 | 136 |
| Composition - mol.% | | | | | | | | | |
| $WO_3$ | mol. % | 21.98 | 21.99 | 21.97 | 21.99 | 21.99 | 21.98 | 21.58 | 21.70 |
| $B_2O_3$ | mol. % | 18.74 | 18.74 | 18.74 | 18.76 | 18.76 | 18.76 | 19.79 | 19.51 |
| $La_2O_3$ | mol. % | 18.03 | 18.04 | 18.04 | 18.04 | 17.72 | 17.29 | 18.38 | 18.20 |
| $TiO_2$ | mol. % | 15.19 | 15.20 | 15.20 | 15.19 | 15.19 | 15.20 | 14.69 | 14.82 |

| Exemplary Glass | | 129 | 130 | 131 | 132 | 133 | 134 | 135 | 136 |
|---|---|---|---|---|---|---|---|---|---|
| $Nb_2O_5$ | mol. % | 17.79 | 17.79 | 17.78 | 17.79 | 17.79 | 17.79 | 17.49 | 17.57 |
| $ZrO_2$ | mol. % | 7.00 | 7.00 | 7.00 | 6.99 | 7.00 | 6.99 | 7.00 | 6.99 |
| $Y_2O_3$ | mol. % | 0.75 | 0.75 | 0.75 | 0.75 | 1.07 | 1.50 | 1.00 | 1.02 |
| BaO | mol. % | 0 | 0 | 0 | 0.20 | 0.20 | 0.20 | 0 | 0.063 |
| CaO | mol. % | 0.21 | 0.17 | 0.21 | 0.21 | 0.21 | 0.21 | 0 | 0 |
| $Sb_2O_3$ | mol. % | 0.053 | 0.0464 | 0.053 | 0.0331 | 0.0331 | 0.033 | 0.0199 | 0.0199 |
| ZnO | mol. % | 0 | 0.12 | 0.21 | 0 | 0 | 0 | 0 | 0 |
| $Bi_2O_3$ | mol. % | 0 | 0 | 0 | 0 | 0 | 0 | 0 | 0.058 |
| NiO | mol. % | 0.21 | 0.10 | 0 | 0 | 0 | 0 | 0 | 0 |
| $SiO_2$ | mol. % | 0.0321 | 0.0321 | 0.0321 | 0.0322 | 0.0321 | 0.032 | 0.0321 | 0.0322 |
| $Ta_2O_5$ | mol. % | 0.0175 | 0.0175 | 0.0175 | 0.0175 | 0.0175 | 0.0174 | 0.0175 | 0.0175 |
| Composition constraints | | | | | | | | | |
| $B_2O_3 + SiO_2$ | mol. % | 18.77 | 18.77 | 18.77 | 18.79 | 18.79 | 18.79 | 19.82 | 19.54 |
| $min(RO, RE_mO_n, TiO_2)$ | mol. % | 0.4131 | 0.3940 | 0.4199 | 0.4083 | 0.4076 | 0.4066 | 0 | 0.0629 9 |
| $Nb_2O_3 + La_2O_3 + Gd_2O_3 + Y_2O_3$ | mol. % | 36.57 | 36.58 | 36.57 | 36.59 | 36.58 | 36.58 | 36.87 | 36.79 |
| $R_2O + RO$ | mol. % | 0.4131 | 0.3940 | 0.4199 | 0.4083 | 0.4076 | 0.4066 | 0 | 0.0629 9 |
| V + Fe + Cr + Ni | mol. % | 0.04417 | 0.0220 9 | 0 | 0 | 0 | 0 | 0 | 0 |
| Measured properties | | | | | | | | | |
| $n_d$ | | 2.0989 | | 2.1013 | | | | 2.0932 | |
| nF | | 2.1338 | | 2.1363 | | | | 2.1276 | |
| n531.9 | | 2.1149 | | 2.1174 | | | | 2.1090 | |
| n632.8 | | 2.0893 | | 2.0916 | | | | 2.0834 | |
| $n_{365,est}$ | | 2.1626 | | 2.1651 | | | | 2.1556 | |

EP 4 421 045 A1

56

(continued)

| Exemplary Glass | | 129 | 130 | 131 | 132 | 133 | 134 | 135 | 136 |
|---|---|---|---|---|---|---|---|---|---|
| $\nu_d$ | | 22.7 | | 22.7 | | | | 22.9 | |
| $d_{RT}$ | g/cm³ | 5.436 | | 5.429 | | | | 5.450 | |
| $-\ln(k_{365})$ | | -4.0934 | | -3.8093 | | | | -3.7360 | |
| $-\ln(k_{380})$ | | -3.0666 | | -2.5020 | | | | -2.4954 | |
| $B_{UV}$ | | -10.276 | | -12.623 | | | | -11.996 | |
| $T_{liq}$ | °C | | 1113 | | 1117 | | 1117 | | 1109 |
| $Q_{420}$ | | -0.3938 7 | | 0.7351 7 | | | | 0.5826 5 | |
| Predicted and calculated properties | | | | | | | | | |
| $P_n$ [for $n_d$] | | 2.1178 | 2.1179 | 2.1178 | 2.1178 | 2.1172 | 2.1162 | 2.1118 | 2.1139 |
| $P_\nu$ [for $\nu_d$] | | 19.75 | 19.73 | 19.73 | 19.77 | 19.77 | 19.76 | 20.43 | 20.20 |
| $P_{Q420}$ [for $Q_{420}$] | | 0.4594 | 0.534 | 0.4578 | 0.7111 | 0.7033 | 0.6928 | 0.9538 | 0.871 |
| $P_{Q420} - (31.1 - 14.1 * P_n)$ | | -0.7795 | -0.7036 | -0.7812 | -0.528 3 | -0.544 8 | -0.568 4 | -0.3705 | -0.4237 |
| $P_{Q420} - (31.25 - 14.1 * P_n)$ | | -0.9295 | -0.8536 | -0.9312 | -0.678 3 | -0.694 8 | -0.718 4 | -0.5205 | -0.5737 |
| **Table 5 Continued** | | | | | | | | | |
| Exemplary Glass | | 137 | 138 | 139 | 140 | 141 | 142 | 143 | 144 |
| Composition - mol.% | | | | | | | | | |
| $WO_3$ | mol. % | 21.79 | 22.48 | 22.70 | 21.84 | 21.78 | 21.77 | 21.77 | 21.77 |
| $B_2O_3$ | mol. % | 19.27 | 18.40 | 18.22 | 19.15 | 19.30 | 19.28 | 19.27 | 19.28 |
| $La_2O_3$ | mol. % | 18.06 | 17.19 | 17.02 | 17.97 | 18.03 | 18.02 | 18.02 | 18.02 |
| $TiO_2$ | mol. % | 14.93 | 14.68 | 14.47 | 15.02 | 15.08 | 15.09 | 15.08 | 15.09 |
| $Nb_2O_5$ | mol. % | 17.64 | 17.78 | 17.79 | 17.68 | 17.59 | 17.58 | 17.57 | 17.58 |
| $ZrO_2$ | mol. % | 7.00 | 6.99 | 6.99 | 6.99 | 7.10 | 7.09 | 7.10 | 7.09 |
| $Y_2O_3$ | mol. % | 1.03 | 1.20 | 1.20 | 1.03 | 1.05 | 1.05 | 1.05 | 1.05 |

**Table 5 Continued**

| Exemplary Glass | | 137 | 138 | 139 | 140 | 141 | 142 | 143 | 144 |
|---|---|---|---|---|---|---|---|---|---|
| Composition - mol.% | | | | | | | | | |
| BaO | mol. % | 0.10 | 1.12 | 1.49 | 0.19 | 0 | 0 | 0 | 0 |
| $Sb_2O_3$ | mol. % | 0.0199 | 0.0199 | 0.0199 | 0.0133 | 0.0198 | 0.0728 | 0 | 0.0066 |
| Exemplary Glass | | 137 | 138 | 139 | 140 | 141 | 142 | 143 | 144 |
| $Bi_2O_3$ | mol. % | 0.0996 | 0.0747 | 0.0416 | 0.0705 | 0 | 0 | 0.0994 | 0.0538 |
| $K_2O$ | mol. % | 0 | 0 | 0 | 0 | 0 | 0 | 0 | 0.002 |
| $Na_2O$ | mol. % | 0 | 0 | 0 | 0 | 0 | 0 | 0 | 0.0093 |
| $SiO_2$ | mol. % | 0.0322 | 0.0322 | 0.0322 | 0.0322 | 0.0321 | 0.0321 | 0.0321 | 0.0294 |
| $Ta_2O_5$ | mol. % | 0.0175 | 0.0175 | 0.0175 | 0.0175 | 0.0175 | 0.0175 | 0.0175 | 0.0162 |
| SrO | mol. % | 0 | 0.0187 | 0.0187 | 0 | 0 | 0 | 0 | 0 |
| MgO | mol. % | 0 | 0 | 0 | 0 | 0 | 0 | 0 | 0.0048 |
| $SiCl_4$ | mol. % | 0 | 0 | 0 | 0 | 0 | 0 | 0 | 0.0027 |
| $Al_2O_3$ | mol. % | 0 | 0 | 0 | 0 | 0 | 0 | 0 | 0.0019 |
| $Fe_2O_3$ | mol. % | 0 | 0 | 0 | 0 | 0 | 0 | 0 | 0.0012 |
| Composition constraints | | | | | | | | | |
| $B_2O_3 + SiO_2$ | mol. % | 19.31 | 18.43 | 18.25 | 19.18 | 19.33 | 19.31 | 19.30 | 19.31 |
| $min(RO, RE_mO_n, TiO_2)$ | mol. % | 0.1009 | 1.142 | 1.509 | 0.1890 | 0 | 0 | 0 | 4.784E-03 |
| $Nb_2O_5 + La_2O_3 + Gd_2O_3 + Y_2O_3$ | mol. % | 36.73 | 36.17 | 36.01 | 36.68 | 36.67 | 36.65 | 36.64 | 36.64 |
| $R_2O + RO$ | mol. % | 0.1009 | 1.142 | 1.509 | 0.1890 | 0 | 0 | 0 | 0.0161 7 |
| V + Fe + Cr + Ni | mol. % | 0 | 0 | 0 | 0 | 0 | 0 | 0 | 5.100E-04 |
| Measured properties | | | | | | | | | |
| $n_d$ | | 2.0979 | | 2.0968 | 2.095 | 2.0973 | 2.1028 | 2.0971 | 2.1038 |

| Measured properties | | | | | | | | | |
|---|---|---|---|---|---|---|---|---|---|
| $n_R$ | | 2.1327 | | 2.1320 | 2.1302 | 2.1323 | 2.1387 | 2.1319 | 2.1388 |
| $n_{531.9}$ | | 2.1140 | | 2.1130 | 2.1112 | 2.1134 | 2.1194 | 2.1132 | 2.1199 |
| $n_{632.8}$ | | 2.0884 | | 2.0869 | 2.0850 | 2.0875 | 2.0928 | 2.0873 | 2.0940 |
| $n_{365,est}$ | | 2.1614 | | 2.1614 | 2.1598 | 2.1614 | 2.1693 | 2.1605 | 2.1675 |
| $\nu_d$ | | 22.5 | | 22.4 | 22.4 | 22.5 | 22.1 | 22.7 | 22.7 |
| $d_{RT}$ | $g/cm^3$ | 5.453 | | 5.474 | 5.442 | | | | |
| Exemplary Glass | | 137 | 138 | 139 | 140 | 141 | 142 | 143 | 144 |
| $-ln(k_{365})$ | | -3.8120 | | -3.7687 | -3.7450 | -3.8230 | -4.1437 | -3.719 2 | -3.7673 |
| $-ln(k_{380})$ | | -2.4969 | | -2.4365 | -2.4559 | -2.5902 | -2.9490 | -2.277 8 | -2.3621 |
| Buv | | -12.488 | | -12.536 | -12.709 | -12.019 | -11.585 | -13.66 2 | -13.232 |
| $T_{liq}$ | °C | | 1120 | | | | | | |
| $Q_{420}$ | 1 | 0.6857 | | 0.7441 1 | 0.8253 3 | 0.5037 1 | 0.0268 3 | 1.1990 | 0.9962 8 |
| Predicted and calculated properties | | | | | | | | | |
| $P_n$ [for $n_d$] | | 2.1156 | 2.1168 | 2.1163 | 2.1159 | 2.1146 | 2.1146 | 2.1156 | 2.1152 |
| $P_\nu$ [for $\nu_d$] | | 20.02 | 19.81 | 19.87 | 19.95 | 20.06 | 20.06 | 20.00 | 20.03 |
| $P_{Q420}$ [for $Q_{420}$] | | 0.8143 | 0.8278 | 0.8695 | 0.9561 | 0.924 | 0.2646 | 1.1822 | 1.1062 |
| $P_{Q420}$ - (31.1 -14.1 * $P_n$) | | -0.4557 | -0.425 8 | -0.3912 | -0.3095 | -0.3600 | -1.0199 | -0.087 8 | -0.1673 |
| $P_{Q420}$ - (31.25 - 14.1 * $P_n$) | | -0.6057 | -0.575 8 | -0.5412 | -0.4595 | -0.5100 | -1.1699 | -0.237 8 | -0.3173 |
| **Table 5 Continued** | | | | | | | | | |
| Exemplary Glass | | 145 | 146 | 147 | 148 | 149 | 150 | 151 | 152 |
| Composition - mol.% | | | | | | | | | |
| $WO_3$ | mol.% | 21.78 | 21.78 | 22.22 | 22.12 | 22.99 | 22.26 | 22.09 | 21.98 |
| $B_2O_3$ | mol.% | 19.29 | 19.29 | 18.40 | 18.41 | 18.98 | 15.99 | 17.04 | 16.00 |

| Table 5 Continued | | | | | | | | | |
|---|---|---|---|---|---|---|---|---|---|
| Exemplary Glass | | 145 | 146 | 147 | 148 | 149 | 150 | 151 | 152 |
| Composition - mol.% | | | | | | | | | |
| $La_2O_3$ | mol.% | 18.03 | 18.02 | 17.49 | 17.29 | 19.99 | 20.44 | 19.37 | 19.49 |
| $TiO_2$ | mol.% | 15.08 | 15.08 | 14.56 | 14.36 | 8.99 | 16.30 | 15.57 | 16.50 |
| $Nb_2O_5$ | mol.% | 17.59 | 17.58 | 18.11 | 18.46 | 20.59 | 17.95 | 17.89 | 17.99 |
| $ZrO_2$ | mol.% | 7.10 | 7.10 | 7.02 | 7.02 | 8.19 | 7.00 | 7.31 | 6.99 |
| $Y_2O_3$ | mol.% | 1.05 | 1.05 | 1.04 | 1.04 | 0 | 0 | 0.55 | 1.00 |
| BaO | mol.% | 0 | 0 | 0.81 | 0.80 | 0.11 | 0 | 0 | 0 |
| CaO | mol.% | 0 | 0 | 0 | 0 | 0.11 | 0 | 0 | 0 |
| $Sb_2O_3$ | mol.% | 0.0126 | 0.0251 | 0.0133 | 0.0134 | 0 | 0 | 0 | 0 |
| $Cs_2O$ | mol.% | 0 | 0 | 0.18 | 0.33 | 0 | 0 | 0 | 0 |
| $Bi_2O_3$ | mol.% | 0 | 0 | 0.10 | 0.10 | 0 | 0 | 0.13 | 0 |
| $K_2O$ | mol.% | 0.002 | 0.002 | 0 | 0 | 0 | 0 | 0 | 0 |
| $Na_2O$ | mol.% | 0.0093 | 0.0093 | 0 | 0 | 0 | 0 | 0 | 0 |
| $SiO_2$ | mol.% | 0.0294 | 0.0294 | 0.0324 | 0.0324 | 0.034 | 0.0331 | 0.0328 | 0.0329 |
| $Ta_2O_5$ | mol.% | 0.0161 | 0.0161 | 0.0176 | 0.0176 | 0.0185 | 0.018 | 0.0178 | 0.0179 |
| MgO | mol.% | 0.0048 | 0.0048 | 0 | 0 | 0 | 0 | 0 | 0 |
| Exemplary Glass | | 145 | 146 | 147 | 148 | 149 | 150 | 151 | 152 |
| $SiCl_4$ | mol.% | 0.0027 | 0.0027 | 0 | 0 | 0 | 0 | 0 | 0 |
| $Al_2O_3$ | mol.% | 0.0019 | 0.0019 | 0 | 0 | 0 | 0 | 0 | 0 |
| $Fe_2O_3$ | mol.% | 0.0012 | 0.0012 | 0 | 0 | 0 | 0 | 0 | 0 |
| Composition constraints | | | | | | | | | |
| $B_2O_3 + SiO_2$ | mol.% | 19.32 | 19.32 | 18.44 | 18.44 | 19.02 | 16.02 | 17.08 | 16.04 |

EP 4 421 045 A1

| Composition constraints | | | | | | | | | |
|---|---|---|---|---|---|---|---|---|---|
| $min(RO, RE_mO_n, TiO_2)$ | mol.% | 4.781E-03 | 4.782E-03 | 0.8116 | 0.8002 | 0.2155 | 0 | 0 | 0 |
| $Nb_2O_5 + La_2O_3 + Gd_2O_3 + Y_2O_3$ | mol.% | 36.67 | 36.66 | 36.64 | 36.80 | 40.58 | 38.39 | 37.80 | 38.47 |
| $R_2O + RO$ | mol.% | 0.01615 | 0.01616 | 0.9910 | 1.132 | 0.2155 | 0 | 0 | 0 |
| $V + Fe + Cr + Ni$ | mol.% | 5.100E-04 | 5.100E-04 | 0 | 0 | 0 | 0 | 0 | 0 |
| Measured properties | | | | | | | | | |
| $n_d$ | | 2.0982 | 2.0959 | | | | | | |
| $n_F$ | | 2.1327 | 2.1301 | | | | | | |
| $n_{531.9}$ | | 2.1141 | 2.1117 | | | | | | |
| $n_{632.8}$ | | 2.0885 | 2.0861 | | | | | | |
| $n_{365,est}$ | | 2.1608 | 2.1578 | | | | | | |
| $\nu_d$ | | 22.6 | 23.0 | | | | | | |
| $d_{RT}$ | $g/cm^3$ | | | | 5.438 | | | 5.514 | |
| $-ln(k_{365})$ | | -3.7814 | -3.8347 | | | | | | |
| $-ln(k_{380})$ | | -2.4267 | -2.5533 | | | | | | |
| $B_{UV}$ | | -12.958 | -12.200 | | | | | | |
| $T_{liq}$ | °C | | | | | | 1170 | | |
| $Q_{420}$ | | 0.81545 | 0.55735 | | | | | | |
| Predicted and calculated properties | | | | | | | | | |
| $P_n$ [for $n_d$] | | 2.1146 | 2.1146 | 2.1192 | 2.1195 | 2.1299 | 2.1449 | 2.1357 | 2.1431 |
| $P_\nu$ [for $\nu_d$] | | 20.06 | 20.07 | 19.68 | 19.55 | 20.80 | 18.72 | 19.19 | 18.65 |
| $P_{Q420}$ [for $Q_{420}$] | | 1.0479 | 0.8137 | 0.9676 | 1.0166 | 1.6945 | 1.2914 | 1.1013 | 1.2426 |
| $P_{Q420} - (31.1 - 14.1 * P_n)$ | | -0.2197 | -0.4480 | -0.2517 | -0.1986 | 0.6259 | 0.4349 | 0.1148 | 0.3607 |
| $P_{Q420} - (31.25 - 14.1 * P_n)$ | | -0.3697 | -0.5980 | -0.4017 | -0.3486 | 0.4759 | 0.2849 | -0.0352 | 0.2107 |

| Table 5 Continued | | | | | | | | | |
|---|---|---|---|---|---|---|---|---|---|
| Exemplary Glass | | 153 | 154 | 155 | 156 | 157 | 158 | 159 | 160 |
| Composition - mol.% | | | | | | | | | |
| $WO_3$ | mol.% | 21.98 | 22.78 | 22.75 | 22.78 | 22.78 | 22.77 | 18.00 | 21.32 |
| Exemplary Glass | | 153 | 154 | 155 | 156 | 157 | 158 | 159 | 160 |
| $B_2O_3$ | mol.% | 16.56 | 18.18 | 18.17 | 18.18 | 18.18 | 18.18 | 24.99 | 18.53 |
| $La_2O_3$ | mol.% | 19.22 | 16.99 | 16.97 | 16.98 | 16.98 | 16.98 | 17.00 | 19.82 |
| $TiO_2$ | mol.% | 16.20 | 14.58 | 14.58 | 14.59 | 14.59 | 14.58 | 12.00 | 15.81 |
| $Nb_2O_5$ | mol.% | 17.84 | 17.79 | 17.76 | 17.79 | 17.78 | 17.78 | 22.00 | 17.81 |
| $ZrO_2$ | mol.% | 6.99 | 6.99 | 6.99 | 6.99 | 6.99 | 6.99 | 4.01 | 5.81 |
| $Y_2O_3$ | mol.% | 1.00 | 1.00 | 1.00 | 1.00 | 1.00 | 1.00 | 2.00 | 0.90 |
| BaO | mol.% | 0.14 | 1.60 | 1.60 | 1.60 | 1.60 | 1.60 | 0 | 0 |
| CaO | mol.% | 0 | 0.0034 | 0.0034 | 0.0034 | 0.0034 | 0.0034 | 0 | 0 |
| $Sb_2O_3$ | mol.% | 0 | 0 | 0 | 0.0126 | 0.0179 | 0.0252 | 0 | 0 |
| $Bi_2O_3$ | mol.% | 0 | 0 | 0.0996 | 0 | 0 | 0 | 0 | 0 |
| $K_2O$ | mol.% | 0 | 0.0021 | 0.0021 | 0.0021 | 0.0021 | 0.0021 | 0 | 0 |
| $Na_2O$ | mol.% | 0 | 0.0094 | 0.0094 | 0.0094 | 0.0094 | 0.0094 | 0 | 0 |
| SiOz | mol.% | 0.0327 | 0.0294 | 0.0295 | 0.0294 | 0.0294 | 0.0294 | 0 | 0 |
| $Ta_2O_5$ | mol.% | 0.0178 | 0.0166 | 0.0162 | 0.0166 | 0.0166 | 0.0166 | 0 | 0 |
| SrO | mol.% | 0 | 0.0131 | 0.0131 | 0.0131 | 0.0131 | 0.0131 | 0 | 0 |
| MgO | mol.% | 0 | 0.0048 | 0.0048 | 0.0048 | 0.0048 | 0.0048 | 0 | 0 |
| $SiCl_4$ | mol.% | 0 | 0.0027 | 0.0027 | 0.0027 | 0.0027 | 0.0027 | 0 | 0 |
| $Al_2O_3$ | mol.% | 0 | 0.0019 | 0.0019 | 0.0019 | 0.0019 | 0.0019 | 0 | 0 |
| $Fe_2O_3$ | mol.% | 0 | 0.0012 | 0.0012 | 0.0012 | 0.0012 | 0.0012 | 0 | 0 |

EP 4 421 045 A1

62

| Composition constraints | | | | | | | | | |
|---|---|---|---|---|---|---|---|---|---|
| $B_2O_3 + SiO_2$ | mol.% | 16.59 | 18.21 | 18.20 | 18.21 | 18.21 | 18.21 | 24.99 | 18.53 |
| $min(RO, RE_mO_n, TiO_2)$ | mol.% | 0.1411 | 1.622 | 1.623 | 1.622 | 1.622 | 1.622 | 0 | 0 |
| $Nb_2O_5 + La_2O_3 + Gd_2O_3 + Y_2O_3$ | mol.% | 38.07 | 35.78 | 35.73 | 35.77 | 35.76 | 35.76 | 41.00 | 38.53 |
| $R_2O + RO$ | mol.% | 0.1411 | 1.633 | 1.635 | 1.633 | 1.633 | 1.633 | 0 | 0 |
| $V + Fe + Cr + Ni$ | mol.% | 0 | 5.200E-04 | 5.200E-04 | 5.200E-04 | 5.200E-04 | 5.200E-04 | 0 | 0 |
| Measured properties | | | | | | | | | |
| $n_d$ | | | 2.1038 | 2.1038 | 2.1053 | 2.1066 | 2.1067 | 2.074 | 2.100 |
| $n_F$ | | | 2.1395 | 2.1393 | 2.1413 | 2.1428 | 2.1428 | 2.1078 | 2.1351 |
| $n_{531.9}$ | | | 2.1202 | 2.1201 | 2.1219 | 2.1233 | 2.1233 | 2.0905 | 2.1161 |
| $n_{632.8}$ | | | 2.0939 | 2.0941 | 2.0954 | 2.0969 | 2.0969 | | |
| $n_{365,est}$ | | | 2.1696 | 2.1691 | 2.1720 | 2.1736 | 2.1734 | 2.1326 | 2.1615 |
| $\nu_d$ | | | 22.3 | 22.4 | 22.1 | 22.1 | 22.1 | | |
| $d_{RT}$ | g/cm$^3$ | | | | | | | 5.177 | 5.493 |
| $-\ln(k_{365})$ | | | -3.6872 | -3.7697 | -3.7896 | -3.8815 | -3.9251 | | |
| $-\ln(k_{380})$ | | | -2.1959 | -2.2828 | -2.4428 | -2.5834 | -2.6947 | -1.6712 | -1.5551 |
| $B_{UV}$ | | | -13.978 | -13.743 | -12.898 | -12.284 | -12.055 | | -15.491 |
| $T_{liq}$ | °C | | | | | | | 1041 | 1123 |
| Exemplary Glass | | 153 | 154 | 155 | 156 | 157 | 158 | 159 | 160 |
| $T_g$ | °C | | | | | | | 635 | 649 |
| $Q_{420}$ | | | 1.3448 | 1.1777 | 0.85356 | 0.54066 | 0.41449 | | |
| Predicted and calculated properties | | | | | | | | | |
| $P_n$ [for $n_d$] | | | 2.1376 | 2.1156 | 2.1164 | 2.1156 | 2.1155 | 2.1155 | 2.0897 | 2.1265 |
| $P_\nu$ [for $\nu_d$] | | | 18.96 | 19.83 | 19.78 | 19.83 | 19.83 | 19.83 | 20.13 | 19.56 |

EP 4 421 045 A1

63

| Predicted and calculated properties | | | | | | | | | |
|---|---|---|---|---|---|---|---|---|---|
| $P_{Q420}$ [for $Q_{420}$] | | 1.267 | 1.3479 | 1.1771 | 1.0593 | 0.9575 | 0.8328 | 1.7157 | 1.3628 |
| $P_{Q420}$ - (31.1 - 14.1 * $P_n$) | | 0.3076 | 0.0783 | -0.0821 | -0.2110 | -0.3133 | -0.4384 | 0.0803 | 0.2460 |
| $P_{Q420}$ - (31.25 - 14.1 * $P_n$) | | 0.1576 | -0.0717 | -0.2321 | -0.3610 | -0.4633 | -0.5884 | -0.0697 | 0.0960 |

**Table 5 Continued**

| Exemplary Glass | | 161 | 162 | 163 | 164 | 165 | 166 | 167 | 168 |
|---|---|---|---|---|---|---|---|---|---|
| Composition - mol.% | | | | | | | | | |
| $WO_3$ | mol.% | 27.00 | 18.00 | 27.01 | 18.00 | 18.00 | 18.00 | 27.00 | 22.00 |
| $B_2O_3$ | mol.% | 15.00 | 24.99 | 18.99 | 21.00 | 20.00 | 16.00 | 17.01 | 18.49 |
| $La_2O_3$ | mol.% | 17.00 | 24.00 | 17.00 | 17.00 | 17.00 | 17.00 | 22.00 | 19.90 |
| $TiO_2$ | mol.% | 12.01 | 12.01 | 12.01 | 12.00 | 18.00 | 23.99 | 11.99 | 15.79 |
| $Nb_2O_5$ | mol.% | 22.00 | 15.00 | 15.00 | 22.00 | 17.00 | 15.00 | 15.00 | 17.90 |
| $ZrO_2$ | mol.% | 4.99 | 6.00 | 9.99 | 9.99 | 10.01 | 8.01 | 6.99 | 5.91 |
| $Y_2O_3$ | mol.% | 2.00 | 0 | 0 | 0 | 0 | 2.00 | 0 | 0 |
| Composition constraints | | | | | | | | | |
| $B_2O_3$ + $SiO_2$ | mol.% | 15.00 | 24.99 | 18.99 | 21.00 | 20.00 | 16.00 | 17.01 | 18.49 |
| $Nb_2O_5$ + $La_2O_3$ + $Gd_2O_3$ + $Y_2O_3$ | mol.% | 41.00 | 39.00 | 32.00 | 39.00 | 34.00 | 34.01 | 37.00 | 37.80 |
| Measured properties | | | | | | | | | |
| $n_d$ | | | 2.052 | | | 2.101 | | 2.089 | |
| $n_F$ | | | 2.0815 | | | 2.1355 | | 2.1215 | |
| $n_{531.9}$ | | | 2.0657 | | | 2.1165 | | 2.1039 | |
| $n_{365,est}$ | | | 2.1018 | | | 2.1651 | | 2.1469 | |
| $d_{RT}$ | g/cm3 | 5.570 | 5.445 | 5.518 | 5.298 | 5.314 | 5.401 | 5.711 | 5.490 |
| $-\ln(k_{380})$ | | | -2.1406 | | -1.7989 | -1.7586 | -1.8292 | -1.9096 | -1.6409 |

(continued)

| Measured properties | | | | | | | | | |
|---|---|---|---|---|---|---|---|---|---|
| $B_{UV}$ | | | | | | -14.312 | -16.218 | -14.355 | | -15.521 |
| $T_g$ | °C | | 652 | | | 651 | | | 646 |
| Predicted and calculated properties | | | | | | | | | |
| $P_n$ [for $n_d$] | | 2.1583 | 2.0819 | 2.1025 | 2.1135 | 2.1039 | 2.1278 | 2.1311 | 2.1266 |
| $P_v$ [for $v_d$] | | 17.01 | 24.83 | 22.21 | 19.64 | 19.89 | 17.73 | 21.98 | 19.38 |
| $P_{Q420}$ [for $Q_{420}$] | | 1.1834 | 1.9286 | 1.3198 | 1.6903 | 1.3637 | 0.9208 | 1.3934 | 1.3647 |
| Exemplary Glass | | 161 | 162 | 163 | 164 | 165 | 166 | 167 | 168 |
| $P_{Q420} - (31.1 - 14.1 * P_n)$ | | 0.5157 | 0.1840 | -0.1354 | 0.3908 | -0.0719 | -0.1766 | 0.3419 | 0.2494 |
| $P_{Q420} - (31.25 - 14.1 * P_n)$ | | 0.3657 | 0.0340 | -0.2854 | 0.2408 | -0.2219 | -0.3266 | 0.1919 | 0.0994 |

Table 6 below lists the glass compositions and properties for Comparative Glasses C1-C16.

**Table 6. Compositions and Properties of Comparative Example Glasses**

| Comparative Examples | | C1 | C2 | C3 | C4 | C5 | C6 | C7 | C8 |
|---|---|---|---|---|---|---|---|---|---|
| Reference | | [10] | [7] | [3] | [5] | [6] | [1] | [2] | [9] |
| Composition - mol.% | | | | | | | | | |
| $Er_2O_3$ | mol.% | 28.00 | 0 | 0 | 0 | 0 | 0 | 0 | 0 |
| $B_2O_3$ | mol.% | 26.99 | 19.95 | 17.90 | 20.33 | 21.48 | 16.45 | 17.96 | 28.99 |
| $Al_2O_3$ | mol.% | 12.00 | 0 | 0 | 0 | 0 | 0 | 0 | 0 |
| $SiO_2$ | mol.% | 20.01 | 0.0328 | 5.55 | 0.0313 | 0.0312 | 5.45 | 8.98 | 0.031 |
| $TiO_2$ | mol.% | 10.01 | 12.79 | 4.40 | 13.79 | 12.29 | 17.40 | 19.95 | 10.00 |
| $ZrO_2$ | mol.% | 2.99 | 7.35 | 12.82 | 7.71 | 8.00 | 5.32 | 3.99 | 7.00 |
| $La_2O_3$ | mol.% | 0 | 20.04 | 24.41 | 18.60 | 17.09 | 17.58 | 25.96 | 19.99 |
| $WO_3$ | mol.% | 0 | 21.64 | 0 | 18.48 | 20.98 | 0 | 0 | 17.99 |
| $Nb_2O_5$ | mol.% | 0 | 17.49 | 14.20 | 17.19 | 17.19 | 19.39 | 7.99 | 15.99 |
| $Bi_2O_3$ | mol.% | 0 | 0.35 | 0 | 0 | 0 | 0 | 0 | 0 |
| BaO | mol.% | 0 | 0.21 | 0 | 0 | 0 | 4.27 | 0 | 0 |
| CaO | mol.% | 0 | 0.14 | 0 | 0 | 0.60 | 0 | 14.98 | 0 |
| $Ta_2O_5$ | mol.% | 0 | 0.0179 | 0 | 0.017 | 0.017 | 0 | 0 | 0.0169 |
| $GeO_2$ | mol.% | 0 | 0 | 20.14 | 0 | 0 | 0 | 0 | 0 |
| $Gd_2O_3$ | mol.% | 0 | 0 | 0.58 | 0 | 0 | 0 | 0 | 0 |
| $K_2O$ | mol.% | 0 | 0 | 0 | 2.14 | 0 | 1.04 | 0 | 0 |
| $Y_2O_3$ | mol.% | 0 | 0 | 0 | 0.80 | 0.80 | 0 | 0 | 0 |
| $Li_2O$ | mol.% | 0 | 0 | 0 | 0.88 | 0.82 | 0 | 0 | 0 |
| $Na_2O$ | mol.% | 0 | 0 | 0 | 0.0303 | 0 | 1.32 | 0.0247 | 0 |
| MgO | mol.% | 0 | 0 | 0 | 0 | 0.70 | 0 | 0 | 0 |
| ZnO | mol.% | 0 | 0 | 0 | 0 | 0 | 8.05 | 0 | 0 |
| SrO | mol.% | 0 | 0 | 0 | 0 | 0 | 3.16 | 0 | 0 |
| $P_2O_5$ | mol.% | 0 | 0 | 0 | 0 | 0 | 0.57 | 0 | 0 |
| $CeO_2$ | mol.% | 0 | 0 | 0 | 0 | 0 | 0 | 0.15 | 0 |
| $Fe_2O_3$ | mol.% | 0 | 0 | 0 | 0 | 0 | 0 | 0.0096 | 0 |
| Measured properties | | | | | | | | | |
| $n_d$ | | 1.828 | | 1.981 | | | | | |
| Comparative Examples | | C1 | C2 | C3 | C4 | C5 | C6 | C7 | C8 |
| $n_F$ | | | | 2.0035 | | | | | |
| $n_{531.9}$ | | | | 1.9915 | | | | | |
| $n_{632.8}$ | | | | 1.9746 | | | | | |
| $n_{365,est}$ | | | | 2.0140 | | | | | |

(continued)

| Comparative Examples | | C1 | C2 | C3 | C4 | C5 | C6 | C7 | C8 |
|---|---|---|---|---|---|---|---|---|---|
| $\nu_d$ | | | | 31.0 | | | | | |
| $d_{RT}$ | g/cm³ | | | | | | | | 5.245 |
| Predicted and calculated properties | | | | | | | | | |
| $P_n$ [for $n_d$] | | 1.822 | 2.116 | 1.997 | 2.088 | 2.087 | 2.049 | 2.015 | 2.046 |
| $P_v$ [for $\nu_d$] | | 45.84 | 21.13 | 31.38 | 21.91 | 22.19 | 20.52 | 29.38 | 25.66 |
| $P_{Q420}$ [for $Q_{420}$] | | 5.078 | 0.9848 | 2.897 | 1.616 | 1.602 | 2.107 | 2.570 | 2.022 |
| **Table 6 Continued** | | | | | | | | | |
| Comparative Ex amples | | C9 | C10 | C11 | C12 | C13 | C14 | C15 | C16 |
| Reference | | [4] | [8] | [11] | [5] | [11] | [11] | [11] | [11] |
| Composition - mol.% | | | | | | | | | |
| $B_2O_3$ | mol.% | 28.99 | 20.54 | 25.60 | 23.00 | 25.61 | 25.60 | 25.61 | 25.61 |
| $SiO_2$ | mol.% | 0.031 | 4.05 | 13.74 | 0.0316 | 13.73 | 13.73 | 13.72 | 13.73 |
| $TiO_2$ | mol.% | 10.00 | 16.42 | 10.75 | 13.54 | 12.75 | 12.75 | 4.75 | 6.74 |
| $ZrO_2$ | mol.% | 7.00 | 14.20 | 9.23 | 6.99 | 7.23 | 7.23 | 7.23 | 7.24 |
| $La_2O_3$ | mol.% | 19.99 | 22.71 | 9.15 | 19.99 | 9.15 | 9.15 | 9.15 | 9.16 |
| $WO_3$ | mol.% | 17.99 | 0 | 0 | 22.99 | 0 | 0 | 0 | 0 |
| $Nb_2O_5$ | mol.% | 15.99 | 8.71 | 7.32 | 13.45 | 7.31 | 7.32 | 15.32 | 13.32 |
| CaO | mol.% | 0 | 0 | 24.21 | 0 | 24.21 | 16.21 | 24.21 | 24.21 |
| $Ta_2O_3$ | mol.% | 0.0169 | 0 | 0 | 0.0129 | 0 | 0 | 0 | 0 |
| $Gd_2O_3$ | mol.% | 0 | 2.95 | 0 | 0 | 0 | 0 | 0 | 0 |
| $Y_2O_3$ | mol.% | 0 | 0.63 | 0 | 0 | 0 | 0 | 0 | 0 |
| ZnO | mol.% | 0 | 9.79 | 0 | 0 | 0 | 0 | 0 | 0 |
| SrO | mol.% | 0 | 0 | 0 | 0 | 0 | 8.00 | 0 | 0 |
| Measured properties | | | | | | | | | |
| $n_d$ | | | 2.0023 | | | | | | |
| $n_F$ | | | 2.0268 | | | | | | |
| $n_{531.9}$ | | | 2.0137 | | | | | | |
| $n_{632.8}$ | | | 1.9954 | | | | | | |
| $n_{365,est}$ | | | 2.0400 | | | | | | |
| $\nu_d$ | | | 29.2 | | | | | | |
| Predicted and calculated properties | | | | | | | | | |
| $P_n$ [for $n_d$] | | 2.046 | 2.045 | 1.855 | 2.079 | 1.856 | 1.856 | 1.883 | 1.876 |
| $P_v$ [for $\nu_d$] | | 25.66 | 28.39 | 35.88 | 23.83 | 34.91 | 34.69 | 33.51 | 33.86 |
| Comparative Examples | | C9 | C10 | C11 | C12 | C13 | C14 | C15 | C16 |
| $P_{Q420}$ [for $Q_{420}$] | | 2.022 | 1.952 | 3.103 | 1.538 | 3.001 | 2.883 | 3.409 | 3.308 |

The reference key for each of the Comparative Glasses listed in Table 6 is as follows: [1] CN113816600; [2] EP4071118; [3] JPH09278480; [4] US20220306517A; [5] U.S. Patent Application Serial No. 17/874,792; [6] U.S. Patent Application Serial No. 18/096,938; [7] U.S. Provisional Patent Application Serial No. 63/323,645; [8] TW202012333; [9] US2022306517; [10] US5747397A; [11] US20220073409A.

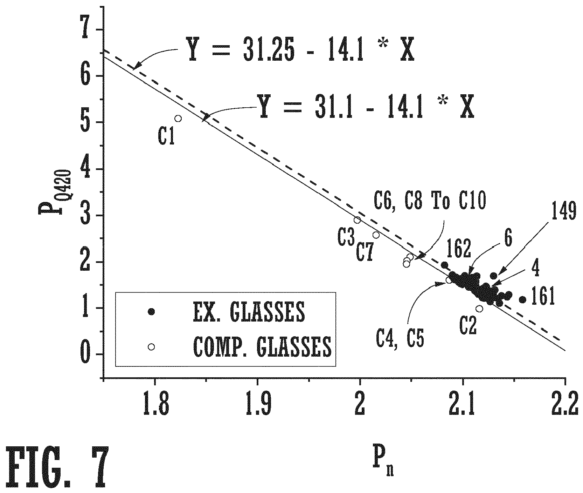

FIG. 7 is a plot showing the relationship between the refractive index parameter $P_n$ and the transmittance evaluation parameter $P_{Q420}$ for some of the Exemplary Glasses and some of the Comparative Glasses. The Exemplary Glasses (filled circles) are the Examples 1, 3 to 9, 11, 18, 20, 31, 33 to 40, 43 to 48, 51 to 55, 59, 64 to 70, 72, 73, 75 to 98, 102, 103, 110 to 119, 149 to 154, 159 to 162, 164, 167 and 168 from Table 5. The Comparative Glasses (open circles) are the Examples C1 to C10 from Table 6. The refractive index parameter $P_n$ that predicts the refractive index at 587.56 nm was determined according to Formula (XXIII). The transmittance evaluation parameter $P_{Q420}$ that predicts the blue transmittance attribute was determined according to Formula (XXII). All of the Exemplary Glasses and Comparative Glasses shown in FIG. 7 have the features specified in Table 7. In Table 7, the specification "Not limited" refers to a limitation that was not considered when selecting the compositions.

**Table 7. Limitations for glass compositions shown in FIG.7**

| Component | Unit | Min | Max |
|---|---|---|---|
| $B_2O_3$ | mol.% | 10 | 30 |
| $TiO_2$ | mol.% | 0.3 | 28.5 |
| $SiO_2$ | mol.% | 0 | 30 |
| $P_2O_5$ | mol.% | 0 | 30 |
| PbO | mol.% | 0 | 10 |
| Cu + Co | at.% | 0 | 0.005 |
| $RE_mO_n$ | mol.% | 0 | 28.5 |
| $Nb_2O_3 + La_2O_3 + Gd_3O_3 + Y_2O_3$ | mol.% | 0 | 44.5 |
| $R_2O + RO$ | mol.% | 0 | 25 |
| V + Fe + Cr + Ni | at.% | 0 | 1 |
| $P_n$ | | 1.8 | Not limited |

The Comparative Glasses of FIG. 7 were selected as having the highest value of the transmittance evaluation parameter $P_{Q420}$ values over the range of values of the refractive index parameter $P_n$ shown in FIG. 7 among the known glasses that have the features specified in Table 7.

The line corresponding to the formula y = 31.1 - 14.1 * x shown in FIG. 7 provides a visual representation of the differences between the Comparative Glasses having the features specified in Table 7 and the Exemplary Glasses 1, 3 to 9, 11, 18, 20, 31, 33 to 40, 43 to 48, 51 to 55, 59, 64 to 70, 72, 73, 75 to 98, 102, 103, 110 to 119, 149 to 154, 159 to 162, 164, 167 and 168. As can be seen in FIG. 7, the mentioned Exemplary Glasses (filled circles) and none of the Comparative Glasses (open circles) represented in FIG. 7 fall above the line y = 31.1 - 14.1 * x, where y corresponds to the transmittance evaluation parameter $P_{Q420}$ and x corresponds to the refractive index parameter $P_n$. In other words, some of the Exemplary Glasses and none of the Comparative Glasses represented in FIG. 7 satisfy the following formula (XXIV)(a):

$$P_{Q420} - (31.1 - 14.1 * P_n) > 0.00 \quad (XXIV)(a)$$

As can also be seen in FIG. 7, some of Exemplary Glasses and none of the Comparative Glasses represented in FIG. 7 fall above the line y = 31.25 - 14.1 * x, where y corresponds to the transmittance evaluation parameter $P_{Q420}$ and x corresponds to the refractive index parameter $P_n$. In other words, some of the Exemplary Glasses and none of the Comparative Glasses represented in FIG. 7 satisfy the following formula (XXIV)(b):

$$P_{Q420} - (31.25 - 14.1 * P_n) > 0.00 \quad (XXIV)(b)$$

The Exemplary Glasses represented in FIG. 7 are, by prediction, superior in terms of the combination of $P_n$ and $P_{Q420}$ to the best known Comparative Glasses that have the features specified in Table 7. Based on the prediction, it is expected that the Exemplary Glasses shwon in FIG. 7 are superior in terms of the combination of $n_d$ and $Q_{420}$ to the best known Comparative Glasses that have the features specified in Table 7.

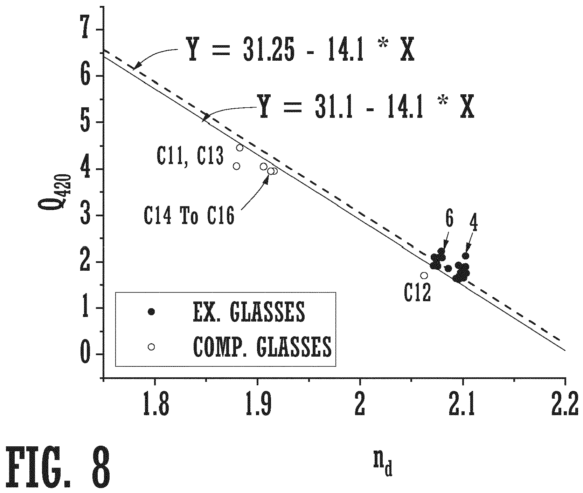

FIG. 8 is a plot showing the relationship between the refractive index at 587.56 nm $n_d$ and the blue transmittance attribute $Q_{420}$ for some of the Exemplary Glasses and some of the Comparative Glasses. The Exemplary Glasses (filled circles) are the Examples 4 to 11, 18, 20, 36, 70 to 72, 74, 98 and 111 from Table 5. The Comparative Glasses (open circles) are the Examples C11 to C16 from Table 6. All Exemplary Glasses and Comparative Glasses shown in FIG. 8 have the features specified in Table 8.

**Table 8. Limitations for glass compositions shown in FIG.8**

| Quantity | Unit | Min | Max |
|---|---|---|---|
| $B_2O_3$ | mol.% | 10 | 30 |
| $TiO_2$ | mol.% | 0.3 | 28.5 |
| $SiO_2$ | mol.% | 0 | 30 |
| $P_2O_5$ | mol.% | 0 | 30 |
| PbO | mol.% | 0 | 10 |
| Cu + Co | at.% | 0 | 0.005 |
| $RE_mO_n$ | mol.% | 0 | 28.5 |
| $Nb_2O_3 + La_2O_3 + Gd_2O_3 + Y_2O_3$ | mol.% | 0 | 44.5 |
| $R_2O + RO$ | mol.% | 0 | 25 |
| V + Fe + Cr + Ni | at.% | 0 | 1 |
| $n_d$ | | 1.8 | Not limited |

The Comparative Glasses of FIG. 8 were selected as having the highest measured values of the blue transmittance attribute $Q_{420}$ over the range of refractive index at 587.56 nm $n_d$ shown in FIG. 8 among the known glasses that have the mentioned features specified in Table 8.

The line corresponding to the formula y = 31.1 - 14.1 * x shown in FIG. 8 provides a visual representation of the differences between the Comparative Glasses having the features specified in Table 8 and the Exemplary Glasses 4 to 11, 18, 20, 36, 70 to 72, 74, 98 and 111. As can be seen in FIG. 8, the mentioned Exemplary Glasses (filled circles) and none of the Comparative Glasses (open circles) represented in FIG. 8 fall above the line y = 31.1 - 14.1 * x, where y corresponds to $Q_{420}$ and x corresponds to $n_d$. In other words, some of the Exemplary Glasses and none of the Comparative Glasses represented in FIG. 8 satisfy the following formula (XXV)(a):

$$Q_{420} - (31.1 - 14.1 * n_d) > 0.00 \quad (XXV)(a)$$

As can also be seen in FIG. 8, some of Exemplary Glasses and none of the Comparative Glasses represented in FIG. 8 fall above the line y = 31.25 - 14.1 * x, where y corresponds to $Q_{420}$ and x corresponds to $n_d$. In other words, the said Exemplary Glasses and none of the Comparative Glasses represented in FIG. 8 satisfy the following formula (XXV)(b):

$$Q_{420} - (31.25 - 14.1 * n_d) > 0.00 \quad (XXV)(b)$$

The Exemplary Examples represented in FIG. 8 that satisfy the formula (XXV)(b) are characterized by the highest values of $Q_{420}$ over the range of $n_d$ shown in FIG. 8 among the glasses that have the features specified in Table 8.

This means that, under the conditions specified in Table 8 above, some of the Exemplary Glasses have higher measured values of the blue transmittance attribute $Q_{420}$ at comparable measured values of the refractive index at 587.56 nm $n_d$ than the best of the Comparative Glasses satisfying the same conditions. This can be interpreted as these Exemplary Glasses, according to measurements, have higher values of $Q_{420}$ at comparable values of $n_d$ among the glasses, i.e. they are, according to measurement, superior in terms of a combination of $n_d$ and $Q_{420}$ (i.e. a higher $Q_{420}$ for a given $n_d$ or a higher $n_d$ for a given $Q_{420}$) to the best known Comparative Glasses that have the features specified in Table 8.

The values of all attributes specified in Tables 7 and 8 and Formulas (XXIV)(a), (XXIV)(b), (XXV)(a) and (XXV)(b) for the Comparative Glasses C1 to C16 plotted in FIGS 7 and 8 are presented in Table 9 below. Full compositions of comparative example glasses are presented in Table 6. Full compositions and attributes of the Exemplary Glasses are presented in Table 5.

**Table 9. Attributes of Comparative Glasses with Features of Tables 7 and 8**

| Ex. # | | C1 | C2 | C3 | C4 | C5 | C6 | C7 | C8 |
|---|---|---|---|---|---|---|---|---|---|
| Composition | | | | | | | | | |
| $TiO_2$ | mol.% | 10.00 | 12.80 | 4.40 | 13.79 | 12.29 | 17.41 | 19.95 | 10.00 |
| $SiO_2$ | mol.% | 20.00 | 0.03 | 5.55 | 0.0318 | 0.0361 | 5.45 | 8.98 | 0.031 |
| $P_2O_5$ | mol.% | 0 | 0 | 0 | 0 | 0 | 0.58 | 0 | 0 |
| $RE_mO_n$ | mol.% | 27.99 | 20.03 | 24.99 | 19.41 | 17.89 | 17.58 | 26.11 | 19.99 |
| PbO | mol.% | 0 | 0 | 0 | 0 | 0 | 0 | 0 | 0 |
| $Nb_2O_5 + La_2O_3 + Gd_2O_3 + Y_2O_3$ | mol.% | 0 | 37.52 | 39.19 | 36.60 | 35.08 | 36.97 | 33.95 | 35.98 |
| $R_2O + RO$ | mol.% | 0 | 0.36 | 0 | 3.03 | 2.10 | 17.83 | 15.00 | 0 |
| V + Fe + Cr + Ni | at.% | 0 | 5.23E-4 | 0 | 5.04E-4 | 5.02E-4 | 0 | 0.0049 | 0 |
| Cu + Co | at.% | 0 | 0 | 0 | 0 | 0 | 0 | 0 | 0 |
| Predicted and calculated properties | | | | | | | | | |
| $P_n$ | | 1.8223 | 2.116 | 1.9972 | 2.0878 | 2.0866 | 2.0488 | 2.0153 | 2.0457 |
| $P_{Q420}$ | | 5.0784 | 0.9844 | 2.8974 | 1.6165 | 1.6025 | 2.1065 | 2.5699 | 2.0226 |
| $P_{Q420} - (31.1 - 14.1 * P_n)$ | | -0.3266 | -0.2803 | -0.0417 | -0.0448 | -0.0766 | -0.1057 | -0.1141 | -0.2326 |
| $P_{Q420} - (31.25 - 14.1 * P_n)$ | | -0.4766 | -0.4303 | -0.1917 | -0.1948 | -0.2266 | -0.2557 | -0.2641 | -0.3826 |
| **Table 9 Continued** | | | | | | | | | |
| Ex. # | | C9 | C10 | C11 | C12 | C13 | C14 | C15 | C16 |
| Composition | | | | | | | | | |
| $TiO_2$ | mol.% | 10.00 | 16.42 | 10.75 | 13.53 | 12.75 | 12.75 | 4.75 | 6.74 |
| Ex. # | | C9 | C10 | C11 | C12 | C13 | C14 | C15 | C16 |
| $SiO_2$ | mol.% | 0.031 | 4.02 | 13.73 | 0.0321 | 13.73 | 13.73 | 13.72 | 13.73 |
| $P_2O_5$ | mol.% | 0 | 0 | 0 | 0 | 0 | 0 | 0 | 0 |
| $RE_mO_n$ | mol.% | 19.99 | 26.30 | 9.15 | 19.99 | 9.16 | 9.16 | 9.15 | 9.16 |
| PbO | mol.% | 0 | 0 | 0 | 0 | 0 | 0 | 0 | 0 |
| $Nb_2O_5 + La_2O_3 + Gd_2O_3 + Y_2O_3$ | mol.% | 35.97 | 35.01 | 16.47 | 33.44 | 16.47 | 16.47 | 24.47 | 22.47 |
| $R_2O + RO$ | mol.% | 0 | 9.80 | 24.21 | 0.0159 | 24.21 | 24.21 | 24.21 | 24.21 |
| V + Fe + Cr + Ni | at.% | 0 | 0 | 0 | 5.13E-4 | 0 | 0 | 0 | 0 |
| Cu + Co | at.% | 0 | 0 | 0 | 0 | 0 | 0 | 0 | 0 |

(continued)

| Measured properties | | | | | | | | |
|---|---|---|---|---|---|---|---|---|
| $n_d$ | | | 1.8795 | 2.0624 | 1.8827 | 1.9161 | 1.9129 | 1.9059 |
| $Q_{420}$ | | | 4.0614 | 1.7001 | 4.4574 | 3.9555 | 3.9546 | 4.0513 |
| $Q_{420}$ - (31.1 - 14.1 * $n_d$) | | | -0.5376 | -0.3199 | -0.0964 | -0.1273 | -0.1734 | -0.1754 |
| $Q_{420}$ - (31.25 - 14.1 * $n_d$) | | | -0.6876 | -0.4699 | -0.2464 | -0.2773 | -0.3234 | -0.3254 |
| Predicted and calculated properties | | | | | | | | |
| $P_n$ | 2.0457 | 2.0452 | 1.8552 | 2.0788 | 1.8562 | 1.8563 | 1.8832 | 1.8764 |
| $P_{Q420}$ | 2.0225 | 1.9515 | 3.1027 | 1.5378 | 3.001 | 2.8828 | 3.4093 | 3.3076 |
| $P_{Q420}$ - (31.1- 14.1 * $P_n$) | -0.2333 | -0.3107 | -1.8392 | -0.2515 | -1.9259 | -2.0432 | -1.1381 | -1.3344 |
| $P_{Q420}$ - (31.25 - 14.1 * $P_n$) | -0.3833 | -0.4607 | -1.9892 | -0.4015 | -2.0759 | -2.1932 | -1.2881 | -1.4844 |

As follows from FIG. 7 and 8, both predicted and measured property data confirms that some of the Exemplary Glasses have better combination of refractive index at 587.56 nm $n_d$ and blue transmittance attribute $Q_{420}$ than the best of the Comparative Glasses that have the features specified in Tables 7 and 8 accordingly.

It should be noted that the data reported in some patent sources may not be sufficient to calculate the quantity $Q_{420}$ according to the algorithm disclosed above referred to the Training Dataset. In particular, in U.S. Patent Application Serial No. 17/874,792 and [US20220073409A referred to in Table 6, it was stated that the glass compositions are characterized by high blue transmittance, but detailed transmittance data were not reported. The measured data presented in Tables 6 and 9 for these glasses are the results of authors' experiments on the exemplary compositions specified in the table, which compositions were taken from the mentioned patent applications.

The following non-limiting aspects are encompassed by the present disclosure. To the extent not already described, any one of the features of the first through the twenty-sixth aspect may be combined in part or in whole with features of any one or more of the other aspects of the present disclosure to form additional aspects, even if such a combination is not explicitly described.

According to a first aspect, the glass comprises a plurality of components, the glass having a composition of the components comprising greater than or equal to 0.3 mol.% and less than or equal to 30.0 mol.% NbzOs, greater than or equal to 0.3 mol.% and less than or equal to 15.0 mol.% ZrOz, greater than or equal to 0.0 mol.% and less than or equal to 28.0 mol.% TiOz, greater than or equal to 0.0 mol.% and less than or equal to 28.0 mol.% $La_2O_3$, greater than or equal to 0.0 mol.% and less than or equal to 10.0 mol.% $P_2O_5$, greater than or equal to 0.0 mol.% and less than or equal to 10.0 mol.% PbO, greater than or equal to 0.0 mol.% and less than or equal to 10.0 mol.% $GeO_2$, greater than or equal to 0 mol.% and less than or equal to 0.12 mol.% $Bi_2O_3$, greater than or equal to 0.0 mol.% and less than or equal to 30.0 mol.% $RE_mO_n$, a sum of $B_2O_3 + SiO_2$ is greater than or equal to 5.0 mol.% and less than or equal to 35.0 mol.% and may optionally contain one or more components selected from CaO, BaO, ZnO, $Na_2O$, $WO_3$, $Al_2O_3$, $Li_2O$, $TeO_2$, $K_2O$, SrO and MgO, wherein the composition of the components satisfies the condition: 0 mol.% $\leq$ min(RO,$RE_mO_n$,$TiO_2$) $\leq$ 10 mol.%, and the glass satisfies the conditions: $2.092 \leq P_n \leq 2.25$ and $P_v < 28$, where $P_v$ is a dispersion parameter, calculated from the glass composition in terms of mol.% of the components according to the Formula (XXI):

$$P_v = 33.17 + 0.081348 * La_2O_3 - 0.41202 * TiO_2 + 0.20789 * B_2O_3 + 0.17549 * SiO_2 +$$

$$0.078439 * ZrO_2 - 0.58620 * Nb_2O_5 + 0.092226 * CaO + 0.076225 * BaO + 0.064344 *$$

$$Y_2O_3 - 0.14136 * ZnO + 0.16651 * Gd_2O_3 + 0.081754 * Na_2O - 0.12348 * WO_3 + 0.21238$$

$$* Al_2O_3 + 0.051232 * Li_2O - 0.38171 * PbO - 0.67510 * Bi_2O_3 + 0.027632 * GeO_2 -$$

$$0.17926 * TeO_2 + 0.17466 * Er_2O_3 + 0.25172 * Yb_2O_3 + 0.15621 * K_2O + 0.066001 * SrO$$

$$+ 0.15965 * MgO,$$

(XXI)

$P_n$ is a refractive index parameter, calculated from the glass composition in terms of mol.% of the components according to the Formula (XXIII):

$$P_n = 1.863 + 0.0054878 * La_2O_3 + 0.002915 * TiO_2 - 0.0041892 * B_2O_3 - 0.0036169 *$$

$$SiO_2 + 0.0023451 * ZrO_2 + 0.0062709 * Nb_2O_5 + 0.0034815 * Y_2O_3 + 0.00018842 * ZnO$$

$$+ 0.0062484 * Gd_2O_3 - 0.0028025 * Na_2O + 0.002711 * WO_3 - 0.0041 * Al_2O_3 -$$

$$0.0014274 * Li_2O + 0.0053973 * PbO + 0.011116 * Bi_2O_3 - 0.0019963 * GeO_2 +$$

(XXIII)

$$0.00060157 * TeO_2 + 0.0056358 * Er_2O_3 + 0.0045709 * Yb_2O_3 - 0.0044944 * K_2O -$$

$$0.0013229 * MgO,$$

where $RE_mO_n$ is a total sum of rare earth metal oxides, $min(RO, RE_mO_n, TiO_2)$ refers to the smallest of the concentrations (in mol%) of RO, $RE_mO_n$, and TiOz, and an asterisk (*) means multiplication.

According to a second aspect, the glass of the first aspect, wherein the glass has refractive index at 587.56 nm, $n_d$ that is greater than or equal to 2.092 and less than or equal to 2.25 and Abbe number, $v_d$ that is less than or equal to 28.

According to a third aspect, the glass of any one of aspects 1-2, wherein the composition of the components comprises greater than or equal to 10.0 mol.% and less than or equal to 30.0 mol.% $B_2O_3$, greater than or equal to 10.0 mol.% and less than or equal to 28.0 mol.% $La_2O_3$, greater than or equal to 1.0 mol.% and less than or equal to 25.0 mol.% $Nb_2O_5$, greater than or equal to 1.0 mol.% and less than or equal to 25.0 mol.% $TiO_2$, greater than or equal to 0.0 mol.% and less than or equal to 20.0 mol.% $SiO_2$, greater than or equal to 0.0 mol.% and less than or equal to 10.0 mol.% CdO, greater than or equal to 0.0 mol.% and less than or equal to 10.0 mol.% TeOz, greater than or equal to 0.0 mol.% and less than or equal to 10.0 mol.% ZnO, greater than or equal to 0.0 mol.% and less than or equal to 0.3 mol.% $Sb_2O_3$, greater than or equal to 0.0E+00 mol.% and less than or equal to 5.0E-03 at.% Cu + Co, greater than or equal to 10.0 mol.% and less than or equal to 30.0 mol.% $RE_mO_n$, greater than or equal to 0.0 at.% and less than or equal to 1.0 at.% F, a sum of $Nb_2O_5 + TiO_2$ is greater than or equal to 20.0 mol.% and less than or equal to 45.0 mol.%, a sum of $Nb_2O_5 + La_2O_3 + Gd_2O_3 + Y_2O_3$ is greater than or equal to 5.0 mol.% and less than or equal to 45.0 mol.%, a sum of $ZrO_2 + WO_3$ is greater than or equal to 3.0 mol.% and less than or equal to 40.0 mol.%, a sum of $Li_2O + Na_2O + K_2O$ is greater than or equal to 0.0 mol.% and less than or equal to 15.0 mol.% and a sum of $MgO + CaO + SrO + BaO$ is greater than or equal to 0.0 mol.% and less than or equal to 15.0 mol.%, wherein the composition of the components is substantially free of $Bi_2O_3$, substantially free of PbO, substantially free of $ThO_2$ and substantially free of V, Fe, Cr and Ni and wherein the composition of the components satisfies the conditions: $0$ mol.% $\leq min(RE_mO_n, TiO_2, Nb_2O_5) \leq 18$ mol.%, where $min(RE_mO_n, TiO_2, Nb_2O_5)$ refers to the smallest of the concentrations (in mol%) of $RE_mO_n$, $TiO_2$, and $Nb_2O_5$.

According to a fourth aspect, the glass of any one of aspects 1-3, wherein the composition of the components comprises greater than or equal to 10.0 mol.% and less than or equal to 30.0 mol.% $B_2O_3$, greater than or equal to 10.0 mol.% and less than or equal to 28.0 mol.% $La_2O_3$, greater than or equal to 1.0 mol.% and less than or equal to 25.0 mol.% $TiO_2$, greater than or equal to 0.3 mol.% and less than or equal to 25.0 mol.% $Nb_2O_5$, greater than or equal to 0.0 mol.% and less than or equal to 20.0 mol.% $SiO_2$, greater than or equal to 0.0 mol.% and less than or equal to 10.0 mol.% CdO, greater than or equal to 0.0 mol.% and less than or equal to 10.0 mol.% TeOz, greater than or equal to 0.0 mol.% and less than or equal to 10.0 mol.% ZnO, greater than or equal to 0.0 mol.% and less than or equal to 5.0 mol.% PbO, greater than or equal to 0.0 mol.% and less than or equal to 5.0 mol.% ThOz, greater than or equal to 0.0 mol.% and less than or equal to 0.5 mol.% $Sb_2O_3$, greater than or equal to 0.0E+00 at.% and less than or equal to 5.0E-03 at.% Cu + Co, greater than or equal to 0.0 at.% and less than or equal to 1.0 at.% F, a sum of $Nb_2O_5 + TiO_2$ is greater than or equal to 20.0 mol.% and less than or equal to 45.0 mol.%, a sum of $Nb_2O_5 + La_2O_3 + Gd_2O_3 + Y_2O_3$ is greater

than or equal to 5.0 mol.% and less than or equal to 45.0 mol.%, a sum of $ZrO_2$ + $WO_3$ is greater than or equal to 3.0 mol.% and less than or equal to 40.0 mol.%, a sum of $Li_2O$ + $Na_2O$ + $K_2O$ is greater than or equal to 0.0 mol.% and less than or equal to 15.0 mol.%, a sum of MgO + CaO + SrO + BaO is greater than or equal to 0.0 mol.% and less than or equal to 15.0 mol.% and a sum of $Y_2O_3$ + $Gd_2O_3$ + $Er_2O_3$ is greater than or equal to 0.0 mol.% and less than or equal to 15.0 mol.% and wherein the composition of the components is substantially free of V, Fe, Cr and Ni.

According to a fifth aspect, the glass of any one of aspects 1-4, wherein the glass satisfies the conditions: $P_{Q420}$ - (31.1 - 14.1 * $P_n$) > 0.000, where

$P_{Q420}$ is a blue transmittance parameter, calculated from the glass composition in terms of mol.% of the components according to the Formula (XXII):

$$P_{Q420} = -\ln(\exp(-(2.153 + 0.022544 * La_2O_3 - 0.051067 * TiO_2 + 0.020256 * B_2O_3 +$$
$$0.015419 * SiO_2 + 0.023223 * CaO + 0.030580 * BaO - 0.027830 * Y_2O_3 - 0.018973 *$$
$$ZnO - 0.050965 * Gd_2O_3 + 0.010653 * Na_2O - 0.036583 * WO_3 - 0.019948 * Al_2O_3 +$$
$$0.014393 * Li_2O + 0.071064 * PbO - 0.33385 * Bi_2O_3 - 0.099409 * TeO_2 + 0.10072 * \quad \text{(XXII)}$$
$$Er_2O_3 + 0.047677 * Yb_2O_3 + 0.0098813 * K_2O + 0.0084835 * SrO + 0.029429 * MgO)) +$$
$$7 * \max(0, Sb_2O_3 - 0.015 * Alk_2O) + 0.4 * Bi_2O_3),$$

where $RE_mO_n$ is a total sum of rare earth metal oxides, $R_2O$ is a total sum of monovalent metal oxides, $Alk_2O$ is a sum of alkali metal oxides, RO is a total sum of divalent metal oxides, $\max(0, Sb_2O_3 - 0.015 * Alk_2O)$ refers to the greatest of zero and the difference ($Sb_2O_3 - 0.015 * Alk_2O$), "exp" refers to exponent, "ln" refers to natural logarithm, and an asterisk (*) means multiplication.

According to a sixth aspect, the glass of any one of aspects 1-5, wherein the glass satisfies the conditions: $Q_{420}$ - (31.1 - 14.1 * $n_d$) > 0.000, where $n_d$ is refractive index at 587.56 nm, $Q_{420}$ is value of a blue transmittance attribute, calculated according to the Formula (VIII):

$$Q_{420} = -\ln(k_{365\,nm}, cm^{-1}) - B_{UV} * 0.36, \quad \text{(VIII)}$$

where $k_{365}$ is the light absorption coefficient at the wavelength $\lambda$ = 365 nm calculated by formula (II):

$$k = -\ln(\tau_{int,d,365} / (d/10)), \quad \text{(II)}$$

$B_{UV}$ is a coefficient calculated by formula (XVIII):

$$B_{UV} = \frac{-ln\left(-\ln(\tau_{int,10,370})\right) + ln\left(-\ln(\tau_{int,10,360})\right)}{\left(\frac{1000}{370} - \frac{1000}{360}\right)}, \quad \text{(XVIII)}$$

d is the thickness of the sample, $\lambda$ is the wavelength, $\tau_{int,d,\lambda}$ is the internal transmittance of the sample of thickness d at the wavelength $\lambda$, and "ln" refers to natural logarithm.

According to a seventh aspect, the glass of any one of aspects 1-6, wherein the composition of the components comprises a sum of $GeO_2$ + $TeO_2$ is greater than or equal to 0.0 mol.% and less than or equal to 5.0 mol.% and a sum of V + Fe + Cr + Co + Ni + Cu + Sb is greater than or equal to 0.000 at.% and less than or equal to 0.030 at.%, wherein the composition of the components is substantially free of arsenic, substantially free of fluorine, substantially free of PbO and substantially free of $ThO_2$.

According to an eighth aspect, the glass of any one of aspects 1-3 and 5-7, wherein the composition of the components comprises greater than or equal to 15.0 mol.% and less than or equal to 30.0 mol.% $WO_3$, greater than or equal to 15.0 mol.% and less than or equal to 25.0 mol.% $B_2O_3$, greater than or equal to 15.0 mol.% and less than or equal to 25.0 mol.% $La_2O_3$, greater than or equal to 15.0 mol.% and less than or equal to 25.0 mol.% NbzOs, greater than or equal to 0.3 mol.% and less than or equal to 28.0 mol.% TiOz, greater than or equal to 0.3 mol.% and less than or equal to 10.0 mol.% $ZrO_2$, greater than or equal to 0.0 mol.% and less than or equal to 2.0 mol.% BaO and greater than or equal to 0.0 mol.% and less than or equal to 2.0 mol.% $Y_2O_3$.

According to a ninth aspect, the glass of any one of aspects 1-8, wherein the composition of the components comprises one or more of the following components: greater than or equal to 18.0 mol.% and less than or equal to 26.5 mol.% $WO_3$, greater than or equal to 17.00 mol.% and less than or equal to 23.25 mol.% $La_2O_3$, greater than or equal to 15.5 mol.% and less than or equal to 24.0 mol.% $B_2O_3$, greater than or equal to 15.50 mol.% and less than or equal to 21.25 mol.% $Nb_2O_5$, greater than or equal to 10.0 mol.% and less than or equal to 22.5 mol.% $TiO_2$, greater than or equal to 3.5 mol.% and less than or equal to 9.5 mol.% $ZrO_2$, greater than or equal to 0.0 mol.% and less than or equal to 1.8 mol.% $BaO$, greater than or equal to 0.0 mol.% and less than or equal to 1.8 mol.% $Y_2O_3$, greater than or equal to 0.0 mol.% and less than or equal to 1.1 mol.% $CaO$ and greater than or equal to 0.0 mol.% and less than or equal to 0.9 mol.% $Sb_2O_3$.

According to a tenth aspect, the glass of any one of aspects 1-9, wherein the composition of the components comprises greater than or equal to 18.0 mol.% and less than or equal to 26.0 mol.% $WO_3$, greater than or equal to 17.5 mol.% and less than or equal to 23.0 mol.% $La_2O_3$, greater than or equal to 16.75 mol.% and less than or equal to 23.00 mol.% $B_2O_3$, greater than or equal to 16.4 mol.% and less than or equal to 20.6 mol.% $Nb_2O_5$, greater than or equal to 10.0 mol.% and less than or equal to 22.0 mol.% $TiO_2$, greater than or equal to 4.4 mol.% and less than or equal to 8.6 mol.% $ZrO_2$, greater than or equal to 0.4 mol.% and less than or equal to 1.6 mol.% $Y_2O_3$, greater than or equal to 0.0 mol.% and less than or equal to 2.0 mol.% $BaO$, greater than or equal to 0.0 mol.% and less than or equal to 1.0 mol.% $CaO$, greater than or equal to 0.0 mol.% and less than or equal to 0.5 mol.% $Sb_2O_3$ and greater than or equal to 0.0 mol.% and less than or equal to 3.0 mol.% $Alk_2O$ and greater than or equal to 0.0 mol.% and less than or equal to 5.0 mol.% of all other components in total, where $Alk_2O$ is a total sum of alkali metal oxides.

According to an eleventh aspect, the glass of any one of aspects 1-10, wherein the glass has a blue transmittance attribute $Q_{420}$ that is greater than or equal to 1.3, a density at room temperature $d_{RT}$ that is less than or equal to 6.0 $g/cm^3$ and a refractive index $n_d$ that is greater than or equal to 2.095 and less than or equal to 2.2.

According to a twelfth aspect, the glass of any one of aspects 1-11, wherein the glass has glass transition temperature, $T_g$ that is less than or equal to 700 °C and liquidus temperature, $T_{liq}$ that is less than or equal to 1150 °C.

According to a thirteenth aspect, the glass comprises a plurality of components, the glass having a composition of the components comprising greater than or equal to 10.0 mol.% and less than or equal to 30.0 mol.% $B_2O_3$, greater than or equal to 0.3 mol.% and less than or equal to 28.5 mol.% $TiO_2$, greater than or equal to 0.0 mol.% and less than or equal to 30.0 mol.% $SiO_2$, greater than or equal to 0.0 mol.% and less than or equal to 30.0 mol.% $P_2O_3$, greater than or equal to 0.0 mol.% and less than or equal to 10.0 mol.% $PbO$, greater than or equal to 0.0E+00 mol.% and less than or equal to 5.0E-03 at.% Cu + Co, greater than or equal to 0.0 mol.% and less than or equal to 28.5 mol.% $RE_mO_n$, a sum of $Nb_2O_5 + La_2O_3 + Gd_2O_3 + Y_2O_3$ is greater than or equal to 0.0 mol.% and less than or equal to 44.5 mol.%, a sum of $R_2O + RO$ is greater than or equal to 0.0 mol.% and less than or equal to 25.0 mol.%, a sum of V + Fe + Cr + Ni is greater than or equal to 0.0 at.% and less than or equal to 1.0 at.% and may optionally contain one or more components selected from $ZrO_2$, $WO_3$, $Al_2O_3$, $Bi_2O_3$, $GeO_2$ and $TeO_2$, the glass satisfies the conditions: $P_n > 1.8$ and $P_{Q420} - (31.1 - 14.1 * P_n) > 0.000$, where $P_n$ is a refractive index parameter, calculated from the glass composition in terms of mol.% of the components according to the Formula (XXIII):

$$P_n = 1.863 + 0.0054878 * La_2O_3 + 0.002915 * TiO_2 - 0.0041892 * B_2O_3 - 0.0036169 * SiO_2 + 0.0023451 * ZrO_2 + 0.0062709 * Nb_2O_5 + 0.0034815 * Y_2O_3 + 0.00018842 * ZnO + 0.0062484 * Gd_2O_3 - 0.0028025 * Na_2O + 0.002711 * WO_3 - 0.0041 * Al_2O_3 - 0.0014274 * Li_2O + 0.0053973 * PbO + 0.011116 * Bi_2O_3 - 0.0019963 * GeO_2 + 0.00060157 * TeO_2 + 0.0056358 * Er_2O_3 + 0.0045709 * Yb_2O_3 - 0.0044944 * K_2O - 0.0013229 * MgO,$$

$$(XXIII)$$

$P_{Q420}$ is a transmittance evaluation parameter, calculated from the glass composition in terms of mol.% of the components according to the Formula (XXII):

$$P_{Q420} = -\ln(\exp(-(2.153 + 0.022544 * La_2O_3 - 0.051067 * TiO_2 + 0.020256 * B_2O_3 +$$

$$0.015419 * SiO_2 + 0.023223 * CaO + 0.030580 * BaO - 0.027830 * Y_2O_3 - 0.018973 *$$

$$ZnO - 0.050965 * Gd_2O_3 + 0.010653 * Na_2O - 0.036583 * WO_3 - 0.019948 * Al_2O_3 +$$

$$0.014393 * Li_2O + 0.071064 * PbO - 0.33385 * Bi_2O_3 - 0.099409 * TeO_2 + 0.10072 *$$

$$Er_2O_3 + 0.047677 * Yb_2O_3 + 0.0098813 * K_2O + 0.0084835 * SrO + 0.029429 * MgO)) +$$

$$7 * \max(0, Sb_2O_3 - 0.015 * Alk_2O) + 0.4 * Bi_2O_3),$$

(XXII)

$RE_mO_n$ is a total sum of rare earth metal oxides, $R_2O$ is a total sum of monovalent metal oxides, $Alk_2O$ is a sum of alkali metal oxides, RO is a total sum of divalent metal oxides, $\max(0, Sb_2O_3 - 0.015 * Alk_2O)$ refers to the greatest of zero and the difference $(Sb_2O_3 - 0.015 * Alk_2O)$, "exp" refers to exponent, "ln" refers to natural logarithm, and an asterisk (*) means multiplication.

According to a fourteenth aspect, the glass of the thirteenth aspect, wherein the glass has a refractive index $n_d$ that is greater than or equal to 1.8 and wherein the glass satisfies the condition: $Q_{420} - (31.1 - 14.1 * n_d) > 0.000$, where $Q_{420}$ is value of a blue transmittance attribute, calculated according to the Formula (VIII):

$$Q_{420} = -\ln(k_{365}) - B_{UV} * 0.36, \quad (VIII)$$

where $k_{365}$ is the light absorption coefficient at the wavelength $\lambda=365$ nm calculated by formula (II):

$$k = -\ln(\tau_{int,d,365} / (d/10)), \quad (II)$$

$B_{UV}$ is a coefficient calculated by formula (XVIII):

$$B_{UV} = \frac{-ln\left(-\ln(\tau_{int,10,370})\right) + ln\left(-\ln(\tau_{int,10,360})\right)}{\left(\frac{1000}{370} - \frac{1000}{360}\right)}, \quad (XVIII)$$

d is the thickness of the sample, $\lambda$ is the wavelength, $\tau_{int,10,370}$ is the internal transmittance of the glass with thickness 10 mm at a wavelength of 370 nm, $\tau_{int,10,360}$ is the internal transmittance of the glass with thickness 10 mm at a wavelength of 360 nm, and "ln" refers to natural logarithm.

According to a fifteenth aspect, the glass of any one of aspects 13-14, wherein the glass satisfies the condition: $P_{Q420} - (31.25 - 14.1 * P_n) > 0.000$.

According to a sixteenth aspect, the glass of any one of aspects 13-15, wherein the glass satisfies the condition: $Q_{420} - (31.25 - 14.1 * n_d) > 0.000$.

According to a seventeenth aspect, the glass of any one of aspects 13-16, wherein the composition of the components comprises greater than or equal to 10.0 mol.% and less than or equal to 28.5 mol.% $La_2O_3$, greater than or equal to 1.0 mol.% and less than or equal to 25.0 mol.% $Nb_2O_5$, greater than or equal to 1.0 mol.% and less than or equal to 25.0 mol.% $TiO_2$, greater than or equal to 0.0 mol.% and less than or equal to 20.0 mol.% $SiO_2$, greater than or equal to 0.0 mol.% and less than or equal to 10.0 mol.% CdO, greater than or equal to 0.0 mol.% and less than or equal to 10.0 mol.% GeOz, greater than or equal to 0.0 mol.% and less than or equal to 10.0 mol.% PzOs, greater than or equal to 0.0 mol.% and less than or equal to 10.0 mol.% TeOz, greater than or equal to 0.0 mol.% and less than or equal to 10.0 mol.% ZnO, greater than or equal to 0.0 mol.% and less than or equal to 0.3 mol.% $Sb_2O_3$, greater than or equal to 10.0 mol.% and less than or equal to 28.5 mol.% $RE_mO_n$, greater than or equal to 0.0 at.% and less than or equal to 1.0 at.% F, a sum of $Nb_2O_5 + TiO_2$ is greater than or equal to 20.0 mol.% and less than or equal to 45.0 mol.%, a sum of $Nb_2O_5 + La_2O_3 + Gd_2O_3 + Y_2O_3$ is greater than or equal to 5.0 mol.% and less than or equal to 44.5 mol.%, a sum of $ZrO_2 + WO_3$ is greater than or equal to 3.0 mol.% and less than or equal to 40.0 mol.%, a sum of $Li_2O + Na_2O + K_2O$ is greater than or equal to 0.0 mol.% and less than or equal to 15.0 mol.% and a sum of $MgO + CaO + SrO + BaO$ is greater than or equal to 0.0 mol.% and less than or equal to 15.0 mol.%, wherein the composition of the components is substantially free of $Bi_2O_3$, substantially free of PbO, substantially free of $ThO_2$ and substantially free of V, Fe, Cr and Ni, and wherein the composition of the components satisfies the conditions: 0 mol.% $\leq \min(RE_mO_n, TiO_2, Nb_2O_5) \leq 18$ mol.% and 0 mol.% $\leq \min(RO, RE_mO_n, TiO_2 \leq 10$ mol.%, where $\min(RE_mO_n, TiO_2, Nb_2O_5)$ refers to the smallest of the concentrations (in mol%) of $RE_mO_n$, $TiO_2$, and $Nb_2O_5$ and min(RO,$RE_mO_n$,$TiO_2$) refers to the smallest of the concentrations (in mol%) of RO, $RE_mO_n$, and $TiO_2$.

According to an eighteenth aspect, the glass of any one of aspects 13-17, wherein the composition of the components comprises greater than or equal to 10.0 mol.% and less than or equal to 28.5 mol.% $La_2O_3$, greater than or equal to 1.0 mol.% and less than or equal to 25.0 mol.% $TiO_2$, greater than or equal to 0.0 mol.% and less than or equal to 25.0 mol.% $Nb_2O_5$, greater than or equal to 0.0 mol.% and less than or equal to 20.0 mol.% $SiO_2$, greater than or equal to 0.0 mol.% and less than or equal to 15.0 mol.% $Bi_2O_3$, greater than or equal to 0.0 mol.% and less than or equal to 10.0 mol.% CdO, greater than or equal to 0.0 mol.% and less than or equal to 10.0 mol.% GeOz, greater than or equal to 0.0 mol.% and less than or equal to 10.0 mol.% $P_2O_3$, greater than or equal to 0.0 mol.% and less than or equal to 10.0 mol.% TeOz, greater than or equal to 0.0 mol.% and less than or equal to 10.0 mol.% ZnO, greater than or equal to 0.0 mol.% and less than or equal to 5.0 mol.% PbO, greater than or equal to 0.0 mol.% and less than or equal to 5.0 mol.% $ThO_2$, greater than or equal to 0.0 mol.% and less than or equal to 0.5 mol.% $Sb_2O_3$, greater than or equal to 0.0 at.% and less than or equal to 1.0 at.% F, a sum of $Nb_2O_5 + TiO_2$ is greater than or equal to 20.0 mol.% and less than or equal to 45.0 mol.%, a sum of $Nb_2O_5 + La_2O_3 + Gd_2O_3 + Y_2O_3$ is greater than or equal to 5.0 mol.% and less than or equal to 44.5 mol.%, a sum of $ZrO_2 + WO_3$ is greater than or equal to 3.0 mol.% and less than or equal to 40.0 mol.%, a sum of $Li_2O + Na_2O + K_2O$ is greater than or equal to 0.0 mol.% and less than or equal to 15.0 mol.%, a sum of MgO + CaO + SrO + BaO is greater than or equal to 0.0 mol.% and less than or equal to 15.0 mol.% and a sum of $Y_2O_3 + Gd_2O_3 + Er_2O_3$ is greater than or equal to 0.0 mol.% and less than or equal to 15.0 mol.% and wherein the composition of the components is substantially free of V, Fe, Cr and Ni.

According to a nineteenth aspect, the glass of any one of aspects 13-18, wherein the glass satisfies the condition: $2.05 \leq P_n \leq 2.25$.

According to a twentieth aspect, the glass of any one of aspects 13-19, wherein the glass has a refractive index at 587.56 nm, $n_d$ that is greater than or equal to 2.05 and less than or equal to 2.25.

According to a twenty-first aspect, the glass of any one of aspects 13-20, wherein the composition of the components comprises a sum of $GeO_2 + TeO_2$ is greater than or equal to 0.0 mol.% and less than or equal to 5.0 mol.% and a sum of V + Fe + Cr + Co + Ni + Cu + Sb is greater than or equal to 0.000 at.% and less than or equal to 0.030 at.%, wherein the composition of the components is substantially free of arsenic, substantially free of fluorine, substantially free of PbO and substantially free of $ThO_2$.

According to a twenty-second aspect, the glass of any one of aspects 13-21, wherein the composition of the components comprises greater than or equal to 15.0 mol.% and less than or equal to 30.0 mol.% $WO_3$, greater than or equal to 15.0 mol.% and less than or equal to 25.0 mol.% $B_2O_3$, greater than or equal to 15.0 mol.% and less than or equal to 25.0 mol.% $La_2O_3$, greater than or equal to 15.0 mol.% and less than or equal to 25.0 mol.% $Nb_2O_5$, greater than or equal to 0.3 mol.% and less than or equal to 10.0 mol.% $ZrO_2$, greater than or equal to 0.0 mol.% and less than or equal to 2.0 mol.% BaO and greater than or equal to 0.0 mol.% and less than or equal to 2.0 mol.% $Y_2O_3$.

According to a twenty-third aspect, the glass of any one of aspects 13-22, wherein the composition of the components comprises one or more of the following components: greater than or equal to 18.0 mol.% and less than or equal to 26.5 mol.% $WO_3$, greater than or equal to 17.00 mol.% and less than or equal to 23.25 mol.% $La_2O_3$, greater than or equal to 15.5 mol.% and less than or equal to 24.0 mol.% $B_2O_3$, greater than or equal to 15.50 mol.% and less than or equal to 21.25 mol.% $Nb_2O_5$, greater than or equal to 10.0 mol.% and less than or equal to 22.5 mol.% $TiO_2$, greater than or equal to 3.5 mol.% and less than or equal to 9.5 mol.% $ZrO_2$, greater than or equal to 0.0 mol.% and less than or equal to 1.8 mol.% BaO, greater than or equal to 0.0 mol.% and less than or equal to 1.8 mol.% $Y_2O_3$, greater than or equal to 0.0 mol.% and less than or equal to 1.1 mol.% CaO and greater than or equal to 0.0 mol.% and less than or equal to 0.9 mol.% $Sb_2O_3$.

According to a twenty-fourth aspect, the glass of any one of aspects 13-23, wherein the composition of the components comprises greater than or equal to 18.0 mol.% and less than or equal to 26.0 mol.% $WO_3$, greater than or equal to 17.5 mol.% and less than or equal to 23.0 mol.% $La_2O_3$, greater than or equal to 16.75 mol.% and less than or equal to 23.00 mol.% $B_2O_3$, greater than or equal to 16.4 mol.% and less than or equal to 20.6 mol.% $Nb_2O_5$, greater than or equal to 10.0 mol.% and less than or equal to 22.0 mol.% $TiO_2$, greater than or equal to 4.4 mol.% and less than or equal to 8.6 mol.% $ZrO_2$, greater than or equal to 0.4 mol.% and less than or equal to 1.6 mol.% $Y_2O_3$, greater than or equal to 0.0 mol.% and less than or equal to 2.0 mol.% BaO, greater than or equal to 0.0 mol.% and less than or equal to 1.0 mol.% CaO, greater than or equal to 0.0 mol.% and less than or equal to 0.5 mol.% $Sb_2O_3$ and greater than or equal to 0.0 mol.% and less than or equal to 3.0 mol.% $Alk_2O$ and greater than or equal to 0.0 mol.% and less than or equal to 5.0 mol.% of all other components in total, where $Alk_2O$ is a total sum of alkali metal oxides.

According to a twenty-fifth aspect, the glass of any one of aspects 13-24, wherein the glass has blue transmittance attribute, $Q_{420}$ that is greater than or equal to 1.3, density at room temperature, $d_{RT}$ that is less than or equal to 6.0 g/cm$^3$, a refractive index $n_d$ that is greater than or equal to 2.095 and less than or equal to 2.2 and an Abbe number $v_d$ that is less than or equal to 28.

According to a twenty-sixth aspect, the glass of any one of aspects 13-25, wherein the glass has a glass transition temperature, $T_g$ that is less than or equal to 700 °C and a liquidus temperature, $T_{liq}$ that is less than or equal to 1150 °C.

Many variations and modifications may be made to the above-described embodiments of the disclosure without departing substantially from the spirit and various principles of the disclosure. All such modifications and variations are intended to be included herein within the scope of this disclosure and protected by the following claims.

To the extent not already described, the different features of the various aspects of the present disclosure may be used in combination with each other as desired. That a particular feature is not explicitly illustrated or described with respect to each aspect of the present disclosure is not meant to be construed that it cannot be, but it is done for the sake of brevity and conciseness of the description. Thus, the various features of the different aspects may be mixed and matched as desired to form new aspects, whether or not the new aspects are expressly disclosed.

The disclosure further comprises the following clauses:

**Clauses:**

1. A glass comprising a plurality of components, the glass having a composition of the components comprising:

- greater than or equal to 0.3 mol.% and less than or equal to 30.0 mol.% $Nb_2O_5$,
- greater than or equal to 0.3 mol.% and less than or equal to 15.0 mol.% $ZrOz$,
- greater than or equal to 0.0 mol.% and less than or equal to 28.0 mol.% $TiO_2$,
- greater than or equal to 0.0 mol.% and less than or equal to 28.0 mol.% $La_2O_3$,
- greater than or equal to 0.0 mol.% and less than or equal to 10.0 mol.% $P_2O_5$,
- greater than or equal to 0.0 mol.% and less than or equal to 10.0 mol.% $PbO$,
- greater than or equal to 0.0 mol.% and less than or equal to 10.0 mol.% $GeO_2$,
- greater than or equal to 0 mol.% and less than or equal to 0.12 mol.% $Bi_2O_3$,
- greater than or equal to 0.0 mol.% and less than or equal to 30.0 mol.% $RE_mO_n$,
- a sum of $B_2O_3 + SiO_2$ is greater than or equal to 5.0 mol.% and less than or equal to 35.0 mol.% and
- optionally comprising one or more components selected from CaO, BaO, ZnO, $Na_2O$, $WO_3$, $Al_2O_3$, $Li_2O$, $TeO_2$, $K_2O$, SrO and MgO,

wherein the composition of the components satisfies the conditions:

- $0 \text{ mol.%} \leq \min(RO, RE_mO_n, TiO_2) \leq 10 \text{ mol.%}$,

and wherein the glass satisfies the conditions:

- $2.092 \leq P_n \leq 2.25$ and

- $P_v < 28$,

where

- $P_v$ is a dispersion parameter, calculated from the glass composition in terms of mol.% of the components according to the Formula (XXI):

$$P_v = 33.17 + 0.081348 * La_2O_3 - 0.41202 * TiO_2 + 0.20789 * B_2O_3 + 0.17549 * SiO_2 +$$
$$0.078439 * ZrO_2 - 0.58620 * Nb_2O_5 + 0.092226 * CaO + 0.076225 * BaO + 0.064344 *$$
$$Y_2O_3 - 0.14136 * ZnO + 0.16651 * Gd_2O_3 + 0.081754 * Na_2O - 0.12348 * WO_3 + 0.21238$$
$$* Al_2O_3 + 0.051232 * Li_2O - 0.38171 * PbO - 0.67510 * Bi_2O_3 + 0.027632 * GeO_2 - \quad \text{(XXI)}$$
$$0.17926 * TeO_2 + 0.17466 * Er_2O_3 + 0.25172 * Yb_2O_3 + 0.15621 * K_2O + 0.066001 * SrO$$
$$+ 0.15965 * MgO,$$

- $P_n$ is a refractive index parameter, calculated from the glass composition in terms of mol.% of the components according to the Formula (XXIII):

$$P_n = 1.863 + 0.0054878 * La_2O_3 + 0.002915 * TiO_2 - 0.0041892 * B_2O_3 - 0.0036169 * SiO_2 + 0.0023451 * ZrO_2 + 0.0062709 * Nb_2O_5 + 0.0034815 * Y_2O_3 + 0.00018842 * ZnO + 0.0062484 * Gd_2O_3 - 0.0028025 * Na_2O + 0.002711 * WO_3 - 0.0041 * Al_2O_3 - 0.0014274 * Li_2O + 0.0053973 * PbO + 0.011116 * Bi_2O_3 - 0.0019963 * GeO_2 + 0.00060157 * TeO_2 + 0.0056358 * Er_2O_3 + 0.0045709 * Yb_2O_3 - 0.0044944 * K_2O - 0.0013229 * MgO,$$

(XXIII)

where $RE_mO_n$ is a total sum of rare earth metal oxides, $min(RO,RE_mO_n,TiO_2)$ refers to the smallest of the concentrations (in mol%) of $RO$, $RE_mO_n$, and $TiO_2$, and an asterisk (*) means multiplication.

2. The glass of clause 1, wherein the glass has

- a refractive index $n_d$ that is greater than or equal to 2.092 and less than or equal to 2.25; and

- an Abbe number $\nu_d$ that is less than or equal to 28.

3. The glass of any one of clauses 1-2, wherein the composition of the components comprises:

- greater than or equal to 10.0 mol.% and less than or equal to 30.0 mol.% $B_2O_3$,
- greater than or equal to 10.0 mol.% and less than or equal to 28.0 mol.% $La_2O_3$,
- greater than or equal to 1.0 mol.% and less than or equal to 25.0 mol.% $Nb_2O_5$,
- greater than or equal to 1.0 mol.% and less than or equal to 25.0 mol.% $TiO_2$,
- greater than or equal to 0.0 mol.% and less than or equal to 20.0 mol.% $SiO_2$,
- greater than or equal to 0.0 mol.% and less than or equal to 10.0 mol.% $CdO$,
- greater than or equal to 0.0 mol.% and less than or equal to 10.0 mol.% $TeO_2$,
- greater than or equal to 0.0 mol.% and less than or equal to 10.0 mol.% $ZnO$,
- greater than or equal to 0.0 mol.% and less than or equal to 0.3 mol.% $Sb_2O_3$,
- greater than or equal to $0.0 \times 10^0$ mol.% and less than or equal to 0.005 mol.% Cu + Co,
- greater than or equal to 10.0 mol.% and less than or equal to 30.0 mol.% $RE_mO_n$,
- greater than or equal to 0.0 at.% and less than or equal to 1.0 at.% F,
- a sum of $Nb_2O_5 + TiO_2$ is greater than or equal to 20.0 mol.% and less than or equal to 45.0 mol.%,
- a sum of $Nb_2O_5 + La_2O_3 + Gd_2O_3 + Y_2O_3$ is greater than or equal to 5.0 mol.% and less than or equal to 45.0 mol.%,
- a sum of $ZrO_2 + WO_3$ is greater than or equal to 3.0 mol.% and less than or equal to 40.0 mol.%,
- a sum of $Li_2O + Na_2O + K_2O$ is greater than or equal to 0.0 mol.% and less than or equal to 15.0 mol.% and
- a sum of $MgO + CaO + SrO + BaO$ is greater than or equal to 0.0 mol.% and less than or equal to 15.0 mol.%,

wherein the composition of the components is

- substantially free of $Bi_2O_3$,
- substantially free of PbO,
- substantially free of $ThO_2$ and
- substantially free of V, Fe, Cr and Ni and

wherein the glass satisfies the condition:

- $0$ mol.% $\leq min(RE_mO_n,TiO_2,Nb_2O_5) \leq 18$ mol.%,

where chemical formulas mean the content of corresponding components in the glass, $min(RE_mO_n,TiO_2,Nb_2O_5)$ refers to the smallest of the concentrations (in mol%) of $RE_mO_n$, $TiO_2$, and $Nb_2O_5$.

4. The glass of any one of clauses 1-3, wherein the glass satisfies the condition:

- $P_{Q420}$ - (31.1 - 14.1 * $P_n$) > 0.000,

where $P_{Q420}$ is a transmittance evaluation parameter, calculated from the glass composition in terms of mol.% of the components according to the Formula (XXII):

$$P_{Q420} = -\ln(\exp(-(2.153 + 0.022544 * La_2O_3 - 0.051067 * TiO_2 + 0.020256 * B_2O_3 +$$
$$0.015419 * SiO_2 + 0.023223 * CaO + 0.030580 * BaO - 0.027830 * Y_2O_3 - 0.018973 *$$
$$ZnO - 0.050965 * Gd_2O_3 + 0.010653 * Na_2O - 0.036583 * WO_3 - 0.019948 * Al_2O_3 +$$
$$0.014393 * Li_2O + 0.071064 * PbO - 0.33385 * Bi_2O_3 - 0.099409 * TeO_2 + 0.10072 *$$
$$Er_2O_3 + 0.047677 * Yb_2O_3 + 0.0098813 * K_2O + 0.0084835 * SrO + 0.029429 * MgO)) +$$
$$7 * \max(0, Sb_2O_3 - 0.015 * Alk_2O) + 0.4 * Bi_2O_3),$$

(XXII)

$R_2O$ is a total sum of monovalent metal oxides, $Alk_2O$ is a sum of alkali metal oxides, RO is a total sum of divalent metal oxides, $\max(0, Sb_2O_3 - 0.015 * Alk_2O)$ refers to the greatest of zero and the difference ($Sb_2O_3$ - 0.015 * $Alk_2O$), "exp" refers to the exponential function, and "ln" refers to natural logarithm.

5. The glass of any one of clauses 1-4, wherein the composition of the components comprises:

- a sum of $GeO_2$ + $TeO_2$ is greater than or equal to 0.0 mol.% and less than or equal to 5.0 mol.% and

- a sum of V + Fe + Cr + Co + Ni + Cu + Sb is greater than or equal to 0.000 at.% and less than or equal to 0.030 at.%,

wherein the composition of the components is

- substantially free of arsenic,
- substantially free of fluorine,
- substantially free of PbO and
- substantially free of $ThO_2$.

6. The glass of any one of clauses 1, 2, 4 and 5, wherein the composition of the components comprises:

- greater than or equal to 15.0 mol.% and less than or equal to 30.0 mol.% $WO_3$,
- greater than or equal to 15.0 mol.% and less than or equal to 25.0 mol.% $B_2O_3$,
- greater than or equal to 15.0 mol.% and less than or equal to 25.0 mol.% $La_2O_3$,
- greater than or equal to 15.0 mol.% and less than or equal to 25.0 mol.% $Nb_2O_5$,
- greater than or equal to 0.3 mol.% and less than or equal to 28.0 mol.% $TiO_2$,
- greater than or equal to 0.3 mol.% and less than or equal to 10.0 mol.% $ZrO_2$,
- greater than or equal to 0.0 mol.% and less than or equal to 2.0 mol.% BaO and
- greater than or equal to 0.0 mol.% and less than or equal to 2.0 mol.% $Y_2O_3$.

7. The glass of any one of clauses 1-6, wherein the composition of the components comprises one or more of the following components:

- greater than or equal to 18.0 mol.% and less than or equal to 26.5 mol.% $WO_3$,
- greater than or equal to 17.00 mol.% and less than or equal to 23.25 mol.% $La_2O_3$,
- greater than or equal to 15.5 mol.% and less than or equal to 24.0 mol.% $B_2O_3$,
- greater than or equal to 15.50 mol.% and less than or equal to 21.25 mol.% $Nb_2O_5$,
- greater than or equal to 10.0 mol.% and less than or equal to 22.5 mol.% $TiO_2$,
- greater than or equal to 3.5 mol.% and less than or equal to 9.5 mol.% $ZrO_2$,
- greater than or equal to 0.0 mol.% and less than or equal to 1.8 mol.% BaO,
- greater than or equal to 0.0 mol.% and less than or equal to 1.8 mol.% $Y_2O_3$,
- greater than or equal to 0.0 mol.% and less than or equal to 1.1 mol.% CaO and
- greater than or equal to 0.0 mol.% and less than or equal to 0.9 mol.% $Sb_2O_3$.

8. The glass of any one of clauses 1-7, wherein the composition of the components comprises • greater than or equal to 18.0 mol.% and less than or equal to 26.0 mol.% $WO_3$,

- greater than or equal to 17.5 mol.% and less than or equal to 23.0 mol.% $La_2O_3$,
- greater than or equal to 16.75 mol.% and less than or equal to 23.00 mol.% $B_2O_3$,
- greater than or equal to 16.4 mol.% and less than or equal to 20.6 mol.% $Nb_2O_5$,
- greater than or equal to 10.0 mol.% and less than or equal to 22.0 mol.% $TiO_2$,
- greater than or equal to 4.4 mol.% and less than or equal to 8.6 mol.% $ZrO_2$,
- greater than or equal to 0.4 mol.% and less than or equal to 1.6 mol.% $Y_2O_3$,
- greater than or equal to 0.0 mol.% and less than or equal to 2.0 mol.% BaO,
- greater than or equal to 0.0 mol.% and less than or equal to 1.0 mol.% CaO,
- greater than or equal to 0.0 mol.% and less than or equal to 0.5 mol.% $Sb_2O_3$ and
- greater than or equal to 0.0 mol.% and less than or equal to 3.0 mol.% $Alk_2O$ and
- greater than or equal to 0.0 mol.% and less than or equal to 5.0 mol.% of all other components in total,

where $Alk_2O$ is a total sum of alkali metal oxides.

9. The glass of any one of clauses 1-8, wherein the glass has

- a blue transmittance attribute, $Q_{420}$ that is greater than or equal to 1.3,
- a density at room temperature, $d_{RT}$ that is less than or equal to 6.0 $g/cm^3$ and
- a refractive index $n_d$ that is greater than or equal to 2.095 and less than or equal to 2.2.

10. The glass of any one of clauses 1-9, wherein the glass has

- a glass transition temperature, $T_g$ that is less than or equal to 700 °C and
- a liquidus temperature, $T_{liq}$ that is less than or equal to 1150 °C.

11. A glass comprising a plurality of components, the glass having a composition of the components comprising:

- greater than or equal to 10.0 mol.% and less than or equal to 30.0 mol.% $B_2O_3$,
- greater than or equal to 0.3 mol.% and less than or equal to 28.5 mol.% $TiO_2$,
- greater than or equal to 0.0 mol.% and less than or equal to 30.0 mol.% $SiO_2$,
- greater than or equal to 0.0 mol.% and less than or equal to 30.0 mol.% $P_2O_5$,
- greater than or equal to 0.0 mol.% and less than or equal to 10.0 mol.% PbO,
- greater than or equal to $0.0 \times 10^0$ mol.% and less than or equal to 0.005 at.% Cu + Co,
- greater than or equal to 0.0 mol.% and less than or equal to 28.5 mol.% $RE_mO_n$,
- a sum of $Nb_2O_5 + La_2O_3 + Gd_2O_3 + Y_2O_3$ is greater than or equal to 0.0 mol.% and less than or equal to 44.5 mol.%,
- a sum of $R_2O$ + RO is greater than or equal to 0.0 mol.% and less than or equal to 25.0 mol.%,
- a sum of V + Fe + Cr + Ni is greater than or equal to 0.0 at.% and less than or equal to 1.0 at.% and
- optionally comprising one or more components selected from $ZrO_2$, $WO_3$, $Al_2O_3$, $Bi_2O_3$, $GeO_2$ and $TeO_2$,

wherein the glass satisfies the conditions:

- $P_n$ > 1.8 and
- $P_{Q420}$ - (31.1 - 14.1 * $P_n$) > 0.000,

where $P_n$ is a refractive index parameter, calculated from the glass composition in terms of mol.% of the components according to the Formula (XXIII):

$P_n$ = 1.863 + 0.0054878 * $La_2O_3$ + 0.002915 * $TiO_2$ - 0.0041892 * $B_2O_3$ - 0.0036169 * $SiO_2$ + 0.0023451 * $ZrO_2$ + 0.0062709 * $Nb_2O_5$ + 0.0034815 * $Y_2O_3$ + 0.00018842 * $ZnO$ + 0.0062484 * $Gd_2O_3$ - 0.0028025 * $Na_2O$ + 0.002711 * $WO_3$ - 0.0041 * $Al_2O_3$ - 0.0014274 * $Li_2O$ + 0.0053973 * $PbO$ + 0.011116 * $Bi_2O_3$ - 0.0019963 * $GeO_2$ + 0.00060157 * $TeO_2$ + 0.0056358 * $Er_2O_3$ + 0.0045709 * $Yb_2O_3$ - 0.0044944 * $K_2O$ - 0.0013229 * $MgO$,   (XXIII)

$P_{Q420}$ is a transmittance evaluation parameter, calculated from the glass composition in terms of mol.% of the components according to the Formula (XXII):

$P_{Q420}$ = -ln(exp( - (2.153 + 0.022544 * $La_2O_3$ - 0.051067 * $TiO_2$ + 0.020256 * $B_2O_3$ + 0.015419 * $SiO_2$ + 0.023223 * $CaO$ + 0.030580 * $BaO$ - 0.027830 * $Y_2O_3$ - 0.018973 * $ZnO$ - 0.050965 * $Gd_2O_3$ + 0.010653 * $Na_2O$ - 0.036583 * $WO_3$ - 0.019948 * $Al_2O_3$ + 0.014393 * $Li_2O$ + 0.071064 * $PbO$ - 0.33385 * $Bi_2O_3$ - 0.099409 * $TeO_2$ + 0.10072 * $Er_2O_3$ + 0.047677 * $Yb_2O_3$ + 0.0098813 * $K_2O$ + 0.0084835 * $SrO$ + 0.029429 * $MgO$)) + 7 * max(0,$Sb_2O_3$ - 0.015 * $Alk_2O$) + 0.4 * $Bi_2O_3$),   (XXII)

$RE_mO_n$ is a total sum of rare earth metal oxides, $R_2O$ is a total sum of monovalent metal oxides, $Alk_2O$ is a sum of alkali metal oxides, RO is a total sum of divalent metal oxides, max(0, $Sb_2O_3$ - 0.015 * $Alk_2O$) refers to the greatest of zero and the difference ($Sb_2O_3$ - 0.015 * $Alk_2O$), "exp" refers to the exponential function, "ln" refers to natural logarithm, and an asterisk (*) means multiplication.

12. The glass of clause 11, wherein the glass has

- a refractive index $n_d$ that is greater than or equal to 1.8 and

wherein the glass satisfies the condition:

- $Q_{420}$ - (31.1 - 14.1 * $n_d$) > 0.000,

where $Q_{420}$ is a blue transmittance attribute, calculated according to the formula (VIII):

$$Q_{420} = -ln(k_{365}) - B_{UV} * 0.36,   \text{(VIII)}$$

where $k_{365}$ is the light absorption coefficient of the glass at a wavelength of 365 nm calculated by formula (II):

$$k = -ln\left(\frac{\tau_{int,d,365}}{(d/10)}\right)   \text{(II)}$$

Buv is a coefficient calculated by formula (XVIII):

$$B_{UV} = \frac{-ln\left(-ln(\tau_{int,10,370})\right) + ln\left(-ln(\tau_{int,10,360})\right)}{\left(\frac{1000}{370} - \frac{1000}{360}\right)},   \text{(XVIII)}$$

d is the thickness of the glass, $\tau_{int,d,365}$ is the internal transmittance of the glass with thickness d at a wavelength

of 365 nm, $\tau_{int,10,370}$ is the internal transmittance of the glass with thickness 10 mm at a wavelength of 370 nm, $\tau_{int,10,360}$ is the internal transmittance of the glass with thickness 10 mm at a wavelength of 360 nm, and "ln" refers to natural logarithm.

13. The glass of any one of clauses 11-12, wherein the composition of the components comprises:

- greater than or equal to 10.0 mol.% and less than or equal to 28.5 mol.% $La_2O_3$,
- greater than or equal to 1.0 mol.% and less than or equal to 25.0 mol.% $TiO_z$,
- greater than or equal to 0.0 mol.% and less than or equal to 25.0 mol.% $Nb_2O_5$,
- greater than or equal to 0.0 mol.% and less than or equal to 20.0 mol.% $SiO_2$,
- greater than or equal to 0.0 mol.% and less than or equal to 15.0 mol.% $Bi_2O_3$,
- greater than or equal to 0.0 mol.% and less than or equal to 10.0 mol.% $CdO$,
- greater than or equal to 0.0 mol.% and less than or equal to 10.0 mol.% $GeO_2$,
- greater than or equal to 0.0 mol.% and less than or equal to 10.0 mol.% $P_2O_5$,
- greater than or equal to 0.0 mol.% and less than or equal to 10.0 mol.% $TeO_2$,
- greater than or equal to 0.0 mol.% and less than or equal to 10.0 mol.% $ZnO$,
- greater than or equal to 0.0 mol.% and less than or equal to 5.0 mol.% $PbO$,
- greater than or equal to 0.0 mol.% and less than or equal to 5.0 mol.% $ThO_2$,
- greater than or equal to 0.0 mol.% and less than or equal to 0.5 mol.% $Sb_2O_3$,
- greater than or equal to 0.0 at.% and less than or equal to 1.0 at.% F,
- a sum of $Nb_2O_5 + TiO_2$ greater than or equal to 20.0 mol.% and less than or equal to 45.0 mol.%,
- a sum of $Nb_2O_5 + La_2O_3 + Gd_2O_3 + Y_2O_3$ greater than or equal to 5.0 mol.% and less than or equal to 44.5 mol.%,
- a sum of $ZrO_2 + WO_3$ greater than or equal to 3.0 mol.% and less than or equal to 40.0 mol.%,
- a sum of $Li_2O + Na_2O + K_2O$ greater than or equal to 0.0 mol.% and less than or equal to 15.0 mol.%,
- a sum of $MgO + CaO + SrO + BaO$ greater than or equal to 0.0 mol.% and less than or equal to 15.0 mol.% and
- a sum of $Y_2O_3 + Gd_2O_3 + Er_2O_3$ greater than or equal to 0.0 mol.% and less than or equal to 15.0 mol.% and

wherein the composition of the components is

- substantially free of V, Fe, Cr and Ni.

14. The glass of any one of clauses 11-13, wherein the composition comprises:

- a sum of $GeO_2 + TeO_2$ greater than or equal to 0.0 mol.% and less than or equal to 5.0 mol.% and

- a sum of V + Fe + Cr + Co + Ni + Cu + Sb greater than or equal to 0.000 at.% and less than or equal to 0.030 at.%,

wherein the composition of the components is

- substantially free of arsenic,
- substantially free of fluorine,
- substantially free of PbO and
- substantially free of $ThO_2$.

15. The glass of any one of clauses 11-14, wherein the composition of the components comprises:

- greater than or equal to 15.0 mol.% and less than or equal to 30.0 mol.% $WO_3$,
- greater than or equal to 15.0 mol.% and less than or equal to 25.0 mol.% $B_2O_3$,
- greater than or equal to 15.0 mol.% and less than or equal to 25.0 mol.% $La_2O_3$,
- greater than or equal to 15.0 mol.% and less than or equal to 25.0 mol.% $Nb_2O_5$,
- greater than or equal to 0.3 mol.% and less than or equal to 10.0 mol.% $ZrO_z$,
- greater than or equal to 0.0 mol.% and less than or equal to 2.0 mol.% $BaO$ and
- greater than or equal to 0.0 mol.% and less than or equal to 2.0 mol.% $Y_2O_3$.

16. The glass of any one of clauses 11-15, wherein the composition of the components comprises one or more of the following:

- greater than or equal to 18.0 mol.% and less than or equal to 26.5 mol.% $WO_3$,

- greater than or equal to 17.00 mol.% and less than or equal to 23.25 mol.% $La_2O_3$,
- greater than or equal to 15.5 mol.% and less than or equal to 24.0 mol.% $B_2O_3$,
- greater than or equal to 15.50 mol.% and less than or equal to 21.25 mol.% $Nb_2O_5$,
- greater than or equal to 10.0 mol.% and less than or equal to 22.5 mol.% $TiO_2$,
- greater than or equal to 3.5 mol.% and less than or equal to 9.5 mol.% $ZrO_2$,
- greater than or equal to 0.0 mol.% and less than or equal to 1.8 mol.% BaO,
- greater than or equal to 0.0 mol.% and less than or equal to 1.8 mol.% $Y_2O_3$,
- greater than or equal to 0.0 mol.% and less than or equal to 1.1 mol.% CaO and
- greater than or equal to 0.0 mol.% and less than or equal to 0.9 mol.% $Sb_2O_3$.

17. The glass of any one of clauses 11-16, wherein the composition of the components comprises:

- greater than or equal to 18.0 mol.% and less than or equal to 26.0 mol.% $WO_3$,
- greater than or equal to 17.5 mol.% and less than or equal to 23.0 mol.% $La_2O_3$,
- greater than or equal to 16.75 mol.% and less than or equal to 23.00 mol.% $B_2O_3$,
- greater than or equal to 16.4 mol.% and less than or equal to 20.6 mol.% $Nb_2O_5$,
- greater than or equal to 10.0 mol.% and less than or equal to 22.0 mol.% $TiO_2$,
- greater than or equal to 4.4 mol.% and less than or equal to 8.6 mol.% ZrOz,
- greater than or equal to 0.4 mol.% and less than or equal to 1.6 mol.% $Y_2O_3$,
- greater than or equal to 0.0 mol.% and less than or equal to 2.0 mol.% BaO,
- greater than or equal to 0.0 mol.% and less than or equal to 1.0 mol.% CaO,
- greater than or equal to 0.0 mol.% and less than or equal to 0.5 mol.% $Sb_2O_3$ and
- greater than or equal to 0.0 mol.% and less than or equal to 3.0 mol.% $Alk_2O$ and
- greater than or equal to 0.0 mol.% and less than or equal to 5.0 mol.% of all other components in total,

where $Alk_2O$ is a total sum of alkali metal oxides.
18. The glass of any one of clauses 11-17, wherein the glass has • a blue transmittance attribute, $Q_{420}$ that is greater than or equal to 1.3,

- a density at room temperature, $d_{RT}$ that is less than or equal to 6.0 g/cm$^3$,
- a refractive index $n_d$ that is greater than or equal to 2.095 and less than or equal to 2.2 and
- an Abbe number, $\nu_d$ that is less than or equal to 28.

19. The glass of any one of clauses 11-18, wherein the glass has

- a glass transition temperature, $T_g$ that is less than or equal to 700 °C and
- a liquidus temperature, $T_{liq}$ that is less than or equal to 1150 °C.

**Claims**

1. A glass comprising a plurality of components, the glass having a composition of the components comprising:

  • greater than or equal to 0.3 mol.% and less than or equal to 30.0 mol.% NbzOs,
  • greater than or equal to 0.3 mol.% and less than or equal to 15.0 mol.% ZrOz,
  • greater than or equal to 0.0 mol.% and less than or equal to 28.0 mol.% $TiO_2$,
  • greater than or equal to 0.0 mol.% and less than or equal to 28.0 mol.% $La_2O_3$,
  • greater than or equal to 0.0 mol.% and less than or equal to 10.0 mol.% $P_2O_5$,
  • greater than or equal to 0.0 mol.% and less than or equal to 10.0 mol.% PbO,
  • greater than or equal to 0.0 mol.% and less than or equal to 10.0 mol.% GeOz,
  • greater than or equal to 0 mol.% and less than or equal to 0.12 mol.% $Bi_2O_3$,
  • greater than or equal to 0.0 mol.% and less than or equal to 30.0 mol.% $RE_mO_n$,
  • a sum of $B_2O_3$ + $SiO_2$ is greater than or equal to 5.0 mol.% and less than or equal to 35.0 mol.% and
  • optionally comprising one or more components selected from CaO, BaO, ZnO, $Na_2O$, $WO_3$, $Al_2O_3$, $Li_2O$, $TeO_2$, $K_2O$, SrO and MgO,
  wherein the composition of the components satisfies the conditions:

    • 0 mol.% $\leq$ min(RO,$RE_mO_n$,$TiO_2$) $\leq$ 10 mol.%,

and wherein the glass satisfies the conditions:

- $2.092 \leq P_n \leq 2.25$ and
- $P_v < 28$,

where

- $P_v$ is a dispersion parameter, calculated from the glass composition in terms of mol.% of the components according to the Formula (XXI):

$$P_v = 33.17 + 0.081348 * La_2O_3 - 0.41202 * TiO_2 + 0.20789 * B_2O_3 + 0.17549 * SiO_2 +$$

$$0.078439 * ZrO_2 - 0.58620 * Nb_2O_5 + 0.092226 * CaO + 0.076225 * BaO + 0.064344 *$$

$$Y_2O_3 - 0.14136 * ZnO + 0.16651 * Gd_2O_3 + 0.081754 * Na_2O - 0.12348 * WO_3 + 0.21238$$

$$* Al_2O_3 + 0.051232 * Li_2O - 0.38171 * PbO - 0.67510 * Bi_2O_3 + 0.027632 * GeO_2 - \quad \text{(XXI)}$$

$$0.17926 * TeO_2 + 0.17466 * Er_2O_3 + 0.25172 * Yb_2O_3 + 0.15621 * K_2O + 0.066001 * SrO$$

$$+ 0.15965 * MgO,$$

- $P_n$ is a refractive index parameter, calculated from the glass composition in terms of mol.% of the components according to the Formula (XXIII):

$$P_n = 1.863 + 0.0054878 * La_2O_3 + 0.002915 * TiO_2 - 0.0041892 * B_2O_3 - 0.0036169 *$$

$$SiO_2 + 0.0023451 * ZrO_2 + 0.0062709 * Nb_2O_5 + 0.0034815 * Y_2O_3 + 0.00018842 * ZnO$$

$$+ 0.0062484 * Gd_2O_3 - 0.0028025 * Na_2O + 0.002711 * WO_3 - 0.0041 * Al_2O_3 -$$

$$0.0014274 * Li_2O + 0.0053973 * PbO + 0.011116 * Bi_2O_3 - 0.0019963 * GeO_2 + \quad \text{(XXIII)}$$

$$0.00060157 * TeO_2 + 0.0056358 * Er_2O_3 + 0.0045709 * Yb_2O_3 - 0.0044944 * K_2O -$$

$$0.0013229 * MgO,$$

where $RE_mO_n$ is a total sum of rare earth metal oxides, $min(RO, RE_mO_n, TiO_2)$ refers to the smallest of the concentrations (in mol%) of RO, $RE_mO_n$, and TiOz, and an asterisk (*) means multiplication.

2. The glass of claim 1, wherein the glass has

- a refractive index $n_d$ that is greater than or equal to 2.092 and less than or equal to 2.25; and
- an Abbe number $v_d$ that is less than or equal to 28.

3. The glass of any one of claims 1-2, wherein the composition of the components comprises:

- greater than or equal to 10.0 mol.% and less than or equal to 30.0 mol.% $B_2O_3$,
- greater than or equal to 10.0 mol.% and less than or equal to 28.0 mol.% $La_2O_3$,
- greater than or equal to 1.0 mol.% and less than or equal to 25.0 mol.% $Nb_2O_5$,
- greater than or equal to 1.0 mol.% and less than or equal to 25.0 mol.% $TiO_2$,
- greater than or equal to 0.0 mol.% and less than or equal to 20.0 mol.% SiOz,
- greater than or equal to 0.0 mol.% and less than or equal to 10.0 mol.% CdO,
- greater than or equal to 0.0 mol.% and less than or equal to 10.0 mol.% $TeO_2$,
- greater than or equal to 0.0 mol.% and less than or equal to 10.0 mol.% ZnO,
- greater than or equal to 0.0 mol.% and less than or equal to 0.3 mol.% $Sb_2O_3$,
- greater than or equal to $0.0 \times 10°$ mol.% and less than or equal to 0.005 mol.% Cu + Co,
- greater than or equal to 10.0 mol.% and less than or equal to 30.0 mol.% $RE_mO_n$,
- greater than or equal to 0.0 at.% and less than or equal to 1.0 at.% F,
- a sum of $Nb_2O_5 + TiO_2$ is greater than or equal to 20.0 mol.% and less than or equal to 45.0 mol.%,

• a sum of $Nb_2O_5 + La_2O_3 + Gd_2O_3 + Y_2O_3$ is greater than or equal to 5.0 mol.% and less than or equal to 45.0 mol.%,
• a sum of $ZrO_2 + WO_3$ is greater than or equal to 3.0 mol.% and less than or equal to 40.0 mol.%,
• a sum of $Li_2O + Na_2O + K_2O$ is greater than or equal to 0.0 mol.% and less than or equal to 15.0 mol.% and
• a sum of $MgO + CaO + SrO + BaO$ is greater than or equal to 0.0 mol.% and less than or equal to 15.0 mol.%,

wherein the composition of the components is

• substantially free of $Bi_2O_3$,
• substantially free of PbO,
• substantially free of $ThO_2$ and
• substantially free of V, Fe, Cr and Ni and

wherein the glass satisfies the condition:

• $0$ mol.% $\leq min(RE_mO_n, TiO_2, Nb_2O_5) \leq 18$ mol.%,

where chemical formulas mean the content of corresponding components in the glass, $min(RE_mO_n, TiO_2, Nb_2O_5)$ refers to the smallest of the concentrations (in mol%) of $RE_mO_n$, $TiO_2$, and $Nb_2O_5$.

4. The glass of any one of claims 1-3, wherein the glass satisfies the condition:

• $P_{Q420} - (31.1 - 14.1 * P_n) > 0.000$,
where $P_{Q420}$ is a transmittance evaluation parameter, calculated from the glass composition in terms of mol.% of the components according to the Formula (XXII):

$$P_{Q420} = -\ln(\exp( - (2.153 + 0.022544 * La_2O_3 - 0.051067 * TiO_2 + 0.020256 * B_2O_3 +$$
$$0.015419 * SiO_2 + 0.023223 * CaO + 0.030580 * BaO - 0.027830 * Y_2O_3 - 0.018973 *$$
$$ZnO - 0.050965 * Gd_2O_3 + 0.010653 * Na_2O - 0.036583 * WO_3 - 0.019948 * Al_2O_3 +$$
$$0.014393 * Li_2O + 0.071064 * PbO - 0.33385 * Bi_2O_3 - 0.099409 * TeO_2 + 0.10072 *$$
$$Er_2O_3 + 0.047677 * Yb_2O_3 + 0.0098813 * K_2O + 0.0084835 * SrO + 0.029429 * MgO)) +$$
$$7 * \max(0, Sb_2O_3 - 0.015 * Alk_2O) + 0.4 * Bi_2O_3),$$

(XXII)

$R_2O$ is a total sum of monovalent metal oxides, $Alk_2O$ is a sum of alkali metal oxides, RO is a total sum of divalent metal oxides, $\max(0, Sb_2O_3 - 0.015 * Alk_2O)$ refers to the greatest of zero and the difference $(Sb_2O_3 - 0.015 * Alk_2O)$, "exp" refers to the exponential function, and "ln" refers to natural logarithm.

5. The glass of any one of claims 1-4, wherein the composition of the components comprises:

• a sum of $GeO_2 + TeO_2$ is greater than or equal to 0.0 mol.% and less than or equal to 5.0 mol.% and
• a sum of V + Fe + Cr + Co + Ni + Cu + Sb is greater than or equal to 0.000 at.% and less than or equal to 0.030 at.%,

wherein the composition of the components is

• substantially free of arsenic,
• substantially free of fluorine,
• substantially free of PbO and
• substantially free of $ThO_2$.

6. The glass of any one of claims 1, 2, 4 and 5, wherein the composition of the components comprises:

• greater than or equal to 15.0 mol.% and less than or equal to 30.0 mol.% $WO_3$,
• greater than or equal to 15.0 mol.% and less than or equal to 25.0 mol.% $B_2O_3$,
• greater than or equal to 15.0 mol.% and less than or equal to 25.0 mol.% $La_2O_3$,
• greater than or equal to 15.0 mol.% and less than or equal to 25.0 mol.% $Nb_2O_5$,

- greater than or equal to 0.3 mol.% and less than or equal to 28.0 mol.% $TiO_2$,
- greater than or equal to 0.3 mol.% and less than or equal to 10.0 mol.% $ZrO_2$,
- greater than or equal to 0.0 mol.% and less than or equal to 2.0 mol.% BaO and
- greater than or equal to 0.0 mol.% and less than or equal to 2.0 mol.% $Y_2O_3$.

7. The glass of any one of claims 1-6, wherein the composition of the components comprises one or more of the following components:

- greater than or equal to 18.0 mol.% and less than or equal to 26.5 mol.% $WO_3$,
- greater than or equal to 17.00 mol.% and less than or equal to 23.25 mol.% $La_2O_3$,
- greater than or equal to 15.5 mol.% and less than or equal to 24.0 mol.% $B_2O_3$,
- greater than or equal to 15.50 mol.% and less than or equal to 21.25 mol.% $Nb_2O_5$,
- greater than or equal to 10.0 mol.% and less than or equal to 22.5 mol.% $TiO_2$,
- greater than or equal to 3.5 mol.% and less than or equal to 9.5 mol.% $ZrO_2$,
- greater than or equal to 0.0 mol.% and less than or equal to 1.8 mol.% BaO,
- greater than or equal to 0.0 mol.% and less than or equal to 1.8 mol.% $Y_2O_3$,
- greater than or equal to 0.0 mol.% and less than or equal to 1.1 mol.% CaO and
- greater than or equal to 0.0 mol.% and less than or equal to 0.9 mol.% $Sb_2O_3$.

8. The glass of any one of claims 1-7, wherein the composition of the components comprises

- greater than or equal to 18.0 mol.% and less than or equal to 26.0 mol.% $WO_3$,
- greater than or equal to 17.5 mol.% and less than or equal to 23.0 mol.% $La_2O_3$,
- greater than or equal to 16.75 mol.% and less than or equal to 23.00 mol.% $B_2O_3$,
- greater than or equal to 16.4 mol.% and less than or equal to 20.6 mol.% $Nb_2O_5$,
- greater than or equal to 10.0 mol.% and less than or equal to 22.0 mol.% $TiO_z$,
- greater than or equal to 4.4 mol.% and less than or equal to 8.6 mol.% $ZrO_2$,
- greater than or equal to 0.4 mol.% and less than or equal to 1.6 mol.% $Y_2O_3$,
- greater than or equal to 0.0 mol.% and less than or equal to 2.0 mol.% BaO,
- greater than or equal to 0.0 mol.% and less than or equal to 1.0 mol.% CaO,
- greater than or equal to 0.0 mol.% and less than or equal to 0.5 mol.% $Sb_2O_3$ and
- greater than or equal to 0.0 mol.% and less than or equal to 3.0 mol.% $Alk_2O$ and
- greater than or equal to 0.0 mol.% and less than or equal to 5.0 mol.% of all other components in total,

where $Alk_2O$ is a total sum of alkali metal oxides.

9. The glass of any one of claims 1-8, wherein the glass has

- a blue transmittance attribute, $Q_{420}$ that is greater than or equal to 1.3,
- a density at room temperature, $d_{RT}$ that is less than or equal to 6.0 g/cm$^3$ and
- a refractive index $n_d$ that is greater than or equal to 2.095 and less than or equal to 2.2.

10. The glass of any one of claims 1-9, wherein the glass has

- a glass transition temperature, $T_g$ that is less than or equal to 700 °C and
- a liquidus temperature, $T_{liq}$ that is less than or equal to 1150 °C.

FIG. 1

FIG. 2a

FIG. 2b

FIG. 2c

FIG. 3

FIG. 4

FIG. 5

FIG. 6

FIG. 7

FIG. 8

Europäisches
Patentamt

European
Patent Office

Office européen
des brevets

# EUROPEAN SEARCH REPORT

Application Number

EP 24 15 8982

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2007/015651 A1 (ENDO MICHIO [JP]) 18 January 2007 (2007-01-18) | 1-5,9,10 | INV.<br>C03C3/068 |
| A | * paragraphs [0001], [0005]; tables 1,2 * | 6-8 | |
| X | NL 2 029 053 B1 (CORNING INC [US]) 17 February 2023 (2023-02-17) | 1,2,4-10 | |
| A | * in particular examples 83, 86 and 151; paragraph [0001]; claims 1,3,8,10; examples 81-88,93,97,107; table 6 * | 3 | |
| X | WO 2023/014546 A1 (CORNING INC [US]) 9 February 2023 (2023-02-09) * in particular example 199; paragraphs [0002], [0007]; table 6 * | 1-10 | |

TECHNICAL FIELDS
SEARCHED (IPC)

C03C

The present search report has been drawn up for all claims

| Place of search | Date of completion of the search | Examiner |
|---|---|---|
| Munich | 18 July 2024 | Philippart, Anahí |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
.............................................................................................................
& : member of the same patent family, corresponding
    document

EPO FORM 1503 03.82 (P04C01)

2

## ANNEX TO THE EUROPEAN SEARCH REPORT
## ON EUROPEAN PATENT APPLICATION NO.

EP 24 15 8982

This annex lists the patent family members relating to the patent documents cited in the above-mentioned European search report.
The members are as contained in the European Patent Office EDP file on
The European Patent Office is in no way liable for these particulars which are merely given for the purpose of information.

18-07-2024

| Patent document cited in search report | | Publication date | Patent family member(s) | | Publication date |
|---|---|---|---|---|---|
| US 2007015651 | A1 | 18-01-2007 | CN 1896022 A | | 17-01-2007 |
| | | | DE 102006030867 A1 | | 25-01-2007 |
| | | | JP 4466955 B2 | | 26-05-2010 |
| | | | JP 2007022846 A | | 01-02-2007 |
| | | | US 2007015651 A1 | | 18-01-2007 |
| NL 2029053 | B1 | 17-02-2023 | CN 117980278 A | | 03-05-2024 |
| | | | NL 2029053 B1 | | 17-02-2023 |
| WO 2023014546 | A1 | 09-02-2023 | EP 4129942 A1 | | 08-02-2023 |
| | | | KR 20240036653 A | | 20-03-2024 |
| | | | TW 202311183 A | | 16-03-2023 |
| | | | US 2023073656 A1 | | 09-03-2023 |
| | | | WO 2023014546 A1 | | 09-02-2023 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 113816600
- EP 4071118 A
- JP H09278480 B
- US 20220306517 A
- US 874792
- US 096938

- US 63323645
- TW 202012333
- US 2022306517 A
- US 5747397 A
- US 20220073409 A